# EUROPÄISCHE PATENTANMELDUNG

(11) **EP 1 508 727 A2**
(43) Veröffentlichungstag der Anmeldung: **23.02.2005**
(21) Anmeldenummer: 04019008.4
(22) Anmeldetag: 11.08.2004
(51) Int. Cl.: F16H 61/32

(54) **Betätigungsvorrichtung insbesonder zum Schalten eines Getriebes**

(30) Priorität: 16.08.2003 DE 10337625; 18.12.2003 DE 10359634
(71) Anmelder: LuK Lamellen und Kupplungsbau Beteiligungs KG, 77813 Bühl (DE)
(72) Erfinder: Hemphill, Jeff, 44321 Copley (US); McConnell, Trevor, Rittman Ohio 44270 (US); Lindemann, Patrick, Wooster OH 44691 (US)

(57) **Zusammenfassung**

Die Erfindung betrifft eine Betätigungsvorrichtung, die beispielsweise als Betätigungseinrichtung für ein Kraftfahrzeuggetriebe eingesetzt werden kann, wobei mittels dieser Betätigungseinrichtung die Wählfunktion und die Schaltfunktion beim Gangwechsel gewährleistet wird, und wobei dies mit genau einem Elektromotor bewirkt werden kann, und wobei ausgehend von einem Ausgangsgang wenigstens drei unterschiedliche Zielgänge alternativ eingelegt werden können, ohne dass zwischendurch in einen Zwischengang geschaltet werden muss.

## Beschreibung

Die Erfindung betrifft eine Betätigungsvorrichtung, eine Verwendung einer solchen Betätigungsvorrichtung, ein Kraftfahrzeuggetriebe mit einer Betätigungsvorrichtung sowie ein Verfahren zur automatisierten Steuerung von Gangwechselvorgängen und Kupplungsbetätigung en in einem Antriebsstrang eines Kraftfahrzeugs. Bei einer bekannten Betätigungsvorrichtung, mittels welcher Gangwechselvorgänge in einem Kraftfahrzeuggetriebe automatisiert gesteuert werden, sind zwei jeweils mit einer Ausgangswelle versehene Elektromotoren vorgesehen. Der eine dieser Elektromotoren steuert Bewegungen in Wählrichtung bzw. in einer so genannten Wählgasse und der andere dieser Elektromotoren steuert Bewegungen in Schaltrichtung bzw. in einer so genannten Schaltgasse bzw. das Einlegen der Gänge. Bei dieser Gestaltung wird zum Einlegen eines Ganges zunächst mittels den einen Elektromotors durch das "Wählen" zunächst eine Position in Wählrichtung angefahren, aus welcher dann mittels des anderen Elektromotors in Schaltrichtung eine Bewegung bewirkt wird, die dazu führt, dass der angestrebte Gang eingelegt wird.

Weiterhin sind automatisierte Reibungskupplungen bekannt, die mittels eines elektrischen oder elektrohydraulischen Aktors betätigt werden.

Der Erfindung liegt die Aufgabe zugrunde, eine Betätigungsvorrichtung zu schaffen, welche kostengünstig herstellbar ist und bei geringem baulichem Aufwand betriebssicher ist. Gemäß einem besonderen Aspekt liegt der Erfindung die Aufgabe zugrunde, ein Kraftfahrzeuggetriebe mit einer Betätigungseinrichtung zu schaffen, welches kostengünstig herstellbar ist und bei geringem baulichen Aufwand betriebssicher betätigt werden kann, sowie ein Verfahren zur Steuerung von Gangwechselvorgängen und Kupplungsvorgängen in einem Antriebsstrang eines Kraftfahrzeugs zu schaffen, welches betriebssicher ist.

Erfindungsgemäß wird eine Betätigungseinrichtung zum Beaufschlagen zumindest zweier, voneinander beabstandeter Schaltelemente mit jeweils zumindest einem ersten Eingriffsbereich zur Betätigung dieser mit folgenden Merkmalen vorgeschlagen:
- eine Antriebswelle ist von einem Motor in beide Drehrichtungen antreibbar; dabei kann der Motor insbesondere ein Elektromotor sein, der bezüglich seiner Bauweise bürstenlos, elektronisch kommutiert, pulsweitenmoduliert und/oder mit einem Getriebe versehen sein kann. In besonderen Fällen kann auch ein pneumatischer oder hydraulischer Drehantrieb a 1a Motor vorgesehen sein. Der Begriff Motor ist daher als stellvertretend für alle Drehantriebe auszulegen.
- Die Antriebswelle weist ein erstes Gewindeprofil auf.
- Auf dem ersten Gewindeprofil der Antriebswelle ist eine Stelleinrichtung mittels eines zweiten, zu dem ersten Gewindeprofil komplementären Gewindeprofils verdrehbar aufgenommen. Die zueinander komplementären Gewindeprofile sind in der Weise zu verstehen, dass zwei Bauteile derart aufeinander gelagert sind, dass bei einer Drehbewegung eine relative Axialverlagerung der beiden Teile -hier Antriebswelle und Stelleinrichtung- stattfindet. Es kann sich daher um Gewindestangen mit Mutter, Rampenprofile und dergleichen handeln.
- Ein mit der Stelleinrichtung drehfest verbundenes Steuerelement bewirkt bei einer Verdrehung der Antriebswelle in eine erste Drehrichtung ein Verdrehen der Stelleinrichtung mit der Antriebswelle, wobei zumindest ein zweiter, auf der Stelleinrichtung vorgesehener Eingriffsbereich auf zumindest einen ersten Eingriffsbereich zumindest eines Schaltelements positioniert wird. Bei den ersten und zweiten Eingriffsbereichen handelt es sich um Mittel, die eine - in Bezug auf die Drehachse der Antriebswelle - axiale Kraft und damit eine axial gerichtete Bewegung von einem Bauteil auf das andere Bauteil - hier Stelleinrichtung und Schaltelement - übertragen können. Die Mittel können beispielsweise Anformungen, Nockenprofile und andere Erhebungen und Vertiefungen der zueinander korrespondierenden Eingriffsbereiche sein.
- Das Steuerelement steuert bei einer Verdrehung der Antriebswelle in eine zweite, der ersten Drehrichtung entgegen gesetzten, zweiten Drehrichtung eine Axialverlagerung der Stelleinrichtung gegenüber der Antriebswelle und damit eine Betätigung des zumindest einen Schaltelements, auf dessen ersten Eingriffsbereich der zweite Eingriffsbereich positioniert ist.

Dabei kann der axiale Weg zwischen der Stelleinrichtung und der Antriebswelle begrenzt sein, um bei einer Verdrehung der Antriebswelle in die erste Drehrichtung die Stelleinrichtung nach Erreichen des maximalen Weges in Drehrichtung mitzunehmen. Vorteilhaft kann eine Begrenzung des axialen Wegs der Stelleinrichtung gegenüber der Antriebswelle durch einen Anschlag erfolgen, so dass das Stellglied sich bei einem Antrieb der Antriebswelle zuerst axial bis zum Anschlag verlagert und dann von der Antriebswelle mitgenommen wird. Zur Sicherung dieses Bewegungsablaufs kann es vorteilhaft sein am Stellglied oder einem anderen mit diesem drehfest verbundenen Bauteil eine Bremseinrichtung, beispielsweise eine in Umfangsrichtung wirksame Reibeinrichtung, eine Rutschkupplung oder dergleichen vorzusehen, wobei deren Bremskraft größer als eine der bei der Verdrehung zwischen Antriebswelle und Stelleinrichtung auftretenden Reibkraft ist, damit sicher gestellt ist, dass zuerst eine axiale Verlagerung des Stellantriebs und danach eine Mitnahme dessen in Drehrichtung erfolgt.

Auf diese Weise kann durch Verdrehung der Antriebswelle der Stellantrieb auf das auszuwählende Schaltelement positioniert werden, so dass sich ein Eingriffsbereich der Stelleinrichtung und ein Eingriffsbereich des Schaltelements gegenüberstehen. Es versteht sich, dass an der Stelleinrichtung die Eingriffsbereiche so angeordnet sein können, dass sie den Eingriffsbereiche mehrerer Schaltelemente gegenüberstehen, so dass beispielsweise mehrere Schaltschienen und/oder ein Schaltelement für eine Reibungskupplung ausgewählt sein kann. Beispielsweise bedeutet die Positionierung der Stelleinrichtung auf die Schaltelemente bei einer parallelen Anordnung von Schaltschienen, die entsprechende Schaltmuffen zum Einlegen der Gänge betätigen, das Anfahren der Wählgasse und Auswählen einer Schaltschiene bzw. mehrerer Schaltschienen in oben genanntem Sinne. Im nachfolgenden Betätigungsschritt wird das bzw. werden die Schaltelemente von der Stelleinrichtung beaufschlagt, indem die Antriebswelle in die entgegen gesetzte Richtung vom Motor angetrieben wird. Hierzu wird die Stelleinrichtung in der Verdrehung an einer zuvor eingestellten Position gehemmt. Diese Hemmung kann mittels einer Verdrehsicherung, beispielsweise eines mittels eines Freilaufs, einer Rastierung oder dergleichen erfolgen, wobei in besonders vorteilhafter Weise eine Hemmung der Drehbewegung der Stelleinrichtung an der Stelle erfolgen kann, bei der sich die Eingriffsbereiche einer auszuwählenden Positionierung gegenüberstehen. So kann beispielsweise die Stelleinrichtung jeweils einen Rastpunkt für jeden zu schaltenden Gang aufweisen. Besonders vorteilhaft kann sein, die Steuerung der einzelnen Bewegungsvorgänge des Positionierens und des Betätigens, beispielsweise des Wählens und des Schaltens eines Ganges, zusammenzufassen, beispielsweise in einem Steuerelement, mit dem eine zuverlässige Rückkehr der Stelleinrichtung an den Anschlag in der einen und eine Drehhemmung an der ausgewählten Position der Stelleinrichtung in der anderen Drehrichtung vorgesehen sein kann.

Durch die Wahl der Kontaktierung bei unterschiedlichen Wegen der Axialverlagerung zwischen Antriebswelle und Stelleinrichtung kann während eines Betätigungsvorganges eine zeitliche Beabstandung von zwei oder mehreren Betätigungsvorgängen an verschiedenen Schaltelementen vorgesehen werden. Beispielsweise kann in dieser Weise vorgesehen sein einen eingelegten Gang zuerst auszulegen und einen neuen zeitlich versetzt einzulegen und/oder eine Reibungskupplung zuerst auszurücken, einen eingelegten Gang auszulegen und einen neuen Gang einzulegen, wobei sich die Betätigungsvorgänge überlappen können. In diesem Falle werden die entsprechenden korrespondierenden Eingriffsbereiche der Stelleinrichtung und der Schaltelemente entsprechend aufeinander abgestimmt, das heißt, die korrespondierenden Eingriffsbereiche Schaltelement/Stelleinrichtung eines früher zu betätigenden Schaltelements weisen in der Summe eine längere axiale Erstreckung auf als die eines später zu betätigenden Schaltelements. Es versteht sich, dass der Drehantrieb und damit die Drehbewegung der Antriebswelle in vorteilhafter Weise linear, nicht linear, progressiv, degressiv und entsprechend vorgegebenen vorteilhaften Steuerkurven folgend ausgelegt werden kann. Weiterhin kann der Drehantrieb bedämpft sein, so dass beispielsweise keine abrupten Drehänderungen auf Antriebswelle, Stelleinrichtung, Steuerelemente, Eingriffsbereich und/oder Schaltelemente sowie deren nachfolgende Bauteile einwirken.

In einem vorteilhaften Ausgestaltungsbeispiel wird insbesondere eine Betätigungsvorrichtung mit einer drehbar gelagerten Antriebswelle vorgeschlagen, welche Antriebswelle um ihre Längsachse in beiden Drehrichtungen, nämlich in einer ersten Drehrichtung sowie einer zweiten, der ersten entgegen gesetzten Drehrichtung, bewegt werden kann, und mit einer Mutter-Gewindespindel-Anordnung, die eine Gewindespindel sowie eine mit ihrem Gewinde in das Gewinde der Gewindespindel eingreifende Mutter aufweist, wobei das Teil dieser Mutter-Gewindespindel-Anordnung, also die Gewindespindel oder die Mutter, das im Kraftfluss der Antriebswelle zugewandt bzw. näher gelegen ist, von der Antriebswelle drehend angetrieben werden kann, und wobei das andere Teil der Mutter-Gewindespindel-Anordnung, also die Mutter oder die Gewindespindel, mit einer Stelleinrichtung, insbesondere fest, gekoppelt ist, so dass die, insbesondere in Richtung der Längsachse der Mutter bzw. der Gewindespindel gelegene, Axialstellung der Stelleinrichtung verändert werden kann, wobei ein Anschlag vorgesehen ist, der die Axialbeweglichkeit der Stelleinrichtung in der einen Orientierung der Axialrichtung begrenzt und wobei dieser Anschlag mittels eines Drehens der Antriebswelle in einer ersten Drehrichtung angefahren werden kann, und wobei dieser Anschlag bewirkt, dass nach Erreichen des Anschlags und bei fortgesetzter Drehbewegung der Antriebswelle in der ersten Drehrichtung die Stelleinrichtung bei im Wesentlichen unveränderter Axialstellung im Wesentlichen rein rotatorisch oder schwenkend bewegt wird, und wobei die Stelleinrichtung in Bezug auf die dieser Bewegung zugeordnete Drehachse bzw. Schwenkachse rotationsasymmetrisch gestaltet ist und/oder ein in Bezug auf diese Dreh- bzw. Schwenkachse rotationsasymmetrisch angeordnetes Stellelement aufweist, dessen Stellung in Drehrichtung bei dieser rein rotatorischen bzw. rein schwenkenden Bewegung der Stelleinrichtung verändert wird, und dass wenigstens eine, insbesondere einseitig wirkende, Verdrehsperre bzw. wenigstens ein, insbesondere einseitig wirkender, Freilauf vorgesehen ist, welche bzw. welcher in wenigstens zwei Dreh- bzw. Schwenkstellungen der Stelleinrichtung diese so halten kann, dass in diesen Haltestellungen, insbesondere einseitig wirkend, jeweils ein Drehen bzw. Schwenken der Stelleinrichtung um die Dreh- bzw. Schwenkachse verhindert wird, wenn die Antriebswelle in der zweiten Drehrichtung angetrieben wird, so dass die Stelleinrichtung dann jeweils axial bzw. translatorisch, und insbesondere in gleich bleibender Drehstellung, bewegt wird, wenn die Antriebswelle in der zweiten Drehrichtung angetrieben bzw. weiter angetrieben wird.

Zur Vereinfachung wird diese erfindungsgemäße Gestaltung anhand einer bevorzugten Gestaltung beschrieben, bei der das der Antriebswelle im Kraftfluss zugewandte bzw. näher gelegene Teil der Mutter-Gewindespindel-Anordnung eine Gewindespindel ist, und das andere Teil der Mutter-Gewindespindel-Anordnung, die Mutter, im Kraftfluss der Antriebswelle abgewandt ist, so dass die Antriebswelle über die Gewindespindel die Mutter belasten kann bzw. die Gewindespindel im Kraftfluss zwischen der Antriebswelle und der Mutter angeordnet ist. Dies kann aber auch umgekehrt sein.

Erfindungsgemäß wird ferner insbesondere eine Betätigungsvorrichtung vorgeschlagen mit einer Antriebseinrichtung und mit einer gegenüber dieser Antriebseinrichtung relativbeweglich angeordneten Stelleinrichtung, die mittels der Antriebseinrichtung bewegt werden kann, wobei die Stellung der Stelleinrichtung in Dreh- bzw. Schwenkrichtung verändert werden kann und wobei die Stellung der Stelleinrichtung in Axialrichtung bzw. in Richtung einer dieser Dreh- bzw. Schwenkrichtung zugeordneten Dreh- bzw. Schwenkachse verändert werden kann, wobei die Antriebseinrichtung genau einen Motor wie Elektromotor mit einer von dem Elektromotor drehend getriebenen Ausgangswelle aufweist, und die Stelleinrichtung mittels dieser Ausgangswelle jeweils zur Erzeugung der Stellungsänderung der Stelleinrichtung in Dreh- bzw. Schwenkrichtung sowie zur Erzeugung der Stellungsänderung der Stelleinrichtung in Axialrichtung bzw. in Richtung der Dreh- bzw. Schwenkachse getrieben wird, und wobei die Stellung der Stelleinrichtung in Dreh- bzw. Schwenkrichtung in wenigstens einer Stellung der Stelleinrichtung im Wesentlichen unabhängig von einer Stellungsänderung in Axialrichtung bzw. in Richtung der Dreh- bzw. Schwenkachse mittels des Elektromotors bzw. dessen Ausgangswelle veränderbar ist, und die Stelleinrichtung in unterschiedlichen Dreh- bzw. Schwenkstellungen mittels dieser Ausgangswelle jeweils im Wesentlichen rein translatorisch in Axialrichtung bzw. in Richtung der Dreh- bzw. Schwenkachse bewegt werden kann und/oder wobei die Stellung der Stelleinrichtung in Axialrichtung bzw. in Richtung der Dreh- bzw. Schwenkachse in wenigstens einer Stellung der Stelleinrichtung im Wesentlichen unabhängig von einer Stellungsänderung in Dreh- bzw. Schwenkrichtung veränderbar ist, und die Stelleinrichtung in unterschiedlichen Axialstellungen mittels der Ausgangswelle jeweils im Wesentlichen rein rotatorisch bzw. schwenkend bewegt werden kann. Die Bewegungen; die mittels der Ausgangswelle erzeugt werden, werden insbesondere mittels des Elektromotors bewirkt, der die Ausgangswelle antreibt. Es ist insbesondere vorgesehen, dass der Elektromotor die Ausgangswelle in den entgegen gesetzten Drehrichtungen antreiben kann, bzw. so umgeschaltet werden kann, dass die Drehrichtung der Ausgangswelle umgekehrt werden kann. Vorzugsweise ist vorgesehen, dass mittels dieser Drehrichtungsumkehr erreicht bzw. bewirkt wird, dass die Dreh- bzw. Schwenkstellung der Stellung der Stelleinrichtung unabhängig von einer Änderung der Axialstellung der Schwenkeinrichtung verändert werden kann, bzw. umgekehrt. Es ist insbesondere vorgesehen, dass der genau eine Elektromotor sämtliche Bewegungen der Betätigungseinrichtung bewirkt bzw. steuert.

Erfindungsgemäß wird ferner insbesondere eine Betätigungsvorrichtung für ein Kraftfahrzeuggetriebe vorgeschlagen, welches Kraftfahrzeuggetriebe mehrere Gangstufen mit unterschiedlichen Übersetzungen aufweist, wobei mittels der Betätigungsvorrichtung eine bzw. die in den Kraft- bzw. Momentenfluss des Kraftfahrzeuggetriebe geschaltete Gangstufe gewechselt werden kann, wobei diese Betätigungsvorrichtung im Betrieb Stellbewegungen erzeugt, die diese Gangwechsel ermöglichen und wobei ferner diese Stellbewegungen so sind, dass ausgehend von wenigstens einer geschalteten Gangstufe, alternativ, in wenigstens drei verschiedene andere Gangstufen direkt, also ohne dass zwischendurch eine jeweils weitere Gangstufe eingelegt bzw. durchlaufen werden muss, geschaltet werden kann, wobei die Betätigungsvorrichtung genau einen Elektromotor aufweist, der sämtliche Stellbewegungen der Betätigungsvorrichtung bewirkt. Bevorzugt ist auch bei dieser Gestaltung eine Stelleinrichtung vorgesehen. Es ist insbesondere vorgesehen, dass für wenigstens einen Gang eine Wahlmöglichkeit dahingehend besteht, in welchen von wenigstens drei anderen Gängen als nächstes geschaltet wird, wobei in jeden dieser drei Gänge mittels des genau einen Elektromotors geschaltet werden kann. Es kann beispielsweise vorgesehen sein, dass aus dem zweiten Gang mittels der Betätigungsvorrichtung und mittels des genau einen Elektromotors direkt in den ersten oder in den dritten oder in den vierten Gang geschaltet werden kann, ohne dass zwischendurch in einen jeweils weiteren Gang geschaltet werden muss. Es muss in diesem Beispiel bei einer Schaltung vom ersten in den dritten Gang also beispielsweise nicht ausgehend vom ersten Gang der zweite Gang eingelegt werden, um dann anschließend in den dritten Gang schalten zu können; in diesem Beispiel kann vielmehr vom ersten direkt in den dritten Gang geschaltet werden. Das "direkte" Schalten soll in diesem Zusammenhang allerdings nicht so zu verstehen sein, dass das beim Umschalten nicht zwischenzeitlich gar kein Gang eingelegt sein kann. Es ist vielmehr bevorzugt vorgesehen, dass beim direkten Schalten von einem Gang in einen anderen Gang zwischenzeitlich beide dieser Gänge ausgelegt sind bzw. in das Getriebe in "Neutral" geschaltet wird.

Die Betätigungsvorrichtung ist bevorzugt eine Kraftfahrzeuggetriebe-Betätigungseinrichtung oder ein Bestandteil einer solchen. Dabei ist insbesondere vorgesehen, dass mittels dieser Kraftfahrzeuggetriebe-Betätigungseinrichtung Gänge eines Kraftfahrzeuggetriebes gewechselt werden können. Besonders bevorzugt ist dabei vorgesehen, dass diese Gänge mittels der Betätigungsvorrichtung wahlweise so geschaltet werden können, dass in den nächst höheren oder nächst niedrigeren Gang geschaltet wird, oder so, dass der nächst höhere oder nächst niedrigere Gang übersprungen wird; es kann - insbesondere dabei auch vorgesehen sein, dass mehrere nächst höhere oder nächst niedrigere Gänge übersprungen werden können. Es ist also vorzugsweise vorgesehen, dass die Reihenfolge der schaltbaren Gänge nicht so - insbesondere durch die mechanische Gestaltung der Betätigungsvorrichtung - festgelegt ist, dass aus jedem Gang maximal in zwei andere Gänge unmittelbar geschaltet werden kann. Es können aber auch Sperren vorgesehen sein, die das unmittelbare Schalten zwischen bestimmten Gängen verhindern. Solche Sperren können beispielsweise mechanischer Art sein oder - sofern entsprechende Steuerungsmittel - wie beispielsweise elektronisches Steuergerät vorgesehen sind - elektrischer bzw. elektronische Art. Bevorzugt ist ferner, dass die Gänge bzw. Gangstufen in beliebiger Reihenfolge geschaltet werden können. Es kann aber auch vorgesehen sein, dass das direkte Umschalten zwischen bestimmten Gängen verhindert oder gesperrt wird. Eine solches Sperren bzw. verhindern kann auch richtungsabhängig sein, so dass beispielsweise ein direktes Schalten von einem bestimmten Gang in einen anderen bestimmten Gang nicht gesperrt ist bzw. nicht verhindert wird, wohl aber das direkte Schalten von dem anderen Gang in den einen. Dieses Verhindern oder Sperren kann beispielsweise mechanisch oder - beispielsweise mittels einer den Elektromotor ansteuernden Steuereinrichtung, die vorzugsweise gegeben ist - elektrisch realisiert sein.

Das Kraftfahrzeuggetriebe bzw. die Kraftfahrzeuggetriebeeinrichtung kann beispielsweise eine automatisiert betätigbare bzw. automatisiert manuell betätigbare Getriebeeinrichtung sein. Das Kraftfahrzeuggetriebe bzw. die Kraftfahrzeuggetriebeeinrichtung ist insbesondere gestuft. Beispielsweise ist das Kraftfahrzeuggetriebe bzw. die Kraftfahrzeuggetriebeeinrichtung ein Automatisiertes Schaltgetriebe (ASG) oder ein Parallelschaltgetriebe (PSG) oder ein Unterbrechungsfreies Schaltgetriebe (USG).

Eine erfindungsgemäße Betätigungseinrichtung kann für unterschiedlichste Anwendungen verwendet werden. Beispielsweise kann eine erfindungsgemäße Betätigungseinrichtung zur Sitzverstellung, und insbesondere für elektrisch gesteuerte Sitzverstellungssysteme, verwendet werden, wie solche, die in einem Kraftfahrzeug eingesetzt werden können. Eine erfindungsgemäße Betätigungsvorrichtung kann auch beispielsweise zur Betätigung bzw. Verstellung oder Steuerung von Sonnen- oder Schiebedächern verwendet werden, und zwar insbesondere von solchen, die elektrisch gesteuert betätigt und/oder in einem Kraftfahrzeug eingesetzt werden können. Eine erfindungsgemäße Betätigungsvorrichtung kann auch für diverse andere Betätigungssysteme verwendet werden, und zwar insbesondere für solche, bei denen verschiedene Bewegungen erforderlich sind, und zwar insbesondere verschiedene, voneinander entkoppelbare Bewegungen.

Ohne dass die Erfindung hierdurch geschränkt werden soll, werden diverse bevorzugte und beispielhafte Gestaltungen einer erfindungsgemäßen Betätigungseinrichtung im Folgenden anhand einer Betätigungseinrichtung für ein Kraftfahrzeuggetriebe beschrieben. Dies bedeutet allerdings nicht, dass diese bevorzugten und beispielhaften Gestaltungen auf Betätigungseinrichtungen für ein Kraftfahrzeuggetriebe beschränkt sein sollen, wobei allerdings Gestaltungen als Betätigungseinrichtung für ein Kraftfahrzeuggetriebe besonders bevorzugt sind.

Bevorzugt weist die Betätigungsvorrichtung genau einen Elektromotor auf. Dieser Elektromotor weist dabei eine Ausgangswelle bzw. Antriebswelle auf, wobei diese Welle bzw. dieser Elektromotor wahlweise so angesteuert oder geschaltet werden kann, dass diese Ausgangswelle in einer ersten Drehrichtung belastet und angetrieben wird, oder in einer zweiten, der ersten entgegen gesetzten Drehrichtung. Dabei kann also der Elektromotor bzw. der Mechanismus bzw. die Antriebswelle umgekehrt bzw. entgegengesetzt betrieben werden. Es ist insbesondere vorgesehen, dass mittels der Betätigungsvorrichtung sowohl Wählbewegungen als auch Schaltbewegungen einer Kraftfahrzeug-Getriebeeinrichtung bewirkt werden können, und zwar insbesondere mittels der Vorwärts- und Rückwärtsbewegung bzw. der Bewegung in entgegen gesetzten Richtungen bzw. Drehrichtungen des Mechanismus bzw. des Elektromotors bzw. der Antriebswelle.

Die Kraftfahrzeuggetriebe-Betätigungseinrichtung kann einen Anschlag, insbesondere physikalischen Anschlag, für die Mutter bzw. die Stelleinrichtung aufweisen, der beispielsweise an der Gewindespindel angeordnet ist. Dieser Anschlag ist insbesondere so gestaltet und angeordnet, dass die Mutter bzw. die Stelleinrichtung - sofern die Anschlagposition noch nicht erreicht ist - durch ein Drehen der Antriebs- bzw. Motorausgangswelle zunächst entlang der Gewindespindel bewegt wird und dann gegen diesen Anschlag bewegt wird. Es kann vorgesehen sein, dass die Mutter an den Anschlag anschlägt oder dass die Stelleinrichtung an den Anschlag anschlägt. Es kann auch vorgesehen sein, dass ein anderes Bauteil an den Anschlag anschlägt und die Wirkung an die Mutter bzw. Stelleinrichtung weitergeleitet wird. Wenn die Anschlagposition erreicht ist wird die Mutter bzw. die Stelleinrichtung bei weiterem Drehen der Antriebs- bzw. Motorausgangswelle in der ersten Drehrichtung insbesondere im Wesentlichen rein rotatorisch bewegt bzw. mit der (bewegten) Spindel gedreht oder geschenkt, so dass die Mutter und die Stelleinrichtung im Wesentlichen axial in ihrer Relativstellung zur Gewindespindel gehalten wird. Es kann auch vorgesehen sein, dass ein elastisches Element, insbesondere Federelement, und/oder dämpfendes Element, am Anschlag angeordnet ist oder zwischen dem Anschlag und der Mutter bzw. der Stelleinrichtung in der Anschlagposition positioniert ist.

Durch das Drehen der Stelleinrichtung in der Anschlagposition kann - insbesondere gesteuert und/oder durch eine Stellungserfassungseinrichtung überwacht - eine vorbestimmte Drehstellung oder Drehstellung, die in einem vorbestimmten Drehstellungsbereich liegt, angefahren bzw. angesteuert werden. Hierdurch kann bei einer Kraftfahrzeuggetriebe-Betätigungseinrichtung ein geeigneter bzw. zu schaltender Gang gewählt werden. Es kann also insbesondere mittels des Drehens der Stelleinrichtung in der Anschlagstellung die Wählfunktion für Kraftfahrzeuggetriebe-Betätigungseinrichtung bewirkt werden.

Die Kraftfahrzeuggetriebe-Betätigungseinrichtung kann eine Verdrehsperre bzw. einen Freilauf aufweisen, die bzw. der für mehrere Gänge, die in dem Kraftfahrzeuggetriebe geschaltet werden können, jeweils eine separate Halte- bzw. Sperrstellung aufweist. Vorzugsweise ist die Verdrehsperre eine einseitig wirkende Verdrehsperre bzw. der Freilauf ein einseitig wirkender Freilauf, so dass in einer Richtung bzw. Orientierung eine Bewegung freigegeben wird und in der Gegenrichtung bzw. Orientierung eine Beweglichkeit gesperrt wird bzw. eine Bewegung verhindert wird. Insbesondere kann für jeden schaltbaren Gang eine separate Halte- bzw. Sperrstellung vorgesehen sein. Die jeweilige Halte- bzw. Sperrstellung kann so sein, dass eine Stelleinrichtung, die beispielsweise ein Steuerelement wie Platte aufweist sowie ein mit dieser Platte verbundenes Stellelement, wie Bolzen oder Zapfen oder dergleichen, in der Sperrstellung an einer Drehbewegung, die insbesondere eine Drehbewegung um eine Längsachse dieser Stelleinrichtung ist, in zumindest einer Orientierung gehindert wird. Dies kann insbesondere so sein, dass bei einer Drehbewegung der Antriebs- bzw. Motorausgangswelle in einer zweiten Drehrichtung, die Stelleinrichtung über die Mutter-Gewindespindel-Anordnung belastet wird, und zwar insbesondere entsprechend der Gewindesteigung sowohl in Längsrichtung der Stelleinrichtung als auch in Drehrichtung um eine Längsachse der Stelleinrichtung, wobei durch die Verdrehsperre bzw. den Freilauf in einer jeweiligen Sperrstellung verhindert wird, dass die Stelleinrichtung um ihre Längsachse gedreht wird und somit nur axial bewegt wird.

Die Verdrehsperre bzw. der Freilauf kann beispielsweise so sein, dass die Stelleinrichtung, nachdem die betreffende Halte- bzw. Sperrstellung erreicht wurde, über den axialen Verstellbereich, der bis zu einer Axialstellung der Stelleinrichtung verbleibt, bei der von dieser Stelleinrichtung ein Schaltelement so betätigt bzw. belastet wird, dass in einer Getriebeeinrichtung eine das Einlegen eines Ganges bewirkt wird, beim Drehen der Antriebswelle bzw. Motorausgangswelle in der zweiten Drehrichtung in der Sperrstellung bzw. ihrer Drehstellung gehalten wird. Die Verdrehsperre bzw. der Freilauf kann - insbesondere hierbei - auch eine axiale Führungsfunktion ausweisen.

Die Verdrehsperre bzw. der Freilauf kann so sein, dass an der Stelleinrichtung eine oder mehrere Profilierungen mit Vertiefungen und Erhöhungen vorgesehen ist, wobei eine federnd gestaltetes oder mit eine Federeinrichtung gekoppeltes oder von einer Federeinrichtung belastetes Rastelement an dieser Profilierung - bzw. gegebenenfalls in Zwischenbereichen zwischen solchen Profilierungen - gehalten wird bzw. in diese Profilierung eingreifen kann. Beispielsweise kann eine solche Profilierung an einer sich um die Längsachse herumerstreckenden Mantelwandung vorgesehen sein. Die Verdrehsperre bzw. der Freilauf kann auch anders gestaltet sein. Das Zusammenwirken des Rastelements mit der Profilierung bzw. die jeweilige Gestaltung bzw. die Verdrehsperre bzw. der Freilauf ist dabei insbesondere so, dass mehrere Haltestellungen gegeben sind, in denen die Drehbeweglichkeit der Stelleinrichtung in zumindest einer Orientierung blockiert ist. Dies ist vorzugsweise die Orientierung, die der Orientierung entgegengesetzt ist, in welcher die Stelleinrichtung in der oben erwähnten Anschlagstellung um ihre Längsachse rein schwenkend bzw. rein rotatorisch bewegt werden kann bzw. zu Wählen gedreht oder geschwenkt wird.

Insbesondere ist vorgesehen, dass die Verdrehsperre bzw. der Freilauf eine Drehbewegung der Stelleinrichtung blockiert bzw. die Stelleinrichtung in eine Haltestellung bewegt wird, wenn die Antriebs- bzw. Motorausgangswelle in der zweiten Drehrichtung gedreht wird.

Es kann auch vorgesehen sein, dass durch das Wählen bzw. Verdrehen der Stelleinrichtung in der Anschlagstellung eine Drehstellung der Stelleinrichtung angefahren wird, die so ist, dass bei einer anschließenden Drehbewegung der Antriebs- bzw. Motorausgangswelle in der zweiten Drehrichtung die Stelleinrichtung zunächst in Drehrichtung noch nicht blockiert ist und dann in eine Haltestellung der Verdrehsperre bzw. des Freilaufes bewegt wird. Es kann auch vorgesehen sein, dass die Stelleinrichtung bei der genannten anschließenden Drehbewegung der Antriebs- bzw. Motorausgangswelle in der zweiten Drehrichtung unmittelbar in einer die Verdrehbarkeit, zumindest einseitig, blockierenden Haltestellung ist.

Die Verdrehsperre bzw. der Freilauf kann so sein, dass er durchrutscht, wenn die Antriebs- bzw. Motorausgangswelle in der ersten Drehrichtung gedreht wird. Sie bzw. er kann auch so sein, dass er bzw. sie nur dann durchrutscht, wenn die Stelleinrichtung in einer Anschlagposition ist und bei einem Drehen der Antriebs- bzw. Motorausgangswelle in der ersten Drehrichtung im Wesentlichen rein rotatorisch bewegt wird. Es kann auch vorgesehen, dass die Verdrehsperre bzw. der Freilauf auch bei einem Drehen der Antriebs- bzw. Motorausgangswelle in der ersten Drehrichtung eine gewisse Haltekraft auf die Mutter bzw. die Stelleinrichtung in Umfangs- bzw. Drehrichtung ausübt. Diese kann beispielsweise eine auf einem Reibprinzip basierende Haltekraft sein. Es kann beispielsweise vorgesehen sein, dass zwischen der Mutter und der Spindel bei einem Drehen der Antriebs- bzw. Motorausgangswelle in der ersten Drehrichtung - insbesondere außerhalb einer Anschlagstellung der Stelleinrichtung - eine Gewindereibung wirkt, und die angesprochene Haltekraft dem in Drehrichtung auf die Mutter bzw. die Stelleinrichtung wirkenden Anteil der Gewindereibung kompensiert. Dies kann so sein, dass die Stelleinrichtung bei dieser Bewegung der Motorausgangs- bzw. Antriebswelle im Wesentlichen rein translatorisch bis zur Anschlagstellung bewegt wird. Dies kann aber auch auf andere Weise erreicht werden oder weggelassen sein.

insbesondere ist vorgesehen, dass - insbesondere nach dem Wählen - durch ein Drehen der Antriebs- bzw. Motorausgangswelle in der zweiten Drehrichtung die Stelleinrichtung - insbesondere unter der Wirkung einer Verdrehsperre bzw. eines Freilaufes im Wesentlichen rein translatorisch - in Axialrichtung bzw. entlang der Spindel bewegt wird und hierdurch eine Stellung erreicht, in welcher sie ein Schaltelement so betätigt, dass ein bestimmter Gang in dem Kraftfahrzeuggetriebe geschaltet bzw. eingelegt wird. Ein solches Schaltelement kann beispielsweise ein Schwenkhebel sein. Das Schaltelement bzw. der Schwenkhebel kann auch mit einem oder mehreren weiteren Elementen gekoppelt sein, wie Schaltschiene und/oder Bestätigungsstange und/oder -gestänge und/oder Schaltgabel und/oder Schiebemuffe oder dergleichen. Es kann beispielsweise vorgesehen sein, dass ein bzw. jedes Schaltelement, wie Schwenkhebel, mit einer Schaltschiene gekoppelt ist, welche bei der Betätigung mittels der Stelleinrichtung einen zugeordneten Synchronisationsring schiebt, um eine Synchronisation im Getriebe und ein Schalten in den betreffenden, gewählten Gang zu bewirken.

Es ist insbesondere vorgesehen, dass dem Schaltelement und/oder der Drehstellung der Stelleinrichtung oder des Stellelements, bei der dieses Schaltelement von der Stelleinrichtung zum Schalten in einen Gang betätigt wird, und/oder dem Eingriffsbereich in welchem die Stelleinrichtung dieses Schaltelement belastet ein vorbestimmter, insbesondere zu schaltender Gang des Kraftfahrzeuggetriebes, insbesondere eindeutig, zugeordnet ist. Ein solche, insbesondere eindeutige Zuordnung ist bevorzugt für jeden in dem Kraftfahrzeuggetriebe schaltbaren Gang gegeben.

Die Stelleinrichtung kann das Schaltelement beispielsweise mittels eines Stellelements, wie Bolzen oder Zapfen oder dergleichen, betätigen, um eine Synchronisation und/oder das Schalten in einen Gang im Kraftfahrzeuggetriebe auszulösen bzw. zu bewirken.

Bevorzugt ist ferner, dass wenigstens ein elastisches Element vorgesehen ist, welches beim Synchronisieren im Rahmen des Einlegens eines Ganges belastet wird. Dieses elastische Element ist vorzugsweise vorgespannt. Es kann beispielsweise eine Feder oder ein Kraftspeicher sein. Durch ein solches Element kann eine Schaltelastizität bewirkt werden. Es kann vorgesehen sein, dass eine Schaltelastizität dadurch bewirkt wird, dass ein Stellelement der Stelleinrichtung, wie Bolzen oder Zapfen oder dergleichen, von einer Feder mit einer - insbesondere geeigneten - Kraft belastet wird. Beispielsweise kann die Stelleinrichtung ein Steuerelement wie Platte aufweisen, sowie ein Stellelement und eine - insbesondere vorgespannte - Feder, die sich gegen einerseits gegen das Stellelement und andererseits die Platte abstützt. Dabei kann die Feder beispielsweise das Stellelement mit einer - insbesondere geeigneten - Kraft belasten. Hinsichtlich weiterer beispielhafter Gestaltungen sowie weiterer beispielhafter Anordnungen sowie beispielhafter Wirkungen, die durch solche elastische Elemente erreicht werden können wird auf die amerikanischen Patente US 6,003,395, US 6,220,109 B1 sowie US 6,003,649 verwiesen, die diesbezüglich durch Bezugnahme zum Gegenstand der hiesigen Offenbarung gemacht werden, und auch bevorzugt Weiterbildungen der Erfindung zeigen.

Vorzugsweise ist eine Zusatzstelleinrichtung vorgesehen, welche vorbestimmte Gänge des Kraftfahrzeuggetriebes herausnimmt oder sicherstellt, dass diese nicht eingelegt bzw. herausgenommen sind, bevor in einen vorbestimmten, insbesondere zuvor gewählten Gang des Kraftfahrzeuggetriebes geschaltet wird; diese Zusatzstelleinrichtung kann insbesondere eine so genannte Active-Interlock-Einrichtung sein.

Die Zusatzstelleinrichtung kann so gestaltet sein, dass sie alle Gänge des Kraftfahrzeuggetriebes herausnimmt und/oder sicherstellt, dass kein Gang in dem Kraftfahrzeug-Getriebe eingelegt; die Zusatzstelleinrichtung kann auch so sein, dass sie nur bestimmte Gänge des Kraftfahrzeuggetriebes herausnimmt oder sicherstellt, dass diese bestimmten Gänge in dem Kraftfahrzeug-Getriebe nicht eingelegt bzw. herausgenommen sind. Welche konkreten Gänge im letztgenannten Fall betroffen sind, kann auch von dem zu schaltenden bzw. gewählten Gang abhängen. Es kann beispielsweise bei einem Parallelschaltgetriebe (PSG) vorgesehen sein, dass die Zusatzstelleinrichtung alle geraden Gänge des Kraftfahrzeuggetriebes herausnimmt und/oder sicherstellt, dass kein gerader Gang in dem Kraftfahrzeug-Getriebe eingelegt, wenn in einen geraden Gang geschaltet werden soll bzw. ein gerader bestimmter gerader Gang gewählt wurde; entsprechendes kann dabei für alle ungeraden Gänge vorgesehen sein. Bei einem Automatisierten Schaltgetriebe (ASG) kann beispielsweise vorgesehen sein, dass die Zusatzstelleinrichtung alle Gänge herausnimmt und/oder sicherstellt, dass alle Gänge herausgenommen sind, bevor in einen neuen geschaltet wird bzw. dieser eingelegt wird bzw. bevor eine Synchronisation im Rahmen dieses Schaltens im Kraftfahrzeuggetriebe eingeleitet oder durchgeführt wird.

Die Zusatzstelleinrichtung kann beispielsweise mit der Stelleinrichtung fest gekoppelt sein, und zwar insbesondere axial- und drehfest. Die Zusatzstelleinrichtung kann ein Steuerelement, beispielsweise in Form einer Platte bzw. Interlock-Platte aufweisen oder sein. Die Platte bzw. Interlock-Platte kann beispielsweise im Wesentlichen kreisförmig oder kreissegmentförmig gestaltetet sein oder anders geformt sein. Sie kann beispielsweise einen Kragen aufweisen, der von einem im Wesentlichen ebenen Teil bzw. einem sich im Wesentlichen flächenförmig erstreckenden Teil der Platte abragt. Ein solcher Kragen kann beispielsweise eine im Wesentlichen zylindrische Wand oder ein zylindrisches Wandsegment sein. Die Platte bzw. Interlock-Platte und/oder ein Kragen bzw. ein Wandsegment bzw. eine Wand der Zusatzstelleinrichtung, kann Ausnehmungen oder Durchbrüche aufweisen. Solche Durchbrüche oder Ausnehmungen können beispielsweise dafür vorgesehen sein, dass ein als Schwenkhebel gestaltetes Schaltelement mit einer beispielsweise im Wesentlichen mittig angeordneten Schwenkachse mit seinem auf der einen Seite der Schwenkachse angeordneten Abschnitt in den Bereich dieser Ausnehmung schwenken kann; dies kann insbesondere in Bezug auf einen solchen Schwenkhebel sinnvoll sein der, insbesondere im jenseits der Schwenkachse gelegenen Anschnitt bei Schalten in den gewählten Gang betätigt wird. Es kann auch vorgesehen sein, dass eine Platte ein an diesen Zweck angepassten Endbereich aufweist, der insbesondere nicht ein radial außen gelegener Endbereich ist.

Die Zusatzstelleinrichtung kann beispielsweise so gestaltete und angeordnet sind, dass sie mittels Bereichen, die radial außen angeordnet sind, Gänge auslegen kann.

Als Schwenkhebel gestaltete Schaltelemente können beispielsweise auf beiden Seiten einer Schwenkachse jeweils einen Vorsprung aufweisen. Bei einer solchen Gestaltung kann beispielsweise vorgesehen sein, dass einer dieser Vorsprünge näher an der Zusatzstelleinrichtung gelegen ist als der andere, wenn dieser Schwenkhebel in einer Stellung ist, bei welcher ein Gang, der diesem Schwenkhebel zugeordnet ist, im Kraftfahrzeuggetriebe eingelegt ist. Es kann vorgesehen sein, dass die Zusatzstelleinrichtung zum Auslegen des betreffenden Ganges in diesen ihr näher gelegenen Vorsprung zunächst eingreift, und somit ein Verschwenken in Richtung der Neutralstellung des Schwenkhebels bewirkt. Die Zusatzstelleinrichtung kann weiter so sein, dass sie dann - beispielsweise mit einem Kragen - zwischen die Vorsprünge dieses Schwenkhebels eingreift. Dieser Eingriff kann so sein, dass ein Verschwenken dieses Schwenkhebels in Richtung eines eingelegten Ganges blockiert bzw. gesichert verhindert wird. in Bezug auf nicht eingelegte Gänge kann beispielsweise vorgesehen sein, dass die Zusatzstelleinrichtung unmittelbar, also ohne den betreffenden Schwenkhebel zuvor in Richtung "Neutral" zu schwenken, zwischen solche Vorsprünge dieses Schwenkhebel eingreift. Durch dies Gestaltung der Schwenkhebel bzw. Schaltelemente sowie der Zusatzstelleinrichtung, und gegebenenfalls die Drehstellung der Zusatzstelleinrichtung, kann festgelegt sein, welche Gänge jeweils ausgelegt werden, bzw. bezüglich weicher Gänge die Zusatzstelleinrichtung jeweils sicherstellt, dass sie ausgelegt sind.

Es ist kann vorgesehen sein, dass eine solche Zusatzstelleinrichtung das Auslegen vorbestimmter Gänge bewirkt bzw. sicherstellt, dass vorbestimmte Gänge ausgelegt sind, während die Antriebswelle bzw. Motorausgangswelle in der zweiten Drehrichtung bewegt wird. Beispielsweise kann vorgesehen sein, dass mittels der Bewegung der Antriebswelle bzw. der Motorausgangswelle in der zweiten Drehrichtung die Zusatzstelleinrichtung zunächst bewegt wird und dann - bei anhaltender Bewegung der Antriebswelle bzw. der Motorausgangswelle - das Auslegen vorbestimmter Gänge bewirkt bzw. sicherstellt, so dass sie dies während der genannten Bewegung der Antriebs- bzw. Motorausgangswelle bewirkt bzw. sicherstellt; es kann auch vorgesehen sein, dass die Zusatzstelleinrichtung dies weiter sicherstellt, wenn die Antriebswelle bzw. der Motorausgangswelle nicht mehr bewegt wird, oder zumindest beginnt, in der Gegenrichtung bewegt zu werden.

Bevorzugt ist eine Wegerfassungseinrichtung vorgesehen, die beispielsweise einen inkrementalen Wegaufnehmer aufweisen kann. Ein solcher inkrementaler Wegaufnehmer kann beispielsweise im Bereich der Antriebswelle oder im Bereich des Motors vorgesehen sein. Es kann vorgesehen sein, dass sich hiermit sowohl die Drehstellung der Stelleinrichtung als auch die Axialstellung der Stelleinrichtung. ermitteln lässt.

Bevorzugt ist lässt sich die Drehstellung der Stelleinrichtung mittels der Wegerfassungseinrichtung ermitteln, wobei - insbesondere bei einer Gestaltung, bei der die Wegerfassungseinrichtung einen inkrementalen Wegaufnehmer aufweist, eine Referenzstellung der Betätigungsvorrichtung vorgesehen sein kann, über welche der inkrementale Wegaufnehmer bzw. die Wegerfassungseinrichtung abgeglichen werden kann. Dies kann beispielsweise so sein, dass die Stelleinrichtung in an anderer Stelle dieser Offenbarung beispielhaft beschriebener Weise an einen Anschlag bewegt wird, der ihre Beweglichkeit in einer Orientierung ihrer Axialrichtung blockiert. An einer Stelle in Drehrichtung kann dabei ein Element vorgesehen sein, welches auch die Beweglichkeit in der anderen Orientierung ihrer Axialrichtung blockiert. Diese Stellung kann - insbesondere elektronisch gesteuert - angefahren bzw. gesucht werden. Wenn diese Stellung aufgefunden wurde, kann der Inkrementalweggeber bzw. die Wegerfassungseinrichtung - insbesondere automatisch - auf einen vorbestimmten Startwert, wie beispielsweise "Null", gesetzt werden, und neu zu zählen beginnen.

In einer bevorzugten Gestaltung ist eine Einrichtung, insbesondere Führungseinrichtung, vorgesehen, welche die Belastung des Gewindes an der Stelleeinrichtung der Stelleinrichtung bzw. der Mutter und/oder des Gewindes an der Gewindespindel vermindert, und zwar insbesondere im Hinblick auf eine gegebenenfalls gegebene seitliche Belastung und/oder eine gegebenenfalls gegebene Drehmomentbelastung um eine senkrecht zur Längsachse der Mutter bzw. der Spindel bzw. der Stelleinrichtung gelegene Achse. Es kann beispielsweise eine Führungseinrichtung vorgesehen sein, welche die Stelleinrichtung zum Abfangen derartiger Belastungen abstützt. Eine solche Führungseinrichtung kann beispielsweise im Wesentlichen konzentrisch zu den ineinander greifenden Gewinden angeordnet sein. Sie kann beispielsweise mit einer Führungsbuchse, wie Gleitlagerführungsbuchse versehen sein. Es kann insbesondere vorgesehen sein, dass an der Stelleinrichtung sowie einem Gehäuse jeweils Schultern. oder Ringschultem oder zylindrische Elemente oder anders geartete Ansätze vorgesehen sind, die sich gegeneinander Abstützen, wobei im - insbesondere radialen - Zwischenraum dieser Schultern bzw. zylindrischen Elemente gegebenenfalls eine Buchse, wie Gleitlagerbuchse, vorgesehen ist.

Es kann ein elektronisches Steuergerät, wie beispielsweise elektronisches Getriebesteuergerät vorgesehen sein, welches einen Elektromotor der Betätigungsvorrichtung steuert. Es ist bevorzugt vorgesehen, dass die erfindungsgemäße Betätigungsvorrichtung genau einen Elektromotor aufweist. Dabei ist insbesondere vorgesehen, dass dieser Elektromotor sowohl die Wählbewegung als auch die Schaltbewegung, insbesondere das Schalten in Gänge, eines Kraftfahrzeuggetriebes steuert. Besonders bevorzugt treibt genau ein Elektromotor sämtliche Bewegungen der Stelleinrichtung an. Es ist dabei insbesondere vorgesehen, dass durch entsprechende Ansteuerung des Elektromotors die Reihenfolge der zu schaltenden Gänge gewählt werden kann. Es ist dabei bevorzugt vorgesehen, dass die mechanische Gestaltung der Betätigungsvorrichtung ein Schalten der Gänge in beliebiger Reihenfolge ermöglicht.

Vorzugsweise ist die Schaltfunktionalität und die Wählfunktionalität bei einer erfindungsgemäßen Kraftfahrzeuggetriebe-Betätigungseinrichtung auf der gleichen Welle, insbesondere Antriebswelle, bzw. an dem gleichen Elektromotor integriert, wobei hierzu insbesondere die Vorwärts- und Rückwärtsbewegung dieses Mechanismus bzw. dieser Welle bzw. dieses Motors genutzt wird. Eine erfindungsgemäße Kraftfahrzeuggetriebe-Betätigungseinrichtung kann so sein, dass gegenüber den bekannten Kraftfahrzeuggetriebe-Betätigungseinrichtungen auf einen Elektromotor der dort vorgesehenen zwei Elektromotoren verzichtet werden kann, wobei insbesondere die Wählfunktionalität und die Schaltfunktionalität aufrecht erhalten werden kann.

Es kann vorgesehen sein, dass eine in einer bevorzugten Gestaltung vorgesehen Platte bzw. Schaltplatte bzw. Wählplatte bzw. Umschaltplatte der Stelleinrichtung und/oder eine in einer bevorzugten Gestaltung gegebene Platte bzw. Interlock-Platte einer Zusatzstelleinrichtung und/oder ein in einer bevorzugten Gestaltung vorgesehenes Rastelement einer, insbesondere einseitig wirkenden, Verdrehsperre bzw. eines, insbesondere einseitig wirkenden, Freilaufs aus Blech gefertigt ist. Diese Bauteile können aber auch auf andere Weise gefertigt sein bzw. anders gestaltet sein.

Bevorzugt ist vorgesehen, das die , insbesondere einseitig wirkende, Verdrehsperre bzw. der, insbesondere einseitig wirkende, Freilauf einer Kraftfahrzeuggetriebe-Betätigungsvorrichtung für jeden in einer Kraftfahrzeug-Getriebeeinrichtung einlegbaren Gang jeweils eine separate Haltestellung für die Stelleinrichtung aufweist bzw. bereitstellt, wobei insbesondere vorgesehen ist, dass eine eindeutige Zuordnung zwischen diesen Haltestellungen und den Gängen gegeben ist.

Im folgenden wird eine weitere erfindungsgemäße Betätigungsvorrichtung bzw. Kraftfahrzeuggetriebe-Betätigungseinrichtung bzw. eine bevorzugte Gestaltung einer erfindungsgemäßen Betätigungsvorrichtung bzw. Kraftfahrzeuggetriebe-Betätigungseinrichtung beschrieben: Indem die Vorwärts- und Rückwärtsbewegung eines Mechanismus, insbesondere Motor, wie Elektromotor, genutzt wird, bzw. die Drehbewegung in einer ersten und zweiten Drehrichtung einer Antriebswelle bzw. Motorausgangswelle, wird eine Platte, die auch als Wähl- oder Schalt oder Umschaltplatte bezeichnet wird, auf und ab bzw. hin und her entlang einer Gewindespindel bewegt, wobei die Wähl- und Schaltbewegung bewirkt wird. In einer Richtung wandert die Platte entlang der Gewindespindel nach unten und greift, insbesondere mittels eines Bolzens oder Stifts oder Zapfens oder Vorsprungs oder eines anders gestalteten Mittels, in einen Schwenkhebel ein, der mit einer Schaltschiene oder Schaltbetätigungsstange verbunden ist, und schaltet dadurch den Gang bzw. in den Gang. In der anderen bzw. entgegen gesetzten Richtung wandert eine Mutter bzw. die Platte entlang der Spindel nach oben, bis die Mutter bzw. die Platte einen Anschlag bzw. physikalischen Anschlag an der Gewindespindel erreicht, der der Platte ermöglicht, sich zu drehen bzw. zu schwenken bzw. zu rotieren, und einen Gang bzw. einen geeigneten Gang zu wählen. Es kann also insbesondere an dieser Stelle die Platte sich drehen bzw. schwenken und über einem Schwenkhebel für die gewünschten Umschaltung bzw. Schaltung bzw. Gang positioniert werden. Beim bzw. nach dem Umkehren des Mechanismus bzw. der Drehrichtung der Eingangswelle, hindert ein einseitig wirkender Mechanismus bzw. ein Freilauf die Platte am Drehen, und die Platte bewegt sich entlang der Spindel nach unten, um den neuen Gang zu schalten. Insbesondere kann vorgesehen sein, dass der einseitig wirkende Mechanismus bzw. der Freilauf die Platte während des Schaltprozesses bzw. der Schaltbewegung am Drehen hindert. Die Drehung der Platte ist so, dass sie - insbesondere wahlweise - auf beide Seiten des Schwenkhebels drücken kann, und daher bzw. dadurch den Schwenkhebel (und somit eine Schaltschiene und/oder eine Schaltbetätigungsstange) in zwei Richtungen bewegen kann. Die Schalt- und Wählbewegungen können somit insbesondere durch ein Umkehren des Mechanismus bzw. der Drehrichtung der Antriebswelle bzw. des Motors erreicht werden. Es ist insbesondere vorgesehen, dass die Schalt- und Wählbewegungen kombiniert werden, indem der gleiche bzw. genau ein Elektromotor verwendet wird. Es kann hierbei auch vorgesehen sein, das ein Active-Interlock-Gestaltung und/oder eine Schaltelastizität vorgesehen wird bzw. integriert wird. Eine Active-Interlock-Gestaltung kann beispielsweise mittels einer weiteren Platte vorgesehen werden, die hier als Interlock-Platte bezeichnet wird, und die mit einem Kragen oder anderen Mittel auf dem bzw. in den Schwenkhebel eingreift, um diesen in eine gestreckte bzw. nicht verschwenkte bzw. nicht ausgelenkte Stellung zu bringen und alle ungewünschten Gänge herauszunehmen. Schaltelastizität kann beispielsweise durch eine Feder erreicht werden, die das Stellelement, also insbesondere den (Eingriffs)Bolzens bzw. den (Eingriffs)Stift bzw. den (Eingriffs)Zapfen, mit einer geeigneten Kraft beaufschlagt. Es kann auch vorgesehen sein, dass eine gegebenenfalls gegebene seitliche Belastung des Gewindes in der (Schalt)Platte bzw. Mutter durch eine geeignete Einrichtung vermieden oder reduziert wird, wie beispielsweise ein Führungseinrichtung, die die Stelleinrichtung gegenüber einem Gehäuse abstützt.

Erfindungsgemäß wird ferner insbesondere ein Kraftfahrzeuggetriebe mit einer erfindungsgemäßen Betätigungsvorrichtung vorgeschlagen.

Erfindungsgemäß wird ferner insbesondere ein Verfahren zur automatisierten Steuerung von Gangwechselvorgängen in einem Kraftfahrzeuggetriebe mittels genau eines Elektromotors, der eine Ausgangswelle aufweist, vorgeschlagen mit den Schritten: Antreiben des Elektromotors bzw. der Ausgangswelle des Elektromotors in einer ersten Drehrichtung, um einen in dem Kraftfahrzeuggetriebe einzulegenden Gang zu wählen; und Antreiben des Elektromotors bzw. der Ausgangswelle des Elektromotors in einer zweiten, der ersten entgegen gesetzten Drehrichtung, um in den mittels des Antreibens des Elektromotors bzw. der Ausgangswelle in der ersten Drehrichtung ausgewählten Gang des Kraftfahrzeuggetriebes zu schalten bzw. diesen Gang einzulegen.

Im Folgenden werden einige beispielhafte bzw. bevorzugte erfindungsgemäße Gestaltungen anhand der Figuren erläutert, wodurch die Erfindung allerdings nicht beschränkt werden soll. Es zeigt:
- Fig. 1: eine beispielhafte Gestaltung einer erfindungsgemäßen Betätigungsvorrichtung in schematischer teilweiser Ansicht;
- Fig. 2: eine beispielhafte Gestaltung einer erfindungsgemäßen Betätigungsvorrichtung in schematischer teilweiser Ansicht, die insbesondere auch mit der Gestaltung gemäß Fig. 1 kombiniert werden kann;
- Fig. 3: eine beispielhafte Gestaltung einer erfindungsgemäßen Betätigungsvorrichtung in schematischer teilweiser Ansicht, die insbesondere auch mit der Gestaltung gemäß Fig. 1 und/oder Fig. 2 kombiniert werden kann;
- Fig. 4a: und 4b eine Ansicht im Teilschnitt einer beispielhaften Stelleinrichtung einer Betätigungseinrichtung in zwei Belastungszuständen einer Feder, die beispielsweise in den Gestaltungen gemäß Fig. 1 bis 3 oder 5a bis 5c gegeben sein kann;
- Fig. 5a bis 5c: eine beispielhafte erfindungsgemäße Betätigungsvorrichtung in drei Stellungen;
- Fig. 6a und 6b: zwei dreidimensionale Ansichten eines Modells; und
- Fig. 7: Schritte eines beispielhaften erfindungsgemäßen Verfahrens in schematischer Darstellung und
- Fig. 8: ein Funktionsschema für eine Betätigungseinrichtung für ein Doppelkupplungsgetriebe.
- Fig. 9a: eine erste Variation (mit Sensor) einer weiteren beispielhaften erfindungsgemäßen Ausführungsform;
- Fig. 9b: eine zweite Variation (ohne Sensor) der Ausführungsform gemäß Fig. 9a;
- Fig. 10 und 11a: aufgeschnittene Darstellungen der Gestaltung gemäß Fig. 9a;
- Fig. 11b: eine aufgeschnittene Darstellung der Gestaltung gemäß Fig. 9b;
- Fig. 12: eine Seiten- bzw. Schnittansicht der Gestaltung gemäß Fig. 9a;
- Fig. 13a: eine Explosionsansicht der Gestaltung gemäß Fig. 9a;
- Fig. 13b: eine Explosionsansicht der Gestaltung gemäß Fig. 9b;
- Fig. 14: eine vergrößerten Ausschnitt im Bereich der Verdrehsicherung bei den Gestaltungen gemäß den Fig. 9a und 9b;
- Fig. 15: einen vergrößerten Ausschnitt im Bereich einer weiteren, einseitig wirkenden Verdrehsicherung bei der Gestaltung gemäß den Fig. 9a, wobei diese einseitig wirkende Verdrehsicherung in ähnlicher Gestaltung auch bei der Gestaltung gemäß Fig. 9b gegeben ist;
- Fig. 16a und 16b: zwei Ansichten, anhand welcher insbesondere die Schaltbewegungen zum Schalten von Gängen eines Getriebes mittels der Gestaltung gemäß Fig. 9a oder gemäß Fig. 9b erläutert wird;
- Fig. 17: einen einseitig wirkenden Freilauf sowie einen Sensor, der bei der Gestaltung gemäß Fig. 9a gegeben ist, wobei der Freilauf in entsprechender Gestaltung auch bei der Gestaltung gemäß Fig. 9b gegeben ist;
- Fig. 18a und Fig. 18b: die Gestaltung gemäß Fig. 9a bzw. 9b in verschiedenen Drehstellungen des Excenters
- Fig. 19: eine Ansicht der Gestaltung gemäß Fig. 9a bzw. Fig. 9b;
- Fig. 20: einen vergrößerten Ausschnitt der Gestaltung gemäß Fig. 9a, in dem ein Sensor gezeigt ist;
- Fig. 21: eine beispielhafte Ansicht, in der eine Rastierung gezeigt ist, die zur Ermittlung einer Referenzposition in der Variation gemäß Fig. 9b gegeben sein kann bzw. gegeben ist; und
- Fig. 22 bis 24: eine weitere beispielhafte erfindungsgemäße Gestaltung in teilweiser Ansicht, die insbesondere zur Erzeugung der Schaltbewegung des Schaltfingers alternativ in der Gestaltung gemäß Fig. 9a bis 21 verwendet werden kann (für beide Variationen);

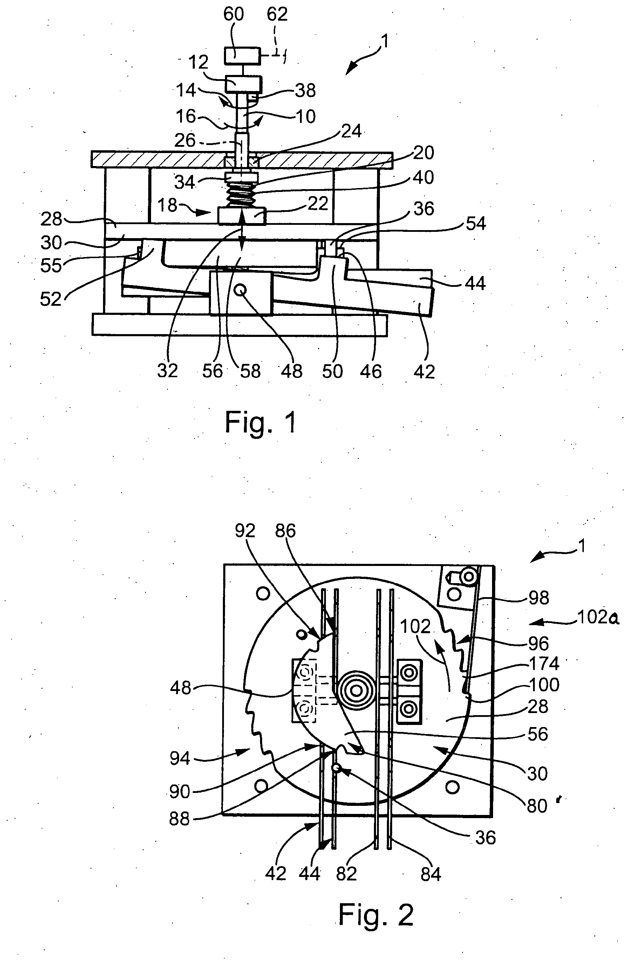

Fig. 1 zeigt eine beispielhafte erfindungsgemäße Betätigungsvorrichtung 1 in schematischer Darstellung.

Die in Fig. 1 gezeigte Betätigungsvorrichtung 1 kann beispielsweise eine Betätigungsvorrichtung sein, mittels welcher in einem Kraftfahrzeug-Getriebe Gänge gewechselt werden können bzw. das Wechseln von Gängen gesteuert werden kann.

Die Betätigungsvorrichtung 1 weist eine drehbar gelagerte Antriebswelle 10 auf, die hier die Motorausgangswelle 10 eines als Elektromotor 12 gestalteten Antriebseinrichtung ist. Diese Antriebs- bzw. Ausgangswelle 10 kann mittels des Elektromotors 12 wahlweise um ihre Längsachse in einer ersten Richtung gedreht werden, die schematisch durch den Pfeil 14 angedeutet ist, oder in einer zweiten Drehrichtung, die schematisch durch den Pfeil 16 angedeutet ist, und der ersten Drehrichtung entgegengesetzt ist. Der Elektromotor 12 kann entsprechend umschaltbar gestaltet sein, so dass die Antriebswelle in beiden Drehrichtungen - wahlweise - angetrieben werden kann.

Die Betätigungsvorrichtung 1 weist eine Mutter-Gewindespindel-Anordnung 18 auf. Diese Mutter-Gewindespindel-Anordnung 18 weist eine Gewindespindel 20 auf, sowie eine Mutter 22, die mit ihrem Gewinde in die Gewindespindel 20 eingreift. Die Mutter 22 und die Gewindespindel 20 können mit einem Rechtsgewinde versehen sein oder mit einem Linksgewinde. In der Gestaltung gemäß Fig. 1 ist die Gewindespindel 20 im Kraftfluss der Antriebswelle 10 zugewandt bzw. näher gelegen, und die Gewindemutter 22 im Kraftfluss der Antriebswelle 10 abgewandt bzw. entfernter gelegen. Das der Antriebswelle 10 zugewandte Teil der Mutter-Gewindespindel-Anordnung 18, also in der Gestaltung gemäß Fig. 1 die Gewindespindel 20, kann im Betrieb der Betätigungsvorrichtung 1 von der Antriebswelle drehend angetrieben werden, und zwar rein drehend. Es können geeignete Lagermittel 24 vorgesehen sein, welche auch so gestaltet sein können, dass die Gewindespindel 20 bzw. dass der Antriebswelle 10 zugewandte Teil der Mutter-Gewindespindel-Anordnung 18 axial fest und drehbeweglich lagert.

In der beispielhaften Gestaltung gemäß Fig. 1 ist das der Antriebswelle 10 in Kraftfluss zugewandte Teil der Mutter-Gewindespindel-Anordnung 18, also in der Gestaltung gemäß Fig. 1 die Gewindespindel 20, drehfest mit der Antriebswelle 10 gekoppelt. Zusätzlich kann diese Kopplung auch axialfest gestaltet sein.

In der Gestaltung gemäß Fig. 1 sind die Längsachsen der Motorausgangswelle bzw. Antriebswelle 10 sowie der Spindel 20 und der Mutter 22 im Wesentlichen konzentrisch. Diese Längsachsen sind bzw. die axiale Richtung ist schematisch durch die gestrichelte Linie 26 angedeutet.

Das im Kraftfluss der Antriebswelle 10 abgewandte Teil Mutter-Gewindespindel-Anordnung 18, also in der Gestaltung gemäß Fig. 1 die Mutter 22, ist fest, hier dreh- und axialfest mit einer Stelleinrichtung 28 gekoppelt.

Die Stelleinrichtung 28 weist in der Gestaltung gemäß Fig. 1 ein Steuerelement in Form einer Platte 30 auf, die auch als Wählplatte bzw. Schaltplatte bzw. Umschaltplatte oder Steuerelement bezeichnet wird. Wie durch den Doppelpfeil 32 angedeutet ist, kann die Axialstellung der Platte 30 bzw. der Stelleinrichtung 28 in beiden Orientierungen verändert werden. Diese Axialstellung bzw. die zugeordnete Axialrichtung kann die Axial- bzw. Längsrichtung der Antriebswelle 10 und/oder der Gewindespindel 20 und/oder der Mutter 22 und/oder der Stelleinrichtung 28 sein. In der Gestaltung gemäß Fig. 1 fällt die Axialrichtung der Stelleinrichtung 28 mit der Axialrichtung 26 der Mutter 22 zusammen.

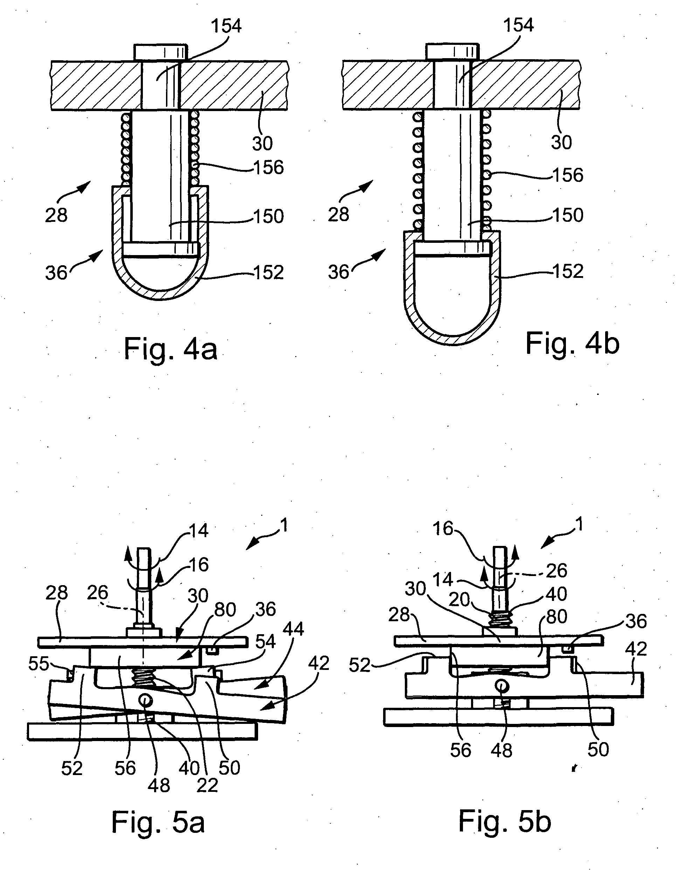

In der Gestaltung gemäß Fig. 1 kann also die Axialstellung der Mutter 22 sowie der Stelleinrichtung 28 verändert bzw. verstellt werden. In der einen Orientierung der Axialrichtung bzw. Längsrichtung 26 wird diese Axialverstellbarkeit der Mutter 22 bzw. der Stelleinrichtung 28 durch einen Anschlag 34 begrenzt. Wenn die Antriebswelle 10 in der ersten Drehrichtung 14 angetrieben bzw. bewegt wird, wandert die Mutter 22 bzw. die Stelleinrichtung 28, sofern ein Anliegen am Anschlag - wie in Fig. 1 gezeigt - noch nicht gegeben ist, in Richtung des Anschlags 34 bzw. wird dieser Anschlag 34 angefahren. Wenn der Anschlag bzw. die Anschlagposition erreicht ist, bzw. in der Gestaltung gemäß Fig. 1 die Mutter 22 an dem Anschlag 34 anschlägt, bewirkt dieser Anschlag 34, dass bei fortgesetzter Drehung der Antriebswelle 10 in der ersten Drehrichtung 14 die Axialstellung der Mutter 22 bzw. der Stelleinrichtung 28 relativ zur Spindel 20 nicht weiter verändert wird, da der Anschlag eben diese weitere Relativbewegung in Axialrichtung 26 verhindert bzw. blockiert. Sofern allerdings die Antriebswelle 10 weiter in erster Drehrichtung 14 angetrieben wird, wird die Mutter 22 sowie die Stelleinrichtung 28 im Wesentlichen rein rotatorisch bewegt, bzw. um die Drehachse 26 geschwenkt bzw. gedreht. In Bezug auf diese Drehachse 26 ist die Stelleinrichtung 28 rotationsasymmetrisch gestaltet. In der Gestaltung gemäß Fig. 1 ist dies so, dass ein bezüglich der Drehachse 26 rotationsasymmetrisch angeordnetes Stellelement 36 vorgesehen ist. Dieses Stellelement 36 ist in der Gestaltung gemäß Fig. 1 ein Bolzen oder ein Vorsprung oder ein Stift, der in der der Antriebsachse 10 abgewandten Richtung von der Platte 30 vorsteht, und an dieser gehalten wird. Es kann, wie auch anhand der Fig. 4a und 4b erläutert wird, eine Feder vorgesehen sein, welche den Bolzen 36 belastet und sich gegebenenfalls an der Platte 30 abstützt.

In der zuvor angesprochenen Anschlagsposition, in welcher die Stelleinrichtung bei in einer ersten Drehrichtung 14 weiter gedrehter Antriebswelle nicht weiter axial entlang der Spindel wandern kann, und diese Stelleinrichtung drehend mitgenommen wird, kann die Position des Stellelements 36 in Drehrichtung eingestellt werden, indem die Antriebswelle entsprechend in der ersten Drehrichtung 14 gedreht wird. Es kann eine Wegerfassungseinrichtung 38 vorgesehen sein, die beispielsweise im Bereich des Motors 12 bzw. der Antriebswelle 10 angeordnet ist, und die Drehstellung ermitteln kann. Es kann insbesondere auch vorgesehen sein, dass in der angesprochenen Anschlagsposition eine Drehstellung gegeben ist, bei der die Stelleinrichtung auch in der anderen Orientierung der Axialrichtung blockiert wird bzw. bei in Richtung der zweiten Drehrichtung 16 Belastung der Antriebswelle 10 nicht oder nicht unmittelbar in der vom Anschlag weggerichteten Richtung bewegt werden kann bzw. nicht nach unten bewegt werden kann. Dadurch dass bei einer Drehstellung eine Bewegung nach unten bzw. vom Anschlag weg gerichtete Beweglichkeit der Stelleinrichtung 28 bzw. der Platte 30 verhindert bzw. gesperrt wird, kann die Wegerfassungseinrichtung 38, die insbesondere einen inkrementalen Wegaufnehmer aufweist bzw. ein solcher ist, abgeglichen werden. Hierdurch kann beispielsweise, zumindest in dem Fall, dass die Wegerfassungseinrichtung 38 als inkrementaler Wegaufnehmer gestaltet ist bzw. einen solchen aufweist, ein zusätzlicher, insbesondere externer Sensor für das System vermieden werden, der die Drehstellung der Stelleinrichtung 28 bzw. der Platte 30 erfasst, wobei trotzdem die Drehstellung der Stelleinrichtung 28 bzw. der Platte 30 ermittelt werden kann. Dies kann beispielsweise von Bedeutung sein, wenn eine am Motor angeordnete Wegerfassungseinrichtung 38 bzw. ein oder mehrer dort angeordnete Sensoren, die Umdrehungen oder Drehzahl erfasst bzw. zählt, und hierüber die Drehstellung der Stelleinrichtung 28 bzw. der Platte 30 ermittelt wird, und wenn dabei der Sensor bzw. die Sensoren der Wegerfassungseinrichtung 38, beispielsweise aufgrund unterbrochener Stromversorgung oder aus anderen Gründen, die Positions- bzw. Stellungsinformation verliert. Beispielsweise in einem solchen Fall kann die Stelleinrichtung 28 bzw. die Platte 30 bzw. die Mutter 22 gesteuert - beispielsweise mittels eines Steuergeräts - an den Anschlag 34 gefahren werden, der in der Gestaltung gemäß Fig. 1 ein oberer Anschlag ist, und durch weitere Drehung der Antriebswelle 10 in der ersten Richtung in jede Stellung in Drehrichtung bewegt werden, - wobei insbesondere jeweils überprüft wird, ob bei dieser jeweiligen Drehstellung eine vom Anschlag weg gerichtete bzw. nach unten gerichtete Bewegung der Stelleinrichtung 28 möglich ist - bis die Drehstellung gefunden wird, in der die Stelleinrichtung 28 bzw. Platte 30 nicht nach unten bzw. in der vom Anschlag 34 weggerichteten Richtung bewegt werden kann. Dies kann beispielsweise so gemacht werden, dass die Antriebswelle in einer schnell wechselnden Hin- und Herbewegung bewegt wird, wobei sie die Hinbewegung in Richtung der ersten Drehrichtung 14 bzw. ein entsprechender Drehwinkel, etwas größer ist als die Herbewegung in Richtung der zweiten Drehrichtung 16, so dass die Stelleinrichtung bzw. die Platte 30 im Wesentlichen in jede Drehstellung bewegt wird, und dort überprüft wird, ob die Stelleinrichtung vom Anschlag weg - in der Fig. 1 nach unten - bewegt werden kann. Wenn die Stelle gefunden ist, bei der eine solche Abwärtsbewegung bzw. eine solche vom Anschlag weggerichtete Bewegung nicht möglich ist, kann vorgesehen sein, dass der Sensor bzw. Inkrementalwegaufnehmer - insbesondere in seine Nullposition - resettet wird und neu zu zählen beginnt.

Die Wegerfassungseinrichtung 38 kann so sein, dass sie genau einen inkrementalen Wegaufnehmer aufweist, der sowohl die Stellung der Stelleinrichtung 28 bzw. Platte 30 in Wählrichtung, als auch die Stellung der Stelleinrichtung 28 bzw. Platte 30 in Schaltrichtung erfassen kann. Insbesondere ist die Wegerfassungseinrichtung 38 so, dass sie die Drehstellung der Stelleinrichtung 28 ermitteln kann. Die Wegerfassungseinrichtung 38 kann auch so sein, dass sie, insbesondere auch zusätzlich, die Axialstellung der Stelleinrichtung 28 ermitteln kann.

In der Gestaltung gemäß Fig. 1 ist der Anschlag 34 dreh- und axialfest mit der Spindel 20 verbunden.

In der Gestaltung gemäß Fig. 1 ist der Anschlag 34 eine Durchmesserverdickung der Spindel, deren Außendurchmesser größer ist, als der Außendurchmesser des Gewindes 40 der Spindel 20, und somit eine axiale Anschlagfläche aufweist.

Wie erwähnt, kann bei einer Betätigungsvorrichtung 1 gemäß Fig. 1 durch ein weiteres Verdrehen bzw. Antreiben der Antriebswelle 10 in der ersten Drehrichtung 14 die "Wählbewegung" zum Wählen eines in der Getriebeeinrichtung einzulegenden Ganges vorgenommen werden.

In der Gestaltung gemäß Fig. 1 ist ferner, was dort nicht gezeigt ist, aber beispielhaft anhand der folgenden Figuren noch erläutert werden wird, eine, insbesondere einseitig wirkende, Verdrehsperre bzw. ein, insbesondere. einseitig wirkender, Freilauf vorgesehen, welcher in wenigstens zwei Drehstellungen der Stelleinrichtung in einer Halteposition ist und dabei jeweils ein Drehen bzw. weiteres Drehen der Stelleinrichtung 28 um die Drehachse der Stelleinrichtung 28 verhindert, wenn die Antriebswelle 10 in der zweiten Drehrichtung 16 angetrieben wird. Hierbei kann gegebenenfalls vorgesehen sein, dass nach dem Wählen mittels des Drehens der Antriebswelle 10 in der ersten Drehrichtung 14 bei einem sich hieran anschließenden Drehen der Antriebswelle 10 in der entgegen gesetzten, nämlich zweiten Drehrichtung 16 die Stelleinrichtung zunächst entsprechend dieser Belastung durch die Antriebswelle 10gedreht bzw. geschraubt wird, bis eine Halteposition der Verdrehsperre bzw. des Freilaufes erreicht ist.

Diese Haltepositionen des Freilaufes sind insbesondere so, dass bei weiterem Drehen der Antriebswelle in der zweiten Drehrichtung 16 mittels dieses Freilaufes eine Drehbewegung der Mutter 22 bzw. der Stelleinrichtung 28 verhindert wird, so dass die Stelleinrichtung 28 im Wesentlichen rein translatorisch, ohne gedreht zu werden, in Richtung der Schaltelemente 42, 44 bewegt wird.

Der Freilauf bzw. die Verdrehsperre ist so, dass er bzw. sie, nachdem sie in die Haltestellung gebracht wurde, bei der Schaltbewegung in Richtung "eingelegter Gang" über den gesamten axialen Verstellbereich der Stelleinrichtung und bei einer Drehbewegung der Antriebswelle 10 in der zweiten Drehrichtung 16 ein Verdrehen der Stelleinrichtung verhindert bzw. die Drehstellung dieser Stelleinrichtung: hält.

Bei dieser Gestaltung wird sichergestellt, dass das Stellelement 36 oder ein entsprechender Eingriffsbereich der Stelleinrichtung 28 so bewegt wird, dass bei fortgesetzter Drehung der Antriebswelle 10 in der zweiten Richtung der gewählte Gang in der Getriebeeinrichtung geschaltet wird, bzw. dass diesem Gang bzw. dem Einlegen des Gangs zugeordnete Stellelement 42 bzw. der Eingriffsbereich 46 dieses Stellelements 42 entsprechend belastet wird, und das Schalten des Ganges bzw. entsprechende Synchronisierung bewirkt wird.

In der Gestaltung gemäß Fig. 1 sind die Stellelemente 42, 44 jeweils Schwenkhebel, die jeweils um eine Schwenkachse 48 schwenkbar gelagert sind. Die Eingriffsbereiche 50, 52, 54, 55 der Schwenkhebel 42 werden in der Gestaltung gemäß Fig. 1 jeweils von Vorsprüngen gebildet, die von diesen Schwenkhebeln 42 im Wesentlichen in Richtung der Stelleinrichtung 28 vorstehen. Wie in Fig. 1 gezeigt ist, ist dort vorgesehen, dass das Stellelement 36 den Eingriffsbereich 50 des Schwenkhebels 42 belastet, und dort nach unten drückt. Ferner kann dieser Figur entnommen werden, dass dadurch der Schwenkhebel 42 auf der einen Seite der Drehachse, nämlich in Fig. 1 rechts der Drehachse, nach unten ausgelenkt ist. Mit dieser nach unten ausgelenkten Stellung korrespondiert das Einlegen eines vorbestimmten, diesem Schwenkhebel und dieser Schwenkstellung zugeordnetem Ganges in der Getriebeeinrichtung.

Der Schwenkhebel 44 ist in Fig. 1 in einer Neutralstellung gezeigt. Diese Neutralstellung ist so, dass dort weder durch den auf der einen Seite der Schwenkachse angeordneten Teilschwenkhebel, noch durch den auf der anderen Seite der Schwenkachse angeordneten Teilschwenkhebel so ausgelenkt ist, dass ein diesen Schwenkhebelbereichen zugeordneter Gang in der Getriebeeinrichtung eingelegt ist.

Es können Rastierungen oder dergleichen vorgesehen sein, welche einen eingelegten Gang in dieser eingelegten Stellung halten, solange dieser Gang nicht aktiv bzw. gewollt wieder ausgelegt wird.

Die Betätigungsvorrichtung 1 weist eine Interlock-Einrichtung bzw. eine Zusatzstelleinrichtung 56 auf. Diese Zusatzstelleinrichtung 56 ist so, dass sie vorbestimmte geschaltete Gänge herausnimmt, bevor ein gewählter Gang geschaltet bzw. in diesem Zusammenhang im Getriebe synchronisiert wird bzw. sicherstellt, dass die vorbestimmten Gänge nicht geschaltet sind. Die Zusatzstelleinrichtung 56 kann beispielsweise eine Platte 80 aufweisen oder sein; diese Platte kann beispielsweise eben sein, oder nicht eben. Die Zusatzstelleinrichtung 56 kann alternativ oder ergänzend einen Kragen 58 aufweisen. Ein solcher Kragen kann beispielsweise auch ein vorspringendes zylindrisches oder teilzylindrisches Teil sein, wobei insbesondere vorgesehen ist, dass die zentrale Längsachse im Wesentlichen konzentrisch oder parallel zur Längsachse 26 der Stelleinrichtung 28 angeordnet ist. Es kann vorgesehen sein, dass die Zusatzstelleinrichtung 56 mit der Stelleinrichtung 28 fest verbunden ist, und zwar insbesondere dreh- und axialfest. Dies kann beispielsweise so sein, dass an eine Platte 30 der Stelleinrichtung 28 ein vorstehender Kragen 56 bzw. einer vorstehende Wand angeformt ist.

Die Zusatzstelleinrichtung 56 erstreckt sich insbesondere auf der der Schwenkhebelanordnung 42, 44 zugewandten Seite der Stelleinrichtung 28. Die Zusatzstelleinrichtung 56 kann, wie bereits angedeutet, vorbestimmte Schaltelemente bzw. Schwenkhebel 42, 44 in eine Neutralposition bewegen bzw. sicherstellen, dass diese in einer Neutralstellung sind.

In der in Fig. 1 gezeigten Stellung ist dies beispielsweise so, dass der Schwenkhebel 44 in einer Neutralstellung ist, die dort eine im Wesentlichen waagerecht ausgerichtete Position des Schwenkhebels 44 ist. Die Zusatzstelleinrichtung 56 bzw. dessen Kragen 58 greift in der Darstellung gemäß Fig. 1 zwischen zwei Vorsprünge 54, 55 des Schwenkhebels 44 ein. Dies kann insbesondere so sein, dass der Schwenkhebel 44 hierdurch gegen ein Schwenken gesichert ist.

Die Betätigungseinrichtung 1 weist genau einen Elektromotor 12 auf. Dieser Elektromotor kann sämtliche Bewegungen und/oder Betätigungsbewegungen der Betätigungseinrichtung 1 steuern bzw. bewirken.

Wenn beispielsweise, ausgehend von der in Fig. 1 gezeigten Stellung, bei der der Bolzen bzw. Zapfen 36 in den Schwenkhebel 42 eingreift, so dass die auf der einen Seite der Schwenkachse 48 gelegene Schwenkhebelseite nach unten gedrückt wird, und ein entsprechender Gang in der Getriebeeinrichtung eingelegt wird, die Antriebswelle 10 in der ersten durch den Pfeil 14 angedeuteten Drehrichtung bewegt wird, wandert die Spindelmutter 22 entlang der Spindel 20 in Richtung des Anschlags 34, also in der Gestaltung gemäß Fig. 1 nach oben. Die mit dieser Spindelmutter 22 fest gekoppelte Stelleinrichtung 28 sowie die ebenfalls mit der fest mit der Spindelmutter 22 gekoppelte Zusatzstelleinrichtung 56 folgt dieser Bewegung. Dabei wird der Schwenkhebel 42 bzw. ein hiermit gekoppeltes Bauteil mittels einer Rastierung oder dergleichen so gehalten, dass der Gang eingelegt bleibt. Der Kragen 58 wandert aus seiner Eingriffstellung zwischen den Vorsprüngen 54, 55 heraus. Wenn bei fortgesetzter Bewegung der Antriebswelle 10 in Richtung der ersten Drehrichtung 14 die Mutter 22 den Anschlag 34 erreicht und an diesen anschlägt, wird eine weitere Axialverstellung der Mutter 22 bzw. der Stelleinrichtung 28 gegenüber der Spindel 20 behindert bzw. blockiert. Die nach wie vor drehend von der Antriebswelle 10, die in ersten Drehrichtung 14 bewegt wird, angetriebene Spindel 20 wird weiter in Drehrichtung belastet und bewegt. Über die zwischen der Spindel 20 und der Mutter 22 angeordnete Gewindepaarung wird die Mutter 22 ebenfalls belastet.

Da die Mutter 22 nicht weiter in axialer Richtung verstellt werden kann, weil sie nämlich am Anschlag 34 anliegt, wird die Mutter drehend mit der Spindel bewegt, und zwar rein rotatorisch. Dieser Bewegung folgt die Stelleinrichtung 28 sowie die Zusatzstelleinrichtung 56 bzw. der Kragen 58. Die Verdrehung kann hierbei solange fortgesetzt werden, bis eine Drehstellung der Stelleinrichtung 28 angefahren ist, die so ist, dass bei anschließender Drehung der Welle 10 in der Gegendrehrichtung 16 bzw. der zweiten Drehrichtung 16 die Stelleinrichtung 28 so wieder vom Anschlag weg bzw. in Richtung der Stellelemente 42, 44 bewegt wird, dass diese Stelteinrichtung auf einen solchen Eingriffsbereich der Schaltelemente bzw. Schwenkhebel 42 , 44 zu bewegt wird, welcher betätigt werden soll, um im Getriebe zu synchronisieren und/oder in den neuen Gang zu schalten.

In bereits oben skizzierter und auch im folgenden noch beispielhaft anhand anderer Figuren erläuterter Weise kann dabei eine Verdrehsicherung bzw. ein Freilauf vorgesehen sein, welcher bewirkt, dass zur Stelleinrichtung, zumindest sobald eine Haltestellung erreicht ist, im Wesentlichen rein translatorisch, also ohne sich zu drehen, bei fortgesetzter Verdrehung der Ausgangswelle 10 in der zweiten Drehrichtung 16 in Richtung der Schaltelemente bewegt wird. Bevor allerdings das Stellelement 36 in einem entsprechenden Eingriffsbereich des ausgewählten Ganges bzw. des entsprechenden Schaltelements eingreift, bewirkt die Zusatzstelleinrichtung 56 bzw. deren Kragen 58 zunächst, dass ungewünschte bzw. vorbestimmte Gänge ausgelegt werden bzw. sichergestellt wird, dass solche ausgelegt sind. Bei einem automatisierten Schaltgetriebe können dies insbesondere sämtliche Gänge sein, wobei auf einen entsprechenden Eingriff der Zusatzstelleinrichtung in den Schwenkhebel verzichtet werden kann, welcher mittels des Stellelements zum Schalten des neuen Ganges betätigt werden soll.

Es kann aber auch, beispielsweise bei einem Parallelschaltgetriebe (PSG) vorgesehen sein, dass mittels der Zusatzstelleinrichtung 56 nur ein Teil der Gänge ausgelegt wird bzw. sichergestellt wird, dass ein Teil der Gänge ausgelegt ist. Dies kann bei einem Parallelschaltgetriebe beispielsweise so sein, dass dafür gesorgt wird, dass alle geraden Gänge ausgelegt sind bzw. werden, wenn der gewählte bzw. einzulegende Gang ein gerader ist, und alle ungeraden Gänge ausgelegt sind bzw. werden, wenn der gewählte bzw. einzulegende Gang ein ungerader ist.

Wenn beispielsweise ausgehend von der in Fig. 1 gezeigten Stellung nach dem Wählen ein neuer Gang eingelegt werden soll und dabei in den Schwenkhebel 44 betätigend zum Synchronisieren und Einlegen des neuen Ganges betätigend eingegriffen werden soll, kann der Schwenkhebel 42 zunächst in eine Neutralstellung bewegt werden. Dazu kann der Kragen 56 den in Richtung der Stelleinrichtung 28 bzw. Zusatzstelleinrichtung 56 weiter vorstehenden Vorsprung 52 des Schwenkhebels 42 zunächst belasten und runterdrücken. Durch dieses Runterdrücken würde dann der der Schwenkachse zugewandte Endabschnitt des Vorsprungs beim Verschwenken zunehmend nach außen bewegt, so dass eine Stellung erreicht wird, bei welcher der Kragen 56 zwischen die Vorsprünge 50, 52 eingreifen kann. Bei weiterer Drehung der Antriebswelle 10 in Richtung der zweiten Drehrichtung 16 würde dann die Zusatzschwenkeinrichtung 56 bzw. der Kragen 58 axial weiter zwischen die Vorsprünge 50, 52 wandern, wobei im Wesentlichen gleichzeitig das Stellelement 36 weiter in Richtung des Eingriffsbereiches wandert, in den es eingreifen soll, um den gewählten Gang zu schalten. Wenn dann dieser Eingriff erfolgt, wird der entsprechende Schwenkhebel, also hier beispielsweise der Schwenkhebel 44, im Bereich des Eingriffsbereichs nach oben bzw. unten ausgelenkt, so dass ein entsprechender Gang in der Getriebeeinrichtung geschaltet wird.

Die Betätigungsvorrichtung 1 weist ein elektronisches Steuergerät 60, wie beispielsweise elektronisches Getriebesteuergerät, auf. Dieses elektronische Steuergerät 60 steht mit dem Elektromotor 12 in Signalverbindung und kann diesen steuern. Insbesondere kann dies elektronische Steuergerät 60 den Elektromotor 12 und somit die Antriebswelle 10 wahlweise in der ersten Drehrichtung 14 oder der zweiten Drehrichtung 16 ansteuern bzw. zwischen diesen Drehrichtungen 14, 16 entscheiden. Das elektronische Steuergerät 60 kann, wie schematisch durch die gestrichelte Linie 62 angedeutet ist, Signale empfangen und gegebenenfalls aussenden. Solche Signale können ebenfalls zu Steuerungszwecken verwendet werden. Beispielsweise können dem elektronischen Steuergerät auf diese Weise Betriebskennwerte eines Kraftfahrzeugs oder Signale von einem Wählhebel oder dergleichen angezeigt werden.

Die Stelleinrichtung 28 der in Fig. 1 gezeigten Betätigungseinrichtung 1 kann von der Antriebseinrichtung bzw. dem Elektromotor 12 belastet und bewegt werden, und zwar rotatorisch sowie translatorisch bzw. in Axialrichtung 26. Sowohl die rotatorische, als auch die translatorische bzw. axiale Bewegung der Stelleinrichtung kann mittels der Ausgangswelle 10 bzw. einer Bewegung der Ausgangswelle 10 erzeugt werden. Es existiert bei dieser Gestaltung eine Stellung, nämlich diejenige, bei der die Mutter 22 am Anschlag 34 anschlägt, bei der die Dreh- bzw. Schwenkstellung der Stelleinrichtung 28 im Wesentlichen unabhängig von einer axialen bzw. in dieser Richtung gelegenen translatorischen Bewegung veränderbar ist. Mittels der Betätigungsvorrichtung 1 können mehrere Gangstufen, denen unterschiedliche Übersetzungen zugeordnet sind, einer Getriebeeinrichtung geschaltet bzw. gewechselt werden. Die Stellbewegungen hierfür, zu denen insbesondere das Verschwenken der Schwenkhebel 42, 44 in der Fig. 1 gezeigten Gestaltung gehört, können mittels dieser Betätigungseinrichtung 1 erzeugt werden, und insbesondere mittels genau eines Elektromotors 12. Es kann in der Gestaltung gemäß Fig. 1 aus einem Gang unmittelbar, also ohne dass ein anderer Gang zwischendurch eingelegt wird, in drei andere Gangstufen geschaltet werden. Dies kann beispielsweise so sein, dass in bereits oben skizzierter Weise die Stelleinrichtung 28, ausgehend von der in Fig. 1 gezeigten Stellung durch ein Drehen der Antriebswelle 10 in der ersten Drehrichtung bis zur Anschlagstellung bewegt und dann mittels eines weiteren Verdrehens der Antriebswelle 10 in der ersten Drehrichtung 14 verdreht wird. Dies Verdrehen kann so sein, dass die Stelleinrichtung 28 so gedreht wird, dass bei anschließendem Drehen der Antriebswelle 10 in der zweiten Drehrichtung 16 die Stelleinrichtung 28 bzw. das Stellelement 36-bewegt wird, bis sie bzw. er den Vorsprung 52 belastet und somit das Einlegen des entsprechenden Ganges in dem Kraftfahrzeuggetriebe bewirkt. Mittels entsprechender bzw. entsprechend abweichender Drehung der Stelleinrichtung 28 in der Anschlagstellung, kann ebenso bzw. alternativ - jeweils ausgehend von der Stellung bei der das Stellelement den Eingriffsbereich 50 belastet, die Stelleinrichtung so gedreht bzw. eingestellt werden, dass sie nach dem Wählen und nach dem entsprechenden Verstellen der Antriebswelle 10 in der zweiten Drehrichtung 16 den Vorsprung 55 belastet, oder, ebenfalls alternativ, den Vorsprung 54. Es kann also ausgehend von einem eingelegten Gang wahlweise in einen von drei anderen Gängen geschaltet werden, ohne dass zwischendurch eine Zwischengangstufe eingelegt werden muss.

Dies lässt sich dem Gedanken der Erfindung folgend auch für mehr als die hier dargestellten Gänge realisieren.

Mit der vorstehenden, beispielhaften Erläuterung wurde auch gezeigt, dass der bzw. die Schwenkhebel 42, 44 mittels der Stelleinrichtung in beiden Schwenkrichtungen - wahlweise - belastet bzw. betätigt werden kann.

Es können beispielsweise mittels einer erfindungsgemäßen Kraftfahrzeuggetriebe-Betätigungseinrichtung bei Gangwechselvorgängen bzw. beim Wechseln von einem Ausgangsgang in einen Zielgang die Wählfunktion bzw. das Bewegen in Wählgassenrichtung sowie die Schaltfunktion bzw. das Bewegen in Schaltgassenrichtung bzw. das Schalten bzw. Einlegen von Gängen und Auslegen von Gängen betätigt bzw. gesteuert werden, wobei ermöglicht wird, dass lediglich ein Elektromotor 12 für diese Funktionalitäten vorgesehen. Es muss allerdings nicht ein Elektromotor 12 vorgesehen sein. Es kann beispielsweise auch eine andersgeartete Antriebseinrichtung vorgesehen sein.

Fig. 2 zeigt eine beispielhafte Gestaltung einer erfindungsgemäßen Betätigungsvorrichtung in schematischer, teilweiser Ansicht.

Gezeigt ist in Fig. 2 insbesondere eine Draufsicht auf eine Stelleinrichtung 28 sowie eine Zusatzstelleinrichtung 56.

Die entsprechend der in Fig. 2 gezeigte Gestaltung kann auch bei der in Fig. 1 gezeigten Gestaltung gegeben sein. Während allerdings die Zusatzstelleinrichtung 56 anhand der Fig. 1 als eine Art vorstehender Kragen beschrieben wurde, ist diese Zusatzstelleinrichtung in der Gestaltung gemäß Fig. 2 als Platte bzw. Interlock-Platte 80 gestaltet. Bei einer solchen Platte kann auch vorgesehen sein, dass über einen nicht vorstehenden Kragen Gänge ausgelegt werden. Ferner ist die Zusatzstelleinrichtung 56 in der Gestaltung gemäß Fig. 2 als eine Zusatzstelleinrichtung 56 gestaltet, die beispielsweise für ein Parallelschaltgetriebe verwendet werden kann. Auch dies kann, muss allerdings nicht in der Gestaltung gemäß Fig. 1 gegeben sein.

In der Gestaltung gemäß Fig. 2 sind vier Schwenkhebel 42, 44, 82, 84 gezeigt. Diese Schwenkhebel 42, 44, 82, 84 können jeweils zum Schalten eines Ganges, in der einen oder aus der anderen Schwenkrichtung - alternativ - aus einer Neutralstellung ausgelenkt werden, so dass acht Gänge geschaltet werden können. Es kann auch vorgesehen sein, dass mittels einem oder mehreren Schwenkhebeln nicht zwei Gänge geschaltet werden kann, sondern nur ein Gang.

In der Gestaltung gemäß Fig. 1 ist die Interlock-Platte 80 als eine kreissegmentabschnittförmige Platte gestaltet. Diese Platte 80 ist in dieser Gestaltung so, dass diese Zusatzstelleinrichtung 56 nicht auf die Schwenkhebel 82, 84 wirkt. Es kann beispielsweise vorgesehen sein, dass den Schwenkhebeln 42, 44 gerade Gänge zugeordnet sind, und den Schwenkhebeln 82, 84 ungerade oder umgekehrt.

In Fig. 2 ist ein Stellelement 36 gezeigt. Aus der Stellung dieses Stellelements 36 ist ersichtlich, dass ein Wählen so durchgeführt wurde, dass dieses Stellelement 36 den Schwenkhebel 44 zum Schalten eines Ganges betätigen bzw. belasten kann, und zwar den in Fig. 2 unterhalb der Schwenkachse 48 angeordneten Teil dieses Schwenkhebels 44. Da hierbei der auf der anderen Seite der Schwenkachse 48 angeordnete Teil des Schwenkhebels 44 in Richtung der Stelleinrichtung 28 bzw. der Zusatzstelleinrichtung 56 bewegt wird, ist die Interlock-Platte 80 bzw. die Zusatzstelleinrichtung 56 so angeordnet, dass seitlich ein Spiel bzw. Abstand zwischen dem Teil des Schwenkhebels 44 angeordnet ist, der bei einer Belastung mittels des Stellelement 36 in Richtung der Zusatzstelleinrichtung bewegt wird, und dem an diesem Bereich anliegenden Abschnitt der Platte 80. Die Platte 80 greift allerdings zwischen die Interlock-Punkte bzw. Vorsprung oder Vorsprungkanten 88, 90, 92 ein, die am Schwenkhebel 42 bzw. 44 vorgesehen sind, so dass für diese Abschnitte ein Verschwenken in Richtung der Stelleinrichtung 28 verhindert wird. Die Platte bzw. Wählplatte 30 der Stelleinrichtung 28 ist auf ihrem Außenumfang mit Profilierungen 94, 96 versehen, die Profilierungserhöhungen und Profilierungsvertiefungen aufweisen. Ein Rastelement 98 ist ferner vorgesehen, welches an einer Profilierung 96 anliegt. Das Rastelement 98 ist hier im Wesentlichen plattenförmig gestaltet, und erstreckt sich über einen, vorzugsweise den gesamten Axialverstellungsbereich der Stelleinrichtung, der senkrecht zur Bildebene gelegen ist. Wie in Fig. 2 dargestellt, greift das Rastelement 98 in die Profilierungserhöhung 100 ein. Anhand der Gestaltung der Profilierungserhöhung 100 und des Eingriffs des Rastelements kann erkannt werden, dass in dieser Haltestellung die Stelleinrichtung 28 gegen Verdrehen in Richtung des Pfeils 102 gehalten ist, bzw. entsprechend gesichert ist. In Gegenrichtung kann die Stelleinrichtung 28, zumindest nach Überwindung einer gewissen Reib- bzw. Haltekraft, gedreht werden.

Die Richtung des Pfeils 102a entspricht im Wesentlichen der Richtung, in welcher die Stelleinrichtung 28 belastet wird, wenn die Antriebswelle 10 in einer zweiten Drehrichtung bewegt wird.

Für jeden schaltbaren Gang ist eine Profilierungserhöhung vorgesehen. Wie Fig. 2 entnommen werden kann, sollen dort acht Profilierungserhöhungen vorgesehen werden, in welche jeweils das Rastelement 98 eingreifen kann, sowie acht schaltbare Gänge.

Mittels dieser, das Rastelement 98 aufweisenden Verdrehsicherung bzw. diesem Freilauf 102 kann bewirkt werden, dass das Stellelement 36 jeweils, insbesondere ohne rotatorisch bewegt zu werden, nach dem Wählen auf den entsprechenden Eingriffsbereich zum Schalten eines Ganges bewegt wird, und zwar insbesondere rein axial bewegt wird.

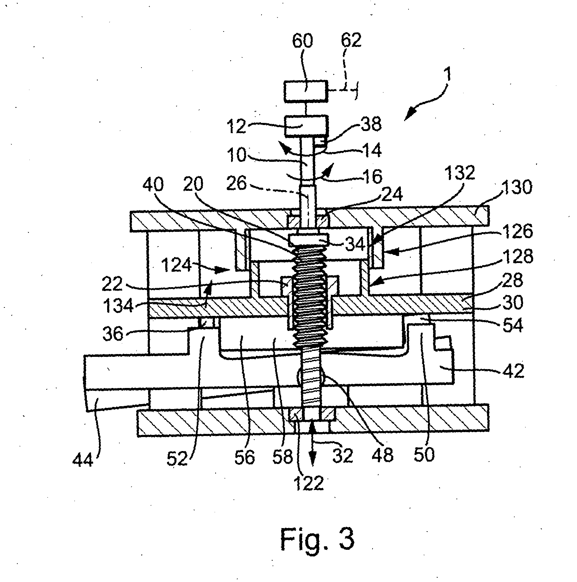

Fig. 3 zeigt eine beispielhafte Gestaltung einer erfindungsgemäßen Betätigungsvorrichtung 1.

In der Gestaltung gemäß Fig. 3 ist neben dem Gewinde 40 der Spindel ferner das Gewinde 120 der Mutter 22 gezeigt, wobei in das Gewinde 40 die Spindel 20 eingreift. In der Gestaltung gemäß Fig. 3 greift das Stellelement 36 der Stelleinrichtung 28 in den Schwenkhebel 44 ein, so dass dieser in der Gestaltung gemäß Fig. 3 links nach unten ausgelenkt ist, und ein entsprechender Gang eingelegt ist.

In Fig. 3 ist ferner ein weiteres Lager 122 der Spindel 20 gezeigt.

In der Gestaltung gemäß Fig. 3 ist ferner eine Führungseinrichtung 124 bzw. eine Einrichtung, welche eine seitliche Belastung der Gewinde 40, 120 abfängt bzw. mindert, gezeigt.

Die Führungseinrichtung 124 weist eine erste Schulter sowie eine zweite Schulter auf. Die zweite Schulter 128 ist fest mit der Stelleinrichtung 28 verbunden und erstreckt sich in den Schaltelementen 42, 44 abgewandter Richtung von dieser Stelleinrichtung 28 bzw. einer Platte 30 dieser Stelleinrichtung 28. Die Schulter 128 kann beispielsweise ein zylindrischer Wandabschnitt sein.

Die Schulter 126 ist an einem Gehäuse 130 vorgesehen, und insbesondere so, dass sich diese Schulter 126 von einer Innenoberfläche einer Gehäusewand in das Gehäuseinnere erstreckt. Die Schulter 126 ist ebenfalls ein im Wesentlichen zylindrischer Wandabschnitt. Ferner kann eine Buchse, wie Gleitlagerbuchse 132 vorgesehen sein, welche radial zwischen den Schultern 126, 128 angeordnet ist. Es kann vorgesehen sein, dass die Schultern 126, 128 sowie die Buchse 132 konzentrisch angeordnet sind. Es kann auch vorgesehen sein, dass die (Hohl)Zylinderelemente bzw. Schultern 126, 128 - und gegebenenfalls die Buchse 132 - konzentrisch zur Spindel 20 bzw. zur Mutter 22 angeordnet sind. Die Schultern greifen so ineinander ein bzw. sind so ineinander gesteckt, dass die Stelleinrichtung 28 sich am Gehäuse 130 - gegebenenfalls über die Buchse - abstützen kann, und zwar insbesondere senkrecht zur Axialrichtung der Schultern bzw. in Radialrichtung der Schultern, wobei auch Momente aufgefangen werden können, und zwar insbesondere solche, die um eine Achse wirken, die senkrecht zur Achse der Schultern ist.

Durch diese Führungseinrichtung 124 kann eine Führungsfunktion übernommen werden, wobei diese insbesondere so ist, dass die Führung eine Axialbeweglichkeit und eine Drehbeweglichkeit gewährleistet. Wenn, beispielsweise durch den Eingriff des Stellelements 36 beim Schalten eines Ganges in der Getriebeeinrichtung entsprechend dem Pfeil 134 beispielsweise ein Moment wirkt, welches eine Belastung des Gewindes 40, 120 darstellen könnte, wird dieses Moment bzw. diese Belastung zumindest teilweise durch die Führungseinrichtung 124 abgefangen.

Anhand der Fig. 4a und 4b wird nun beispielhaft erläutert, wie eine Schaltelastizität in einer erfindungsgemäßen Betätigungsvorrichtung vorgesehen sein kann.

In den Fig. 4a und 4b ist jeweils in teilgeschnittener Ansicht die Stelleinrichtung 28 gezeigt, wobei die Stelleinrichtung gemäß den Fig. 4a und 4b jeweils eine Wähl- bzw. eine Schaltplatte bzw. Platte 30 aufweist, sowie ein Stellelement 36. Das Stellelement 36 ist als Art Bolzen gestaltet und weist ein erstes Teil 150 auf sowie ein zweites Teil 152. Das erste Teil 150 ist durch eine Öffnung 154 in der Platte 30 gesteckt und dort, beispielsweise mittels einer Schraube oder geeigneter Befestigungsmittel, fixiert. Das Teil 150 erstreckt sich in das Teil 152, das käfigartig gestaltet ist. Das Teil 150 ist innerhalb des Teils 152 gefangen, so dass es in beiden axialen Richtungen blockiert ist, zwischen diesen aber axial verschieblich gegenüber dem Teil 152 angeordnet ist.

Es ist eine Federeinrichtung 156 vorgesehen, die als Spiralfeder gestaltet ist. Diese Feder 156 stützt sich einerseits gegen die Platte 30, und andererseits gegen das Teil 152 des Stellelements 36 ab. Wenn nun im Rahmen des Einlegen eines Ganges das Stellelement 36 ein Schaltelement, wie beispielsweise Schwenkhebel 42, 44, belastet, und hierdurch ein Einlegen eines Ganges bewirkt wird, wird zunächst synchronisiert. Bei diesem Synchronisieren wird die Feder 156 zusammengedrückt bzw. belastet, was in Fig. 4a gezeigt ist. Wenn der Gang dann eingelegt ist, wird das Federelement 156 wieder entlastet, was in Fig. 4b gezeigt ist.

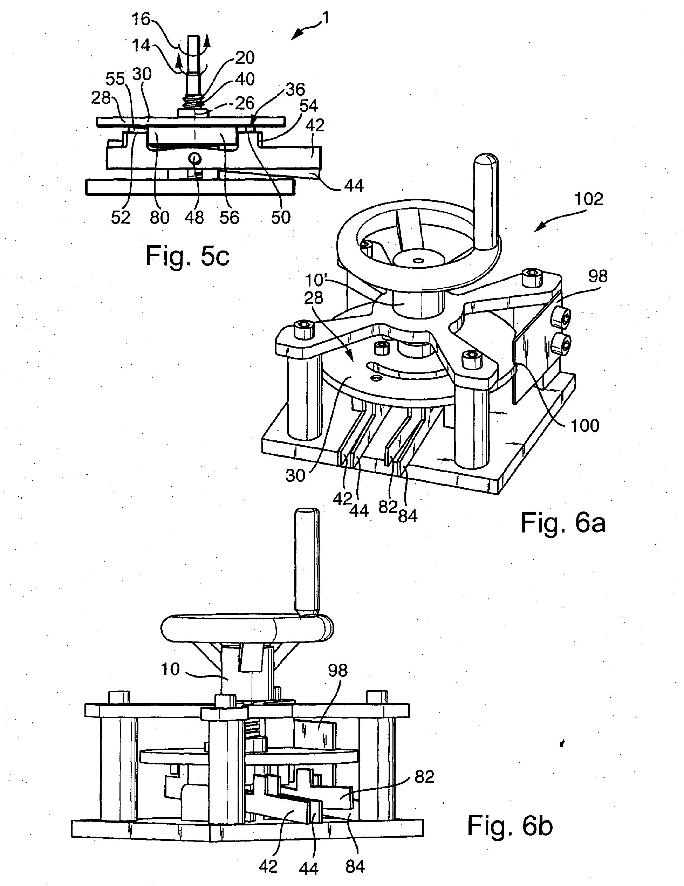

Anhand der Fig. 5a, 5b, 5c soll nun ein beispielhafter Schalt- bzw. Umschaltprozess von Gängen erläutert werden.

Die Betätigungseinrichtung 1 kann insbesondere auch so sein, wie es anhand der übrigen Figuren erläutert wird.

In der Gestaltung gemäß Fig. 5a sind die Schwenkhebel 42, 44 in einem Gang bzw. sind zwei Gänge eingelegt. Dies kann man daran erkennen, dass die Schwenkhebel 42, 44 aus der - in den Fig. 5a bis 5c waagerechten Neutralstellung der Schwenkhebel ausgelenkt sind. Der Schwenkhebel 44 ist nach oben ausgelenkt, und der Schwenkhebel 42 ist nach unten ausgelenkt, wobei in den Fig. 5a bis 5c jeweils der rechte Abschnitt des jeweiligen Schwenkhebels durch Auslenkung nach oben oder nach unten einen Gang schalten kann. Diese Gestaltung kann insbesondere bei einem Parallelschaltgetriebe gegeben sein. Beispielsweise bei einem Automatisierten Schaltgetriebe kann es aber entsprechend modifiziert verwendet werden wobei dort jeweils nur ein Gang geschaltet ist, was beispielsweise über eine entsprechende Gestaltung der Zusatzstelleinrichtung 56 erreicht werden kann.

Fig. 5a kann - im Zusammenwirken mit den Fig. 5b und 5c - femer entnommen werden, dass die Stelleinrichtung 28 eine Wählstellung zum Einlegen eines neuen Ganges angefahren hat. Dies ist insbesondere - wie auch an anderer Stelle erläutert - so, dass die Antriebswelle 10, gegebenenfalls mittels eines Elektromotors 12, in einer ersten Drehrichtung 14 verdreht wird, bis die Mutter 22 bzw. die Stelleinrichtung 28 gegen einen Anschlag 34 bewegt wird, und dann bei weiterer Verdrehung der Antriebswelle 10 in der ersten Drehrichtung 14 rein rotatorisch bewegt wird, bis die Stelleinrichtung 28 in der gewünschten Drehstellung bzw. entsprechenden Wählstellung zum Einlegen des neuen Ganges ist.

In der Gestaltung gemäß Fig. 5b ist gezeigt, dass die Zusatzstelleinrichtung 56 bzw. Active-Interlock-Einrichtung entlang der Spindel in Richtung der Schwenkhebel 42, 44 bewegt wurde, und diese Schwenkhebel 42, 44 in eine Neutralposition geschwenkt hat. Die Active-Interlock-Einrichtung bzw. Zusatzstelleinrichtung 56 greift hier zwischen Vorsprünge 50, 52 bzw. 54, 55 des Schwenkhebels 42 bzw. 44 ein. Zuvor hatte die Zusatzstelleinrichtung bzw. Platte 80 zunächst den Vorsprung 52 und den Vorsprung 54, und somit die jeweiligen Schwenkhebel in die waagerechte Stellung geschwenkt.

In der Gestaltung gemäß Fig. 5b kann ferner erkannt werden, dass das Stellelement bzw. der Bolzen 36 noch axial zu dem entsprechenden Eingriffsbereich beabstandet ist, in welchen eingegriffen werden soll, um einen Gang zu schalten.

Von der in Fig. 5a gezeigten Gestaltung in die Fig. 5b gezeigte Gestaltung ist die Stelleinrichtung 28 bzw. die Zusatzstelleinrichtung 56 dadurch bewegt worden, dass die Antriebswelle 10 in der zweiten Drehrichtung 16 gedreht wurde. Dabei hat ein nicht in den Figuren 5a bis 5c gezeigter Freilauf 102 die Drehstellung der Schwenkeinrichtung im Wesentlichen gehalten, und zwar gegen die von in der zweiten Drehrichtung bewegten Antriebswelle auf die Stelleinrichtung 28 übertragene Kraft.

In Fig. 5c ist gezeigt, dass die Platte 80 bzw. Interlock-Platte vollständig runter bewegt ist, und das Stellelement 36 den Schwenkhebel 44 in den entsprechend zugeordneten Gang drückt. Der Schwenkhebel 44 ist dabei auf seiner links der Drehachse der Betätigungsvorrichtung 1 angeordneten Seite nach unten ausgeschwenkt.

Die Figuren 6a und 6b zeigen zwei schematische Ansichten eines nicht motorisch angetriebenen Modells einer Betätigungseinrichtung. Anhand der Figuren 6a und 6b soll beispielhaft erläutert werden, wie beispielsweise ein Rastelement 98 bzw. ein Element 98 eines einseitigen Mechanismus 102 bzw. des einseitig wirkenden Freilaufes 102 bzw. Verdrehsperre gestaltet sein kann. Den Fig. 6a und 6b kann entnommen werden, dass sich dieses Rastelement in axialer Richtung der Stelleinrichtung 28 erstreckt, und dass es bei unterschiedlichen bzw. sich ändernden Axialstellungen der Stelleinrichtung 28 bzw. der Platte 30 der Stelleinrichtung 28 in die Vorsprünge der Stelleinrichtung - hier in den Vorsprung 100 - eingreifen kann, und somit die Stelleinrichtung 28 in einer jeweiligen Haltestellung halten kann.

Ferner kann den Fig. 6a und 6b eine beispielhafte Anordnung der Stellelemente bzw. Schwenkhebel 42, 44, 82, 84 entnommen werden. Diese sind im Wesentlichen parallel zueinander angeordnet, und so, dass sie auf einer Seite, nämlich der in Fig. 6a nach vorne gezeigten, ein entsprechendes Element, wie Schaltschiene oder Betätigungsstange oder dergleichen belasten können.

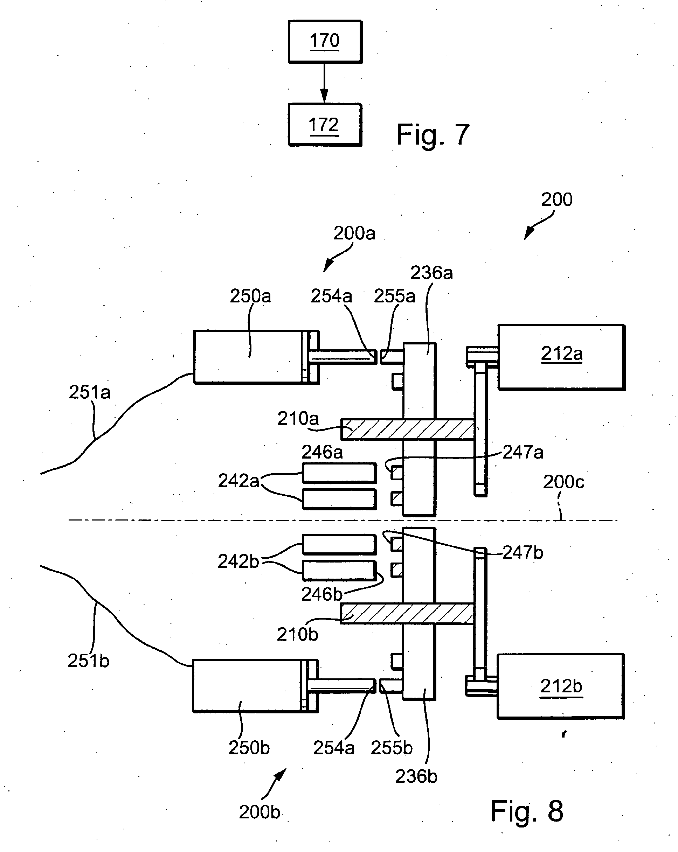

Fig. 7 zeigt schematisch die Schritte eines beispielhaften, erfindungsgemäßen Fahrens zur automatisierten Steuerung von Gangwechselvorgängen in einem Kraftfahrzeuggetriebe mittels genau eines Elektromotors 12, der eine Ausgangswelle bzw. Antriebswelle 10 aufweist.

Im Schritt 170 wird der Elektromotor bzw. die Ausgangswelle des Elektromotors in einer ersten Drehrichtung angetrieben, um einen in dem Kraftfahrzeuggetriebe einzulegenden Gang zu wählen.

Im Schritt 172 wird der Elektromotor bzw. die Ausgangswelle des Elektromotors dann in einer zweiten, der ersten entgegen gesetzten Drehrichtung angetrieben, um in den gewählten Gang des Kraftfahrzeuggetriebes zu schalten, bzw. diesen einzulegen. Im Rahmen dieses Schrittes kann beispielsweise auch eine Synchronisation der Getriebeeinrichtung gegeben sein.

Innerhalb des Schrittes 172 kann auch vorgesehen sein, dass alle oder vorbestimmte geschaltete Gänge der Getriebeeinrichtung herausgenommen werden, bzw. sichergestellt wird, dass vorbestimmte Gänge nicht eingelegt sind. Dies kann insbesondere vor dem Schalten des neuen Ganges durchgeführt werden.

Die Gestaltungsmerkmale und Funktionsweisen, die anhand der Fig. 1 bis 6c erläutert wurden, können auch bei anderen dieser Figuren - gegebenenfalls alternativ - zu anderen Merkmalen vorgesehen sein, so dass auch Kombinationen von Gestaltungsmerkmalen, die anhand unterschiedlicher Figuren erläutert wurden bevorzugte oder beispielhaft Gestaltungen der Erfindung darstellen.

Figur 8 zeigt schematisch eine Betätigungsvorrichtung 200, insbesondere für ein Doppelkupplungsgetriebe mit zwei separat ausgebildeten Getriebeästen, wobei jeder Getriebeast eine Mehrzahl von separat schaltbaren Gangschaltpaarungen aufweist, die jeweils mittels der Schaltelemente 242a, 242b schaltbar sind. Die Betätigungseinrichtung 200 ist in diesem Ausführungsbeispiel in zwei, für jeden Getriebeast getrennt ausgeführte Unterbaugruppen 200a, 200b entlang der Trennlinie 200c aufgeteilt. Jede der Unterbaugruppen 200a, 200b ist für sich selbst funktionsfähig und verfügt über einen Elektromotor 212a, 212b, der die jeweilige Antriebswelle 210a, 210b antreibt und die - wie in den Figuren zuvor beschrieben - eine Stelleinrichtung 236a, 236b aufnimmt. In analoger Weise, wie beispielsweise in den Figuren 1 bis 7 beschrieben, werden die Schaltelemente 242a, 242b von der entsprechenden Stelleinrichtung 236a und 236b betätigt. Hinzu kommt für jeden Getriebeast ein Geberzylinder 250a, 250b, der ebenfalls von der jeweiligen 236a, 236b Stelleinrichtung beaufschlagt wird. In bekannter Weise wird bei Beaufschlagung derartiger Geberzylinders über eine nur angedeutete Druckleitung 251a, 251b ein entsprechender Nehmerzylinder beaufschlagt, der als Ringzylinder um die Getriebeeingangswelle oder als von der Getriebeeingangswelle beabstandeter Nehmerzylinder mit der entsprechenden Ausrückmechanik die Kupplung betätigt. Die beiden Nehmerzylinder der Doppelkupplung für das Doppelkupplungsgetriebe können radial übereinander geschachtelt um die Getriebeeingangwellen, die in diesem Falle als Wellen/Hohlwellenanordnung ausgestaltet sind, angeordnet sein oder beabstandet diesen über entsprechende Ausrückmechanikvorrichtungen die Kupplung betätigen. Es kann auch vorteilhaft sein, mehrere über den Umfang verteilte, um die Getriebeeingangswellen angeordnete Kolben -/Zylindereinheiten vorzusehen, die - vorteilhafter Weise auf demselben Durchmesser über den Umfang abwechselnd jeweils eine Kupplung beaufschlagen, wobei die Radien der Beaufschlagungsmittel wie beispielsweise Ausrücklager und/oder diese auf den Kolben aufnehmenden Bauteile dem Öffnungskreis der Tellerfedern oder Ausrückhebel der jeweiligen Kupplungen angepasst sein können. Es versteht sich weiterhin, dass diese Techniken untereinander in beliebiger Weise kombiniert sein können, beispielsweise können radial innen ein Ringzylinder für die erste Kupplung und radial außerhalb mehrere, über den Umfang verteilte Kolben vorgesehen sein. Weiterhin kann anstatt eines Geberzylinders direkt eine entsprechende mechanische Ausrückvorrichtung von der Stelleinrichtung angesteuert werden oder ein entsprechender Signalaufnehmer zur Aufnahme des Ausrückweges, wobei der Kupplungsweg entsprechend dem zurückgelegten Weg des Wegaufnehmers durch Fremdmittel betätigt wird. Der Wegaufnehmer kann dabei ein hydraulisches Ventil, ein elektrischer Wegaufnehmer wie beispielsweise ein induktiver Wegsensor, ein Piezoelement oder dergleichen sein. Die Fremdmittel können pneumatische oder hydrostatische, von einem entsprechenden komprimierten Druckmittel bewegte Beaufschlagungsmittel wie Kolben oder durch den Wegaufnehmer entsprechend gesteuerte elektrische Aktoren sein.

Bei einer Axialverlagerung der entsprechenden Stelleinrichtung 236a, 236b wird durch die axiale Ausbildung der Eingriffsbereiche 254a, 254b des Geberzylinders 250a, 250b und der Eingriffsbereichen 255a, 255b der Stelleinrichtung 236a, 236b ein Eingriff der Stelleinrichtung 236a, 236b auf die Geberzylinder 250a, 250b bewirkt, bevor die entsprechenden Schaltelemente 242a, 242b in Wirkeingriff mit Eingriffsbereichen 246 der Schaltelemente 242a, 242b treten. Auf diese Weise wird durch den Geberzylinder 250a, 250b die entsprechende Kupplung betätigt, bevor die Schaltung eines Ganges erfolgt. Es versteht sich, dass bei einem Aktiv-Interlock-Mechanismus die entsprechenden Gänge nach beginnender Betätigung der Kupplung ausgelegt und die neu einzulegenden Gänge eingelegt werden.

Eine besondere Ausgestaltung einer Betätigungseinrichtung 200 für ein Doppelkupplungsgetriebe kann in der Weise erfolgen, dass ein einziger Motor beide Getriebeeingangswellen 210a, 210b antreibt, wobei die Antriebswellen jeweils gegenläufig angetrieben werden. Auf diese Weise kann im Wechsel jeweils eine Kupplung geöffnet und die andere geschlossen werden und entsprechende Gänge gewechselt werden. Für dieses Ausgestaltungsbeispiel ist daher nur ein Elektromotor zum Schalten und Wählen von Gängen in einem Doppelkupplungsgetriebe sowie zum Betätigen der beiden Kupplungen notwendig.

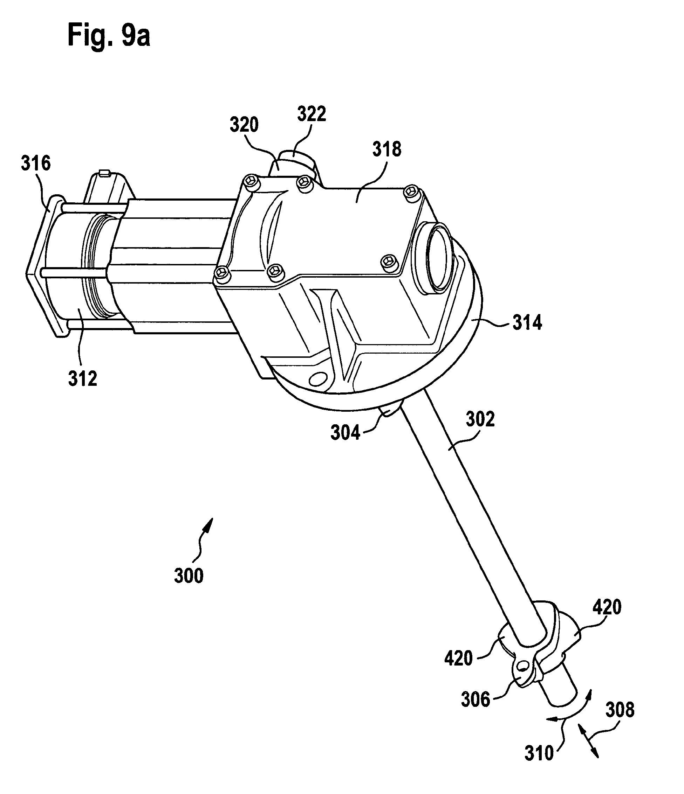

Anhand der Fig. 9a bis 21 sollen nun zwei weitere, beispielhafte erfindungsgemäße Ausführungsformen näher erläutert werden. Diese beiden Ausführungsformen unterscheiden sich im wesentlichen dadurch, dass bei der einen dieser Ausführungsformen eine Referenz-Sensoreinrichtung gegeben ist, während diese bei der anderen dieser beiden Ausführungsformen fehlt. Da die beiden Ausführungsformen ansonsten im wesentlichen identisch sind, werden sie im folgenden anhand der Fig. gemeinsam erläutert, und zwar insbesondere auch im Hinblick auf Detailmerkmale bzw. bevorzugte Detailmerkmale.

Zur Unterscheidbarkeit wird die Ausführungsform mit Referenz-Sensoreinrichtung auch als "Sensor-Variation" bezeichnet und entsprechend die andere Ausführungsform als "Variation ohne Sensor".

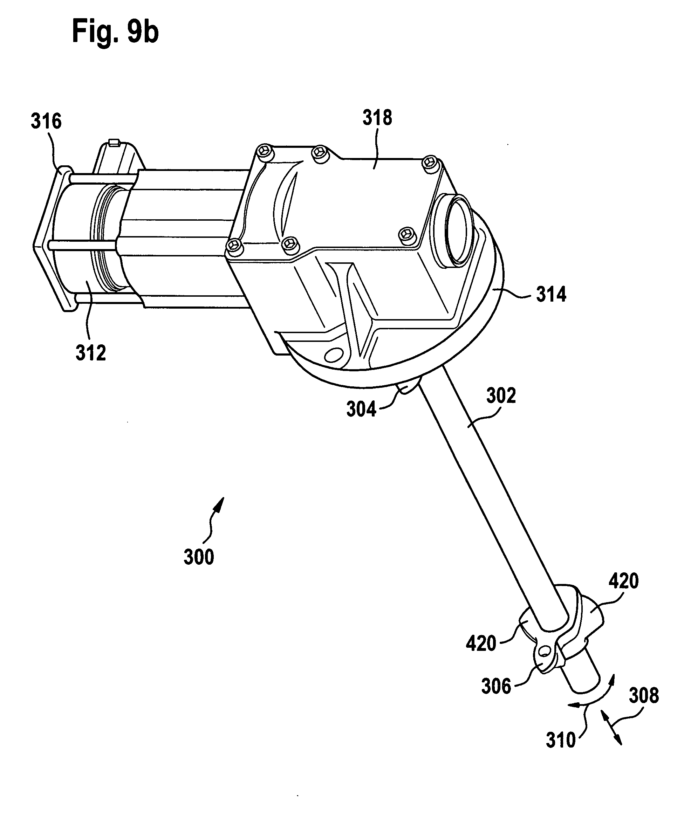

Die Fig. 9a und 9b zeigen eine dreidimensionale Außenansicht der beispielhaften erfindungsgemäßen Gestaltung. Dabei ist in Fig. 9a die Variation mit Sensor und in Fig. 9b die Variation ohne Sensor gezeigt. Die Betätigungseinrichtung 300 weist eine dreh- bzw. schwenkbewegliche Schaltwelle 302 auf, an welcher fest zwei Schaltfinger 304, 306 angeordnet sind. Anstelle von zwei Schaltfingem 304, 306 kann allerdings auch alternativ vorgesehen sein, dass lediglich ein Schaltfinger - oder auch mehr als zwei Schaltfinger - an dieser Schaltwelle angeordnet sind. Die Schaltwelle 302 sowie die Schaltfinger 304, 306 können Bestandteil einer Stelleinrichtung sein bzw. eine Stelleinrichtung bilden.

Die Gestaltung mit zwei Schaltfingem eignet sich besonders gut für die Betätigung von Getrieben, bei denen zwei Teilgetriebe gegeben sind, die in parallel geschalteten Antriebsstrangzweigen angeordnet sind, wenn - bei entsprechender Gestaltung des Getriebes - axiale Verfahrwege der Schaltwelle (vgl. Doppelpfeil 308) gering gehalten werden sollen.

Es kann aber auch bei derartigen Getrieben, wie beispielsweise unterbrechungsfreies Schaltgetriebe (USG) oder Parallelschaltgetriebe (PSG) oder Doppelkupplungsgetriebe (DKG) vorgesehen sein, dass lediglich ein Schaltfinger vorgesehen ist. Die Betätigungseinrichtung 300 lässt sich allerdings auch bei Gestaltungen einsetzen, bei denen das Getriebe lediglich einen Getriebezweig bildet, wie beispielsweise automatisiertes Schaltgetriebe (ASG). Insbesondere bei einer solchen Gestaltung mit nur einem Antriebsstrangzweig ist vorgesehen, dass lediglich ein Schaltfinger der Betätigungseinrichtung 300 vorgesehen ist. Die Axialrichtung, in der eine Beweglichkeit der Schaltwelle 302 gegeben ist, ist schematisch durch den Doppelpfeil 308 angedeutet, und die Dreh- bzw. Schwenkrichtung, in der eine Schwenkbeweglichkeit der Schaltwelle 302 gegeben ist, ist schematisch durch den Doppelpfeil 310 angedeutet. Die Schaltfinger 304, 306 dienen insbesondere der Betätigung von Schaltelementen bzw. Schaltschienen des Getriebes. Hierzu kann beispielsweise vorgesehen sein, dass solche Schaltschienen bzw. Schaltelemente jeweils ein Schaltmaul aufweisen, wobei die Schaltfinger 304, 306 in diese Schaltmäuler betätigend eingreifen können. Die Schaltschienen können dabei so angeordnet sein, dass die Schaltmäuler in der Neutralstellung der Schaltschienen, in der kein Gang im Getriebe eingelegt ist, fluchten, wobei die Schaltschienen parallel zueinander und benachbart ausgerichtet sind. Für die Wählbewegung kann dann die Schaltwelle 302 axial verschoben werden (Pfeil 308), und zum Schalten kann diese Schaltwelle 302 dann verschwenkt werden, so dass ein entsprechender Schaltfinger 306 mit einem Schaltmaul in Eingriff kommen kann und eine entsprechende Schaltschiene zum Einlegen eines Ganges im Getriebe, wie Kraftfahrzeug-Getriebe, entsprechend bewegen kann. Die Schaltschienen können dabei beispielsweise axial verschieblich angeordnet sein.

Zum Erzeugen dieser Axialbewegung (Pfeil 308) sowie Schwenkbewegung (Pfeil 310) der Schaltwelle 302 ist genau eine Antriebseinrichtung vorgesehen, die hier als Elektromotor 312 gestaltet ist. Der Elektromotor 312 weist eine Ausgangswelle 334 auf, die drehend in beiden Richtungen bzw. beiden Orientierungen ihrer Drehrichtung angetrieben werden kann. Die Gestaltung der Betätigungseinrichtung 300 ermöglicht, dass diese Ausgangsbewegung des Elektromotors - insbesondere wahlweise - in eine Axialbewegung (vgl. Pfeil 308) der Schaltwelle 302 gewandelt werden kann, bzw. in eine Schwenkbewegung der Schaltwelle 302, und zwar insbesondere jeweils in beiden Orientierungen.

Die Betätigungseinrichtung 300 weist ein Gehäuse 314 auf. Ferner ist im Ausführungsbeispiel eine Halterung 316 zum Halten des Elektromotors 312 oder zu anderen Zwecken vorgesehen.

Das Gehäuse 314 weist einen abnehmbaren - hier mittels Schrauben am Gehäuse 314 verschraubten - Deckel 318 auf.

Im Unterschied zu der Gestaltung gemäß Fig. 9b weist das Gehäuse 314 in der Gestaltung gemäß Fig. 9a einen Aufnahmebereich 320 zur Aufnahme eines HallSensors 322 auf. Der Hall-Sensor 322 ist in diesem Aufnahmebereich 320 bzw. einer Öffnung dieses Aufnahmebereichs 320 eingesteckt.

Der Hall-Sensor 322 ist bei der Variation mit Sensor insbesondere Bestandteil dieses Sensor.

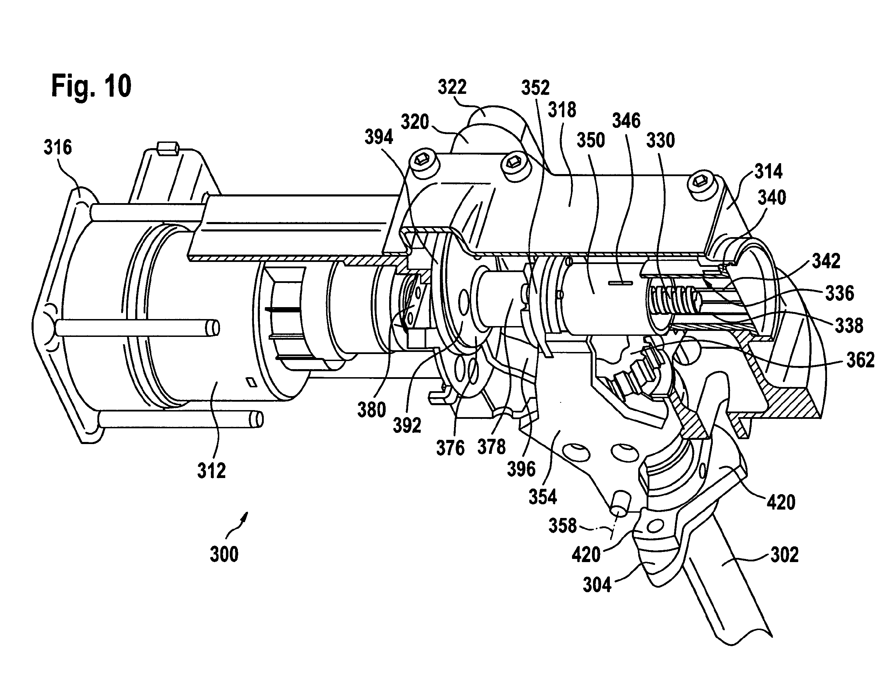

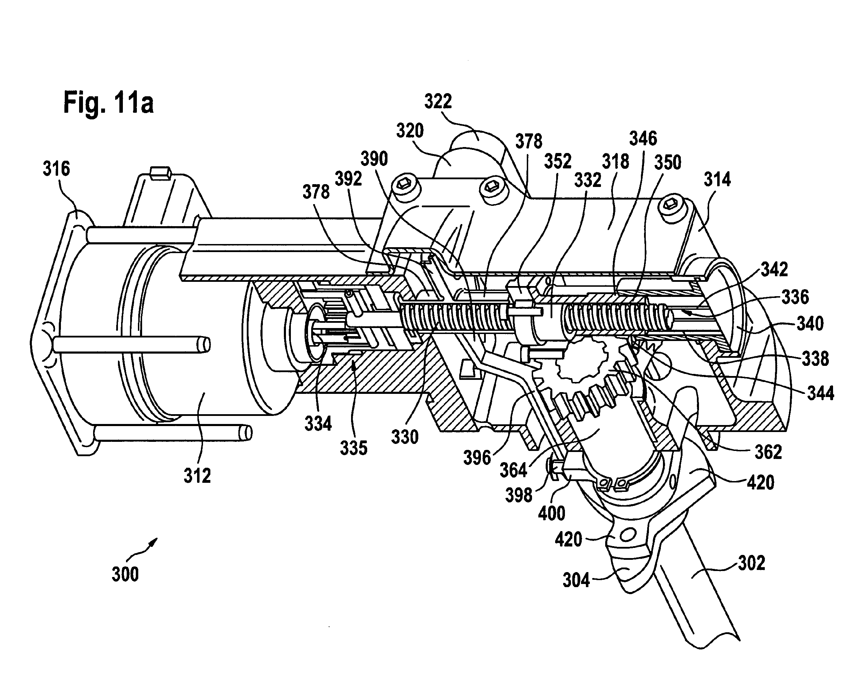

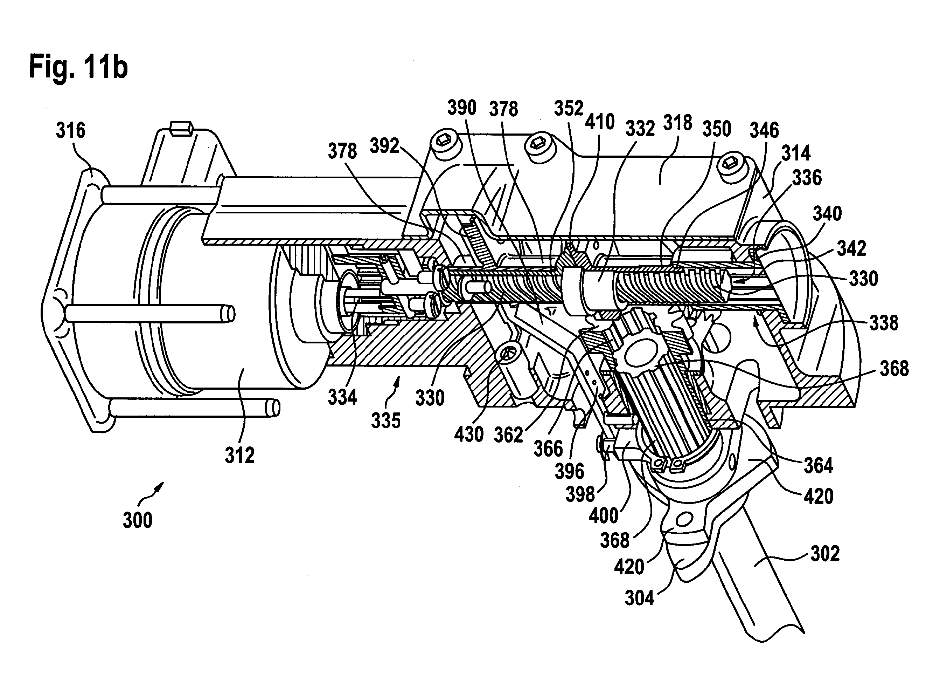

Die Fig. 10 und 11a zeigen zwei aufgeschnittene Ansichten der Gestaltung gemäß Fig. 9a. Fig. 11b zeigt eine aufgeschnittene Ansicht der Gestaltung gemäß Fig. 9b.

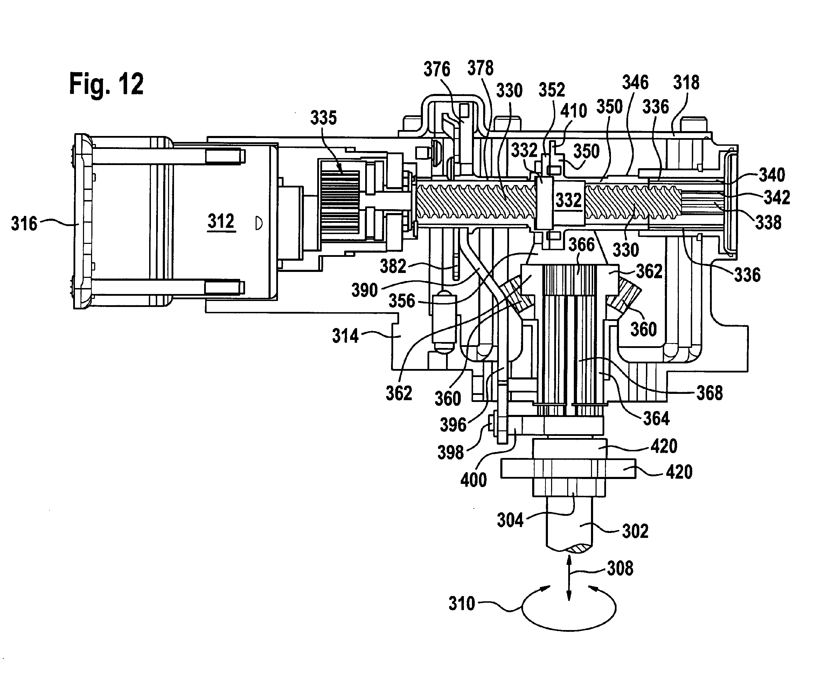

Fig. 12 zeigt eine Seiten- bzw. Schnittansicht der Gestaltung gemäß Fig. 9a.

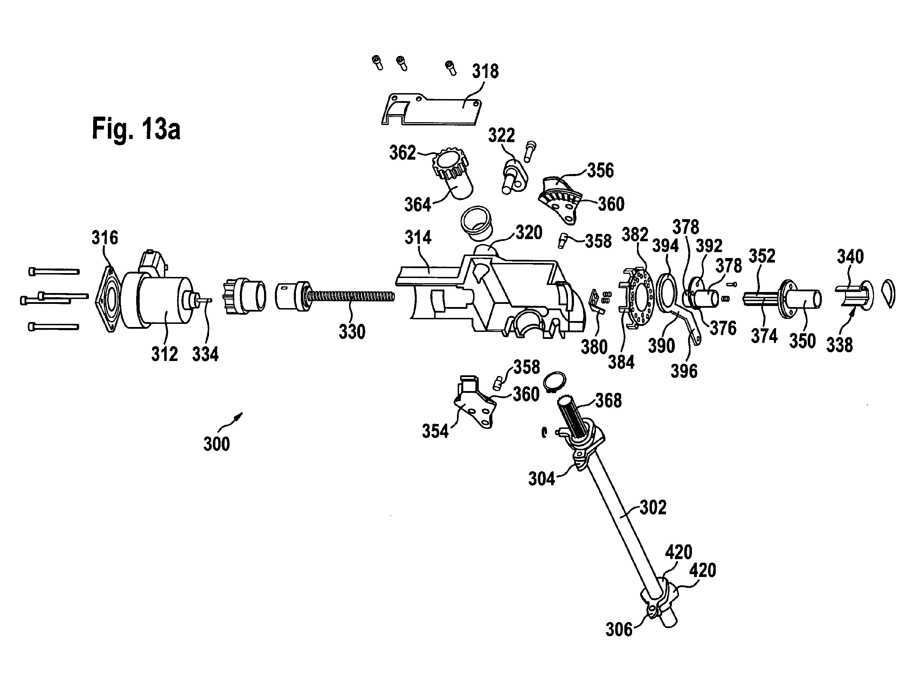

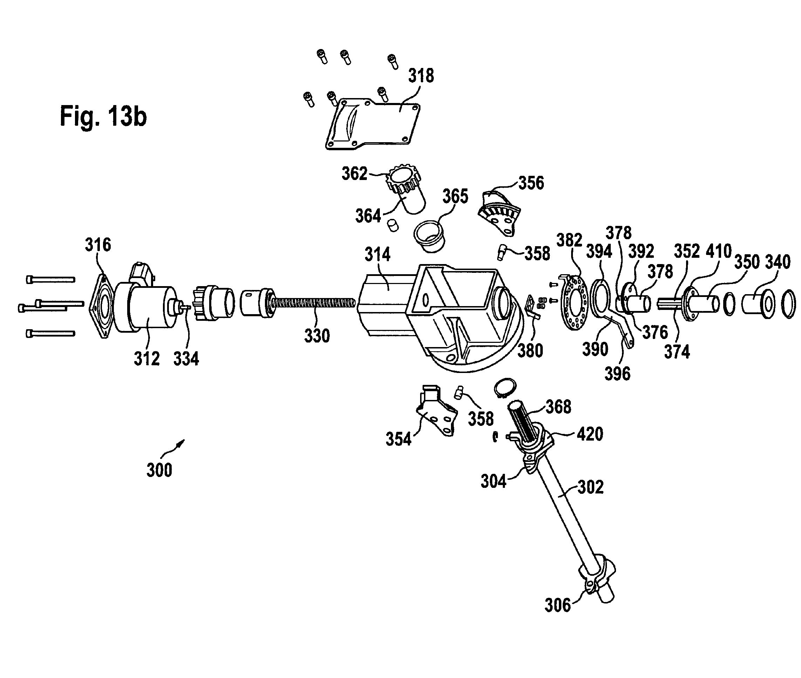

Fig. 13a zeigt eine Explosionsarisicht der Gestaltung gemäß Fig. 9a, und Fig. 13b zeigt eine Explosionsansicht der Gestaltung gemäß Fig. 9b.

Die beiden Varianten weisen eine Gewindespindel 330 sowie eine von dieser aufgenommene Mutter 332 auf.

Die Spindel 330 ist drehbeweglich und axial fest gelagert und kann mittels des Elektromotors 312 drehend angetrieben werden.

Zu diesem Zweck ist die Motorausgangswelle 334 mit der Spindel 330 über einen Zahnradsatz 335 gekoppelt. Dieser Zahnradsatz 335 weist ein fest mit der Spindel 330 verbundenes Zahnrad sowie ein fest mit der Motorausgangswelle 334 verbundenes Zahnrad auf. Es können auch zwischengeschaltete Zahnräder vorgesehen sein. Alternativ - was in den Fig. allerdings nicht gezeigt ist - kann auch vorgesehen sein, dass die Motorausgangswelle 334 koaxial zur Spindel 330 gelegen ist und mit dieser verbunden ist.

Gemäß den Variationen des Ausführungsbeispiels ist die Spindel 330 parallel zur Motorausgangswelle 334 angeordnet, und zwar in radialer Richtung versetzt.

Der Elektromotor 312 kann in beiden Orientierungen der Drehrichtung seiner Ausgangswelle 334 angetrieben werden, so dass entsprechend die Spindel 330 - ebenfalls in beiden Orientierungen ihrer Drehrichtung - angetrieben werden kann.

Beim Verdrehen der Spindel 330 kann also bewirkt werden, dass die Spindelmutter 332 in Längsrichtung der Spindel 330 wandert. Dies gilt insbesondere, wenn die Spindelmutter 332 nicht in einer Anschlagposition ist, was im folgenden noch erläutert werden wird.

Ferner ist eine Verdrehsicherung 336 für die Spindelmutter 332 vorgesehen. Diese Verdrehsicherung wirkt zumindest über einen gewissen Axialbereich des axialen Verstellbereichs der Mutter 332. Zumindest in einer Anschlagstellung der Mutter 332, auf die im folgenden noch eingegangen wird, kann die Mutter 332 allerdings mit der Spindel 330 verdreht werden. Bei Wirken der Verdrehsicherung ist insbesondere sichergestellt, dass die Mutter 332 bei einer Verdrehung der Spindel 330 im wesentlichen rein axial bewegt wird bzw. in Spindellängsrichtung wandert.

Die Verdrehsicherung 336 weist eine gehäusefest angeordnete Keilverzahnung 338 auf. Diese Keilverzahnung 338 weist für jede Schaltposition eine Vertiefung auf, die jeweils insbesondere von umfangsmäßig benachbarten Keilen bzw. Zähnen gebildet wird. Die Keilverzahnung 338 ist im Ausführungsbeispiel eine Innen-Keilverzahnung, die an einem hülsenartigen, insbesondere in das Gehäuse 314 eingesteckten, Bauteil 340 des Gehäuses 314 vorgesehen ist.

Die Verdrehsicherung 336 weist femer ein hier ebenfalls hülsenartiges Bauteil 350 auf, das an der Mutter 332 angeordnet ist. Dieses hülsenartige Bauteil 350 weist auf seinem Außenumfang einen Keil bzw. Zahn auf. Die "Keile" bzw. "Zähne" 342 der Keilverzahnung 338, die gehäusefest angeordnet sind, weisen Einführschrägen 344 auf, die an dem der Mutter 332 zugewandten Ende der Keilverzahnung 338 angeordnet sind.

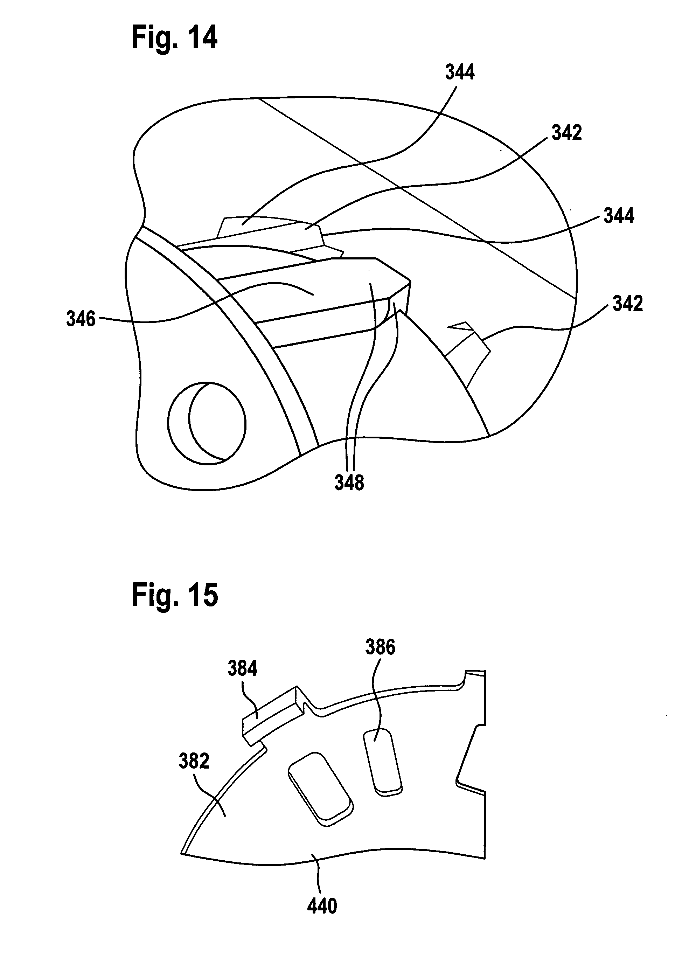

Der Keil bzw. der Zahn 346, der an der Mutter 332 angeordnet bzw. mit dieser verbunden ist, weist ebenfalls Einführschrägen 348 auf. Dies kann auch gut Fig. 14 entnommen werden. Durch das Zusammenwirken der Einführschrägen 344, 348 wird erleichtert, dass die Verdrehsicherung in Eingriff kommt, und zwar insbesondere wenn die Mutter 332 aus einer Anschlagstellung wieder zurückbewegt wird. Der Zahn 346 bildet in der Eingriffsposition mit der Keilverzahnung 338 eine im Wesentlichen - insbesondere in Umfangsrichtung der Spindellängsachse - formschlüssige Verbindung.

Insbesondere außerhalb des Eingriffs der Verdrehsicherung 336 kann ferner eine einseitig wirkende Verdrehsicherung wirken, die im folgenden noch - unter anderem anhand der Fig. 15 - erläutert werden wird.

Grundsätzlich ist es möglich, dass der Zahn 346 direkt an der Mutter 332 angeordnet ist bzw. einstückig mit dieser verbunden ist.

Im Ausführungsbeispiel ist vorgesehen, dass der Keil bzw. der Zahn 346 an einer von der Mutter 332 separaten, allerdings mit dieser verbundenen Hülse 350 angeordnet ist. In der Hülse 350 ist die Mutter 332 radial gefangen. Bei der Gestaltung gemäß dem Ausführungsbeispiel ist ferner eine weitere Hülse 352 gegeben, die prinzipiell auch scheibenartig gestaltet sein kann, und mit der Hülse 350 verbunden ist. Die Mutter 332 ist in der Einheit aus den Hülsen 350 und 352 axial gefangen, und zwar insbesondere im Wesentlichen spielfrei oder mit geringem Spiel. Es kann zwischen der Hülse 350 und der Mutter 332 ferner zur Verdrehsicherung ein entsprechendes Element, wie beispielsweise Passfeder-Nut-Verbindung oder dergleichen, vorgesehen sein.

In der Gestaltung gemäß dem Ausführungsbeispiel ist vorgesehen, dass die Mutter 332 einen ringwulstartigen Abschnitt aufweist, der hier zylindrisch ausgebildet ist und der den Teil der Mutter 332 bildet, der in der Einheit aus den Hülsen 350, 352 axial gefangen ist.

Wenn die Mutter 332 unter Einwirkung der Spindel 330 axial bewegt wird, werden die Hülsen 350, 352 entsprechend bewegt.

Die Hülsen 350, 352 können beispielsweise - wie in Fig. 10 gezeigt - miteinander verschraubt sein.

Im Ausführungsbeispiel kann eine Axialbewegung der Mutter 332 in eine Schwenk- bzw. Drehbewegung der Schaltwelle 302 gewandelt werden. Zu diesem Zweck sind gemäß dem Ausführungsbeispiel Schwenkhebel 354, 356 vorgesehen. Die Schwenkhebel 354, 356 sind um quer, insbesondere senkrecht, zur Spindel 330 sowie quer bzw. senkrecht zur Schaltwelle 302 gelegene (Bolzen bzw.) Schwenkachsen 358 schwenkbar. Die Schaltwelle 302 erstreckt sich im wesentlichen senkrecht zur Längsachse der Spindel 330.

In einem jeweiligen von der Schwenkachse 358 abgewandten Bereich greift - wahlweise - einer der Schwenkhebel 354, 356 in die Spindelmutter 332 bzw. in einen Eingriffsbereich einer der beiden Hülsen 350, 352 ein. Dieser Eingriff ist derart, dass eine Axialbewegung der Mutter 332 ein Verschwenken des jeweils eingreifenden Schwenkhebels 354 bzw. 356 bewirkt.

Die Schwenkhebel 354, 356 weisen jeweils ein Zahnradsegment 360 auf, das gut in Fig. 12 zu erkennen ist. Diese beiden Zahnradsegmente 360 greifen jeweils in das Ritzel bzw. Zahnrad 362 ein, und zwar derart, dass beim Verschwenken des momentan in die Mutter eingreifenden Schwenkhebels 354 bzw. 356 dieses Zahnrad 362 in seiner Dreh- bzw. Schwenkrichtung belastet wird, und dabei den anderen, momentan nicht in die Mutter bzw. Hülse eingreifenden Schwenkhebel 356 bzw. 354 über sein Zahnradsegment 360 mitnimmt. Im Ausführungsbeispiel sind die Schwenkhebel 354, 356 auf gegenüberliegenden Seiten des Zahnrades 362 angeordnet. Die Schwenkhebel 354, 356 schwenken folglich jeweils in entgegengesetzten Schwenkrichtungen. Da zeitgleich nur einer der beiden Schwenkhebel 354, 356 in die Mutter 332 bzw. eine der beiden Hülsen eingreift, ist die Beweglichkeit trotz der gegensinnigen Schenkens der Schwenkhebel 354, 356 gegeben.

Das Zahnrad 362 ist im Ausführungsbeispiel an einer Hülse bzw. Hohlwelle 364 angeordnet, was gut in Fig. 12 zu erkennen ist. Diese Hülse bzw. Hohlwelle 364 ist - insbesondere mittels einer Gleitlagerbuchse 365 - drehbeweglich und axial fest im Gehäuse 314 gelagert. Auf ihrer Innenoberfläche weist die Hohlwelle 364 bzw. das Zahnrad 362 eine Keilverzahnung 366 auf, die in eine auf dem Außenmantel der Schaltwelle 302 vorgesehene Keilverzahnung 368 eingreift.

Durch diese Anordnung wird ermöglicht, dass die Schaltwelle 302 bei einem Verdrehen der Gewindespindel 330 und einer dadurch bedingten Axialverschiebung der Mutter 332 über den Eingriff eines jeweiligen Schwenkhebels 354 bzw. 356 in die Mutter 332 und über das Zusammenwirken des Zahnradsegments 360 mit dem Zahnrad 362, das wiederum über seine Keilverzahnung 366 mit der Verzahnung 368 der Schaltwelle 302 zusammenwirkt, zum Schalten von Gängen verschwenkt werden kann, wobei die Schaltwelle 302 dennoch axial verschieblich angeordnet ist. Es sei allerdings angemerkt, dass anstelle dieser bevorzugten und sehr speziellen Anordnung auch eine andere Anordnung vorgesehen werden kann, mittels welcher erreicht wird; dass die Schaltwelle 302 einerseits zum Schalten in Schwenkrichtung belastet werden kann, und andererseits dennoch axial verschieblich angeordnet ist.

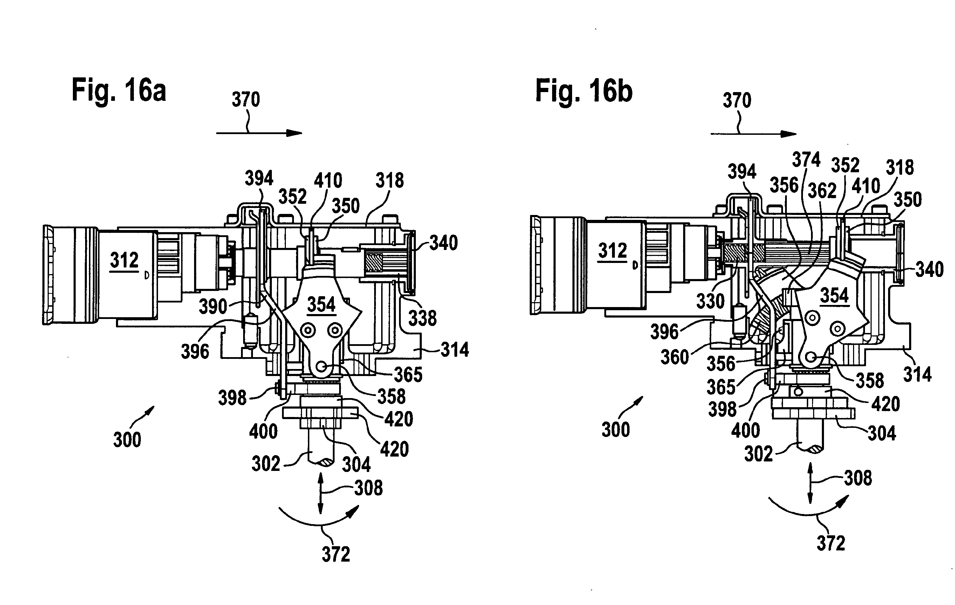

Die Schaltbewegung zum Einlegen von Gängen kann auch gut anhand der Zusammenschau der Fig. 16a und 16b erkannt werden. In Fig. 16a ist die Mutter 332 mit den Hülsen 350, 352 infolge einer entsprechenden Verdrehung der Gewindespindel 330 nach rechts verschoben, wie schematisch durch die Pfeile 370 angedeutet ist, die die Bewegung der Mutter 332 zum Schalten in einen Gang anzeigen. Durch den Eingriff mit dem Schwenkhebel 354 ist dieser Schwenkhebel entsprechend verschwenkt, so dass sich das Zahnrad 362 entsprechend verdreht hat und den anderen Schwenkhebel in entgegengesetzter Richtung verschwenkt hat. Über den Eingriff der Keilverzahnung 366 mit der Keilverzahnung 368 ist der Schaltfinger 304 in der Gestaltung gemäß Fig. 16b gegenüber der Gestaltung gemäß Fig. 16a verschwenkt, da die Schaltwelle - entsprechend des pfeils 372 - entsprechend verschwenkt ist.

Fig. 16b kann - wie beispielsweise auch den Fig. 13a und 13b - femer entnommen werden, dass an der zweiten Hülse 352 der Mutter 332 eine Drehmitnahme 374 angeordnet ist, die hier als keilverzahnter hohlwellenartiger Fortsatz gestaltet ist. Der Durchmesser dieser Hohlwelle ist hier so, dass die Spindel 330 sich im wesentlichen berührungsfrei durch den Innenraum dieses hohlwellenartigen Fortsatzes erstreckt.

Diese Drehmitnahme 374, die allerdings auch anders gestaltet sein kann, dient insbesondere zum Erzeugen einer drehfesten Verbindung mit einem Excenter 376. Dieser Excenter 376 ist so gelagert, dass seine Drehachse im wesentlichen konzentrisch zur Drehachse der Spindel 330 gelegen ist. Er weist beispielsweise - wie im Ausführungsbeispiel - einen hohlzylindrischen hülsenartigen Abschnitt 378 auf, der im wesentlichen konzentrisch zur Drehachse der Spindel 330 gelegen ist. An diesem hülsenartigen Abschnitt 378 ist exzentrisch eine (Excenter)Scheibe 392 angeordnet. Der hülsenartige Abschnitt 378 weist auf seiner innen gelegenen Innenoberfläche eine Gegen-Drehmitnahme bzw. eine Gegen-Keilverzahnung auf, die mit der Drehmitnahme 374 bzw. der Keilverzahnung 374 in Eingriff steht, und zwar insbesondere dauerhaft und insbesondere so, dass eine Axialverschieblichkeit gegeben ist. Der Excenter 376 ist im übrigen gegenüber dem Gehäuse 314 drehbeweglich um seine Schwenkachse gelagert.

Wenn nun die Gewindespindel 330 von dem Elektromotor 312 in ihrer einen Drehrichtung bzw. -orientierung angetrieben wird, wandert die Spindelmutter 332 axial in ihrer einen Orientierung (vgl. Fig. 16a, 16b) und bewirkt somit ein entsprechendes Verschwenken des Schaltfingers 304. Wenn die Spindel 330 (anschließend) in einer entgegengesetzten Drehrichtung bzw. -orientierung angetrieben wird, wird der Schaltfinger 304 entsprechend zurück verschwenkt. Dabei bewegt sich die Mutter 332 in ihrer axialen Richtung entsprechend zurück. Es kann eine Reibeinrichtung vorgesehen sein, welche während dieser Bewegung der Mutter 332 in Richtung des Excenters auf diesen Excenter einwirkt, so dass dieser dabei im Wesentlichen nicht verdreht, solange die Mutter rein axial in Richtung des Excenters bewegt wird, wobei insbesondere vorgesehen ist, dass die entsprechende Reibkraft (bzw. Reibmoment) ausreichend groß ist, um sicherzustellen, dass die Mutter 332 bei entsprechender Spindeldrehung zunehmend in Richtung des Excenters bewegt wird, und zwar in Richtung einer Anschlagstellung.

Ein solcher Anschlag für die Mutter 332 wird von dem Excenter 376 gebildet. Der Excenter ist dabei axial fest und drehbeweglich gelagert.

Alternativ könnte allerdings auch am Gehäuse 314 ein entsprechender Anschlag für die Mutter 332 vorgesehen sein. Ein solcher am Gehäuse 314 angeordneter Anschlag kann beispielsweise als Gleitlager ausgebildet ist, oder ein Axiallager - insbesondere Axialwälzlager - aufweisen. Ein solches Lager kann beispielsweise zur Verminderung von Reibungskräften eingesetzt werden.

Sofern - was in Fig. 9a bis 21 nicht gezeigt ist - ein Anschlag für die Mutter 332 am Gehäuse 314 angeordnet ist, bewirkt ein Anschlagen der Mutter 332 an einem solchen am Gehäuse 314 angeordneten Anschlag, dass die Mutter 332 bei Verdrehen der Spindel 330 nicht weiter in Richtung des Excenters bewegt werden kann. Dann kann über die Keilverzahnung zwischen der Mutter 332 und dem Excenter ein Drehmoment auf den Excenter übertragen werden, infolgedessen der Excenter drehend von der Mutter 332 angetrieben wird, und welches zum Überwinden der Reibkraft (bzw. Reibmoment) einer etwaigen Reibeinrichtung ausreicht. Es ist anzumerken, dass in dieser Anschlagstellung die Verdrehsicherung 336 nicht mehr wirkt. Der Zahn 346 ist also axial aus der Keilverzahnung 338 herausbewegt worden, so dass die Mutter 332 in der Anschlagstellung infolge der Spindelbelastung drehend bewegt wird und - wie angesprochen - den Excenter mitnimmt.

Sofern ein solcher Anschlag nicht am Gehäuse 314 angeordnet ist, sondern von dem Excenter 376 selbst gebildet wird, der sich im Ausführungsbeispiel allerdings axial gegen das Gehäuse 314 abstützt, wird durch dieses Anschlagen am Excenter 376 die Mutter 332 an einer weiteren Axialbewegung gehindert und nimmt - unterstützt durch die Drehmitnahme bzw. Keilverzahnung 374 den Excenter 376 drehend mit. Bei dieser drehenden Mitnahme wird die Haltekraft der Reibeinrichtung überwunden.

Diese Reibeinrichtung wird gebildet von einem gehäusefest angeordneten Federelement 380 und einer Scheibe 382. Diese Federelement 380 und diese Schreibe 382 können zusätzlich einen einseitig wirkenden Freilauf bilden, was im Folgenden noch erläutert wird.

Es sei angemerkt, dass ein Anschlag für die Mutter 332 auch anders gestaltet sein kann, und sich insbesondere gegen das Gehäuse 314 abstützen kann.

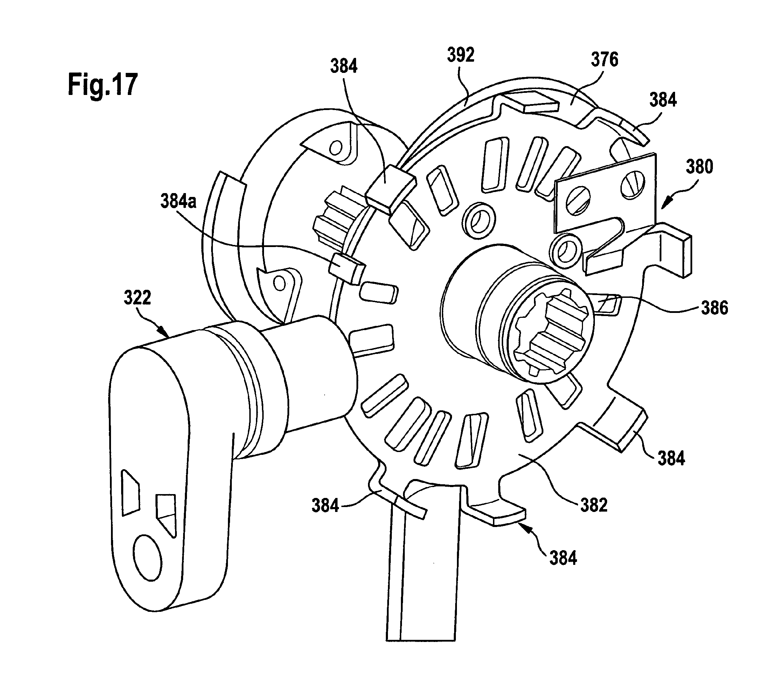

Die, insbesondere einseitig wirkendende, Feder 380 sowie die Scheibe 382 sind gut in Fig. 17 zu erkennen. Fig. 17 zeigt insbesondere auch die Sensoreinrichtung der Variation mit Sensor. Dort ist zu erkennen, dass umfangsmäßig an der Scheibe 382 eine Vielzahl von Sensoren bzw. axialen Vorsprüngen 384 an der Scheibe 382 angeordnet sind. Diese erstrecken sich im wesentlichen axial, und zwar insbesondere an dem Außenumfang der Scheibe 382. Die Vorsprünge 384 können beispielsweise im wesentlichen umfangsmäßig gleichmäßig verteilt sein und/oder gleiche Abmaße in Umfangsrichtung haben. Es ist allerdings ein Vorsprung 384a gegeben, der in seiner umfangsmäßigen Erstreckung und/oder in seinem Abstand zu benachbarten oder einem benachbarten Vorsprung von den anderen abweicht. Dieser Vorsprung 384a kann in Zusammenwirken mit dem Hall-Sensor 322 zur Ermittlung einer Referenzstellung verwendet werden. Die Scheibe 382 ist drehfest mit dem Excenter 376 verbunden und im wesentlichen koaxial zur Drehachse des Excenters 376 angeordnet.

Bei der Variation ohne Sensor ist ebenfalls eine Scheibe 382 sowie eine an dem Gehäuse 314 fest angeordnete Feder 380 vorgesehen. Bei dieser Gestaltung ohne Sensor fehlen an der Scheibe 382 allerdings die Vorsprünge 384, 384a sowie der Hall-Sensor 322. Abgesehen von den Vorsprüngen 384, 384a ist die Scheibe 382 bei der Gestaltung gemäß Fig. 9b im Wesentlichen so wie bei der Gestaltung gemäß Fig. 9a.

Die Scheibe 382 weist mehrere Vertiefungen oder Durchbrüche 386 auf, in welche eine Zunge 388 des Federelements 380 eingreifen kann. Diese Zunge 388 ist so gestaltet, dass das Federelement 380 und die Scheibe 382 als einseitig wirkender Freilauf zusammenwirken. Dieser einseitig wirkende Freilauf wirkt so, dass die Scheibe 382, und somit der Excenter 376, von der Mutter 332 drehend mitgenommen werden kann, wenn die Mutter 332 gegen den Anschlag gedreht wird. In der Gegenrichtung, also wenn die Mutter 332 vom Anschlag weggedreht wird und sich axial von diesem entfernt, blockiert der Freilauf eine Verdrehung der Scheibe 382 in der entsprechenden Drehrichtung und somit eine Verdrehung des Excenters 376 in dieser Drehrichtung. Die Drehstellungen, in denen der Freilauf blockiert, sind dabei auf die Wählpositionen abgestimmt, aus denen in einen Gang geschaltet werden kann.

Ein Mitnehmer 390 greift in den Excenter 376 ein. Im Ausführungsbeispiel weist der Excenter 376 eine kreisförmige und exzentrisch an der Hülse 378 angeordnete Excenterscheibe 392 auf. Im Ausführungsbeispiel umgreift ein Ringflansch 394 des Mitnehmers 390 die Excenterscheibe 392 radial außen, wobei dieser Ringflansch 394 drehbeweglich gegenüber der Excenterscheibe 392 angeordnet ist. Von diesem Ringflansch 394 erstreckt sich ein Führungshebel 396, der in einem dem Ringflansch 394 abgewandten Bereich mit der Schaltwelle 302 verbunden ist. Diese Verbindung zwischen der Schaltwelle und dem Führungshebel ist derart, dass die Schaltwelle 302 einerseits nicht an ihrer Drehbewegung gehindert wird, und andererseits die Axialposition der Schaltwelle 302 (zum "Wählen") mittels des Mitnehmers 390 verstellt werden kann. Beispielsweise kann ein bezüglich der Längsachse der Schaltwelle im wesentlichen axial fest an bzw. gegenüber der Schaltwelle 302 angeordneter Bolzen 398 drehbeweglich in den Führungshebel 396 eingreifen.

Dieser Bolzen 398 kann beispielsweise an einer Hülse fest angeordnet sein, die auf der bzw. gegenüber der Schaltwelle 302 derart axial fest gelagert ist, dass die Schaltwelle 302 in dieser Hülse 400 gedreht werden kann.

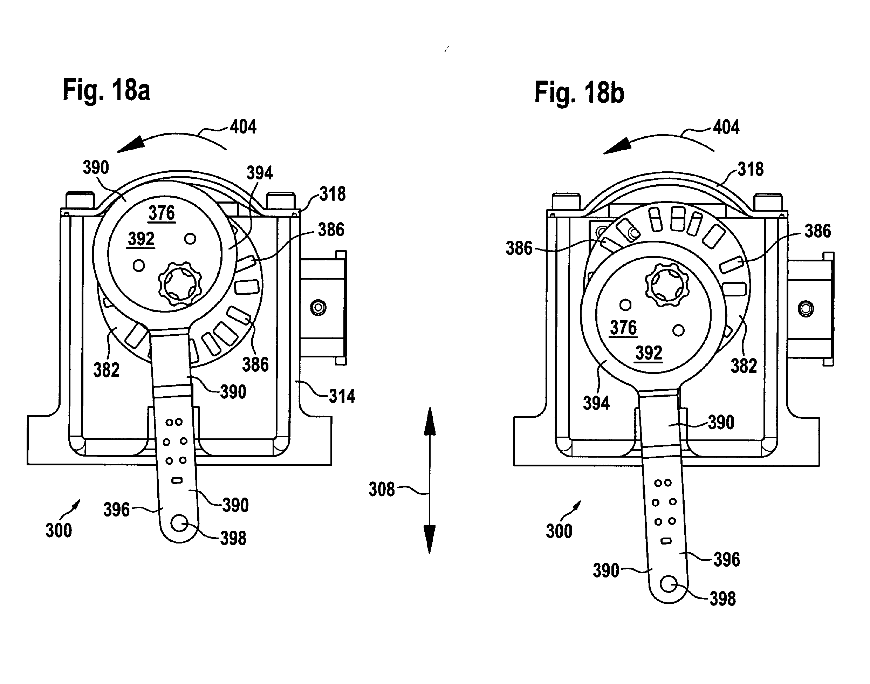

Wenn nun durch entsprechendes Drehen der Spindel 330 die Mutter 332 in ihre Anschlagstellung bewegt wird und die Spindel 330 weiter in der entsprechenden Drehrichtung gedreht wird, nimmt die Mutter 332 bei im wesentlichen unveränderter Axialstellung den Excenter 376 mit, welcher über den Eingriff mit dem Mitnehmer 390 wiederum diesen Mitnehmer 390 mitnimmt, und zwar derart, dass dieser Mitnehmer 390 über seinen Eingriff in die Schaltwelle 302 diese Schaltwelle 302 in ihrer Axialrichtung belastet und bewegen kann. Dies kann auch gut anhand der Fig. 18a und 18b erkannt werden, in denen der Excenter 376 in verschiedenen Drehstellungen gezeigt ist, so dass auch der Mitnehmer 390 in verschiedenen Stellungen gezeigt ist. Dort kann im Vergleich deutlich erkannt werden, dass der Bolzen 398, in axialer Bewegungsrichtung der Schaltwelle 302 gesehen, unterschiedliche Axialstellungen hat. Die axiale Bewegungsrichtung der Schaltwelle ist in diesen Fig. 18a und 18b schematisch durch den Doppelpfeil 308 angedeutet. Durch diese Axialverschiebung der Schaltwelle 302 kann also das Wählen in einem Getriebe bewirkt werden. Die Axialbewegung der Schaltwelle 302 entspricht also einer Wählbewegung.

Es ist insbesondere vorgesehen, dass ein fortgesetztes Verdrehen der Mutter 332 gegen ihren Anschlag bewirkt, dass die Schaltwelle 302 mittels des Excenters bzw. des Führungshebels 396 axial hin- und herbewegt wird.

In Fig. 18a und Fig. 18b ist durch den Pfeil 404 schematisch die Drehrichtung des Excenters 376 angezeigt. Anzumerken ist, dass über den bereits oben angesprochenen, einseitig wirkenden Freilauf die Bewegung in der Gegenrichtung gesperrt ist oder zumindest nach einer verhältnismäßigen geringfügigen Bewegung gesperrt ist. Wenn mittels des Verdrehens des Excenters 376 eine angestrebte Wählstellung der Schaltwelle 302 erreicht ist, wird der Elektromotor 312 (wieder) gegensinnig angetrieben, so dass die Mutter 332 von ihrer Anschlagstellung bzw. von dem Excenter 376 wegbewegt wird. Spätestens dabei rastet der einseitig wirkende Freilauf ein, so dass über die Keilverzahnungen an der zweiten Hülse 352 und dem hülsenartigen Abschnitt 378 des Excenters die Mutter anschließend gegen Verdrehen gesichert ist und im wesentlichen rein axial bewegt wird. Die Rastpositionen des einseitig wirkenden Freilaufs sind dabei so, dass der Zahn 346 in Schwenkrichtung im Wesentlichen so positioniert ist, dass er axial in die Keilverzahnung 338 bzw. eine vorbestimmte, zwischen Zähnen bzw. Keilen 342 gelegene Vertiefung der Keilverzahnung 338 geführt wird. Es ist vorgesehen, dass die Keilverzahnung 338 derart ausgebildet ist, dass für jede Schaltposition ein Aufnahmebereich bzw. eine im Gehäuse fest angeordnete Vertiefung der Keilverzahnung 338 zur Aufnahme des Zahns 346 vorgesehen ist.

Für jede Schaltposition bzw. für jeden Gang bzw. für jede Wählstellung, aus der in einen Gang geschaltet werden kann, ist somit eine formschlüssige Verbindung der Mutter mit dem Gehäuse bezüglich der Drehrichtung der Mutter 332 gegeben.

In Abhängigkeit der Axialstellung der Schaltwelle bzw. in Abhängigkeit der eingerasteten Position des einseitig wirkenden Freilaufes weist die Hülse 350 bzw. die Hülse 352 bzw. der Keil bzw. der Zahn 346 unterschiedliche Schwenkstellungen bezüglich seiner Drehachse auf.

In Abhängigkeit dieser Schwenkstellung in Umfangsrichtung der ersten Hülse 350 bzw. der zweiten Hülse 352 bzw. des Keils bzw. des Zahns 346 bzw. eines an einer der Hülsen 350, 352 angeordneten Eingriffsbereichs 410 für die Schwenkhebel 354, 356 wird die Schwenkrichtung der Schaltwelle 302 bzw. der Schaltfinger 304, 306 bei einem Verdrehen der Spindel 330 zum Schalten bestimmt. Dies ist im Ausführungsbeispiel so, dass an der ersten Hülse 350, die an der Mutter 332 angeordnet ist, ein die Umfangsrichtung teilweise überdeckender Ringflansch vorgesehen ist, der den Eingriffsbereich 410 bildet und mit dem jeweils entweder der Schwenkhebel 354 oder der Schwenkhebel 356 in Eingriff kommen kann. Für diesen Eingriff können die Schwenkhebel jeweils einen gabel- oder nutförmigen Abschnitt oder dergleichen aufweisen. Diese Abschnitte sind in einer Neutralstellung, der eine Anschlagposition der Mutter 332 entspricht, so positioniert, dass bei einer im wesentlichen rein rotatorischen Bewegung der Mutter 332 der Eingriffsbereich bzw. der sich teilweise, allerdings nicht vollständig, in Umfangsrichtung erstreckende bzw. radial vorspringende Eingriffsbereich 410 von dem nut- bzw. gabelförmigen Bereich des einen Schwenkhebels 354 in den nut- bzw. gabelförmigen Bereich des anderen Schwenkhebels 356 bewegen kann, und umgekehrt. In Abhängigkeit der Schwenkstellung dieses Eingriffsbereichs 410 (in der Anschlagstellung der Mutter 332) ist bei einer Belastung der Mutter 332 in der dem Anschlag abgewandten Richtung mittels der Spindel 330 der eine oder der andere der Schwenkhebel 354, 356 über seinen gabel- bzw. nutförmigen Bereich mit dem Eingriffsbereich 410 der Hülse 350 bzw. mit der Mutter 332 in Eingriff, so dass dieser eingreifende Schwenkhebel 354 bzw. 356 entsprechend der Bewegung der Mutter 332 verschwenkt wird, wenn die Mutter 332 aus ihrer axialen Anschlagstellung bzw. von ihrem axialen Anschlag wegbewegt wird, bzw. der Bewegung der Mutter folgt.

Wenn die Mutter anschließend bzw. danach wieder in Richtung der Anschlagposition bewegt wird, Wird dieser sich im Eingriff mit der Mutter bzw. dem Eingriffsbereich 410 bzw. dem Ringflansch befindliche Schwenkhebel 354 bzw. 356 entsprechend zurückbewegt bzw. -geschwenkt. Über das bereits oben angesprochene Zahnradsegment 360, das sich an diesem mit der Mutter 332 bzw. dem Eingriffsbereich 410 in Eingriff befindlichen Schwenkhebel 354 bzw. 356 befindet, wird das Zahnrad 362 mitverdreht. Da dieses Zahnrad 362 gleichzeitig in den auf der gegenüberliegenden Seite angeordneten Schwenkhebel 354 bzw. 356 über dessen Zahnradsegment 360 eingreift, wird dieser jeweils andere Schwenkhebel 356 bzw. 354 gegenläufig zu dem in Eingriff mit der Mutter bzw. im Eingriffsbereich 410 befindlichen Schwenkhebel 354 bzw. 356 geschwenkt.

Dieser andere, mitgeschwenkte bzw. von dem jeweils einem Schwenkhebel 354 bzw. 356 über das Zahnrad 362 getriebene Schwenkhebel 356 bzw. 354 schwenkt quasi entsprechend einem "Leerhub". Er greift dabei also insbesondere nicht in die Mutter 332 bzw. in den Eingriffsbereich 410 ein. Je nachdem welcher dieser gegenüberliegend dem Zahnrad 362 angeordneten Schwenkhebel 354, 356 aktuell in die Mutter 332 bzw. im Eingriffsbereich 410 eingreift, wird - insbesondere in Abhängigkeit der Drehrichtung der Spindel 330 - folglich das Zahnrad 362 entweder im Uhrzeigersinn oder im Gegenuhrzeigersinn über ein Zahnradsegment 360 eines der Schwenkhebel 354, 356 getrieben. Dementsprechend wird der Schaltfinger 304 bzw. 306 in Abhängigkeit des Schwenkhebels 354 bzw. 356, der aktuell mit der Mutter 332 bzw. Eingriffsbereich 410 im Eingriff steht, ausgehend von der Neutralstellung im Uhrzeigersinn oder im Gegenuhrzeigersinn verschwenkt. Anzumerken ist allerdings, dass über den Eingriff der Schwenkhebel 354 bzw. 356 jeweils im Uhrzeigersinn und im Gegenuhrzeigersinn auf das Zahnrad 362 bzw. den Schaltfinger 304 bzw. 306 eingewirkt werden kann. Der Unterschied besteht allerdings darin, ob ausgehend von der Neutralstellung des Schaltfingers bzw. der Schaltwelle zunächst im Uhrzeigersinn oder zunächst im Gegenuhrzeigersinn auf das Zahnrad 362 bzw. den Schaltfinger 304 bzw. 306 bzw. Schaltwelle 302 eingewirkt wird.

Durch diese Anordnung ist es also möglich, mittels einem jeweiligen Schaltfinger 304 bzw. 306, ausgehend von der Neutralstellung einer Schaltschiene bzw. ausgehend von der Neutralstellung des entsprechenden Schaltfingers 304 bzw. 306, die entsprechende Schaltschiene - je nach dem welcher Schwenkhebel in dei Mutter 332 bzw. den Eingriffsbereich 410 eingreift - in der einen oder in der anderen ihrer beiden Orientierungen der Axialrichtung auszulenken. Dabei ist insbesondere vorgesehen, das zwischen dem von der Neutralstellung einer solchen Schaltschiene ausgehenden Auslenken in der einen Orientierung ihrer Axialrichtung und dem ebenfalls von der Neutralstellung ausgehenden Auslenken in der anderen Orientierung der Axialrichtung, also dem Schalten eines ersten dieser Schaltschiene zugeordneten Ganges des Getriebes und eines Schaltens eines zweiten dieser Schaltschiene zugeordneten Ganges, in der Betätigungseinrichtung 300 eine Wählbewegung stattfindet. Es ist also insbesondere vorgesehen, dass nicht nur zum Verschieben des Schaltfingers für das Einwirken auf eine andere Schaltschienen ein Wählen stattfindet, sondern auch zum Wechseln der Orientierung, in die auf die jeweils selbe Schaltschiene zum Einlegen eines Ganges eingewirkt wird, eine Wählbewegung stattfindet.

Die Neutralstellung, bei der der Eingriffsbereich 410 von einer Eingriffsstellung in den Schwenkhebel 354 in eine Eingriffstellung in den Schwenkhebel 356 durch rein rotatorische Bewegung der Mutter 332 in ihrer Anschlagsstellung wechseln kann, oder umgekehrt, ist in Fig. 16a gezeigt. In Fig. 16b ist gezeigt, dass der Schwenkhebel 354 in den Eingriffsbereich 410 eingreift und folglich bei einer Axialbewegung der Mutter 332 entsprechend mitverschwenkt wird, während der andere Schwenkhebel 356 quasi entsprechend eines Leerhubs vom Zahnrad 362 getrieben gegenläufig verschwenkt wird. Wenn nun - was nicht gezeigt ist - an Stelle des Schwenkhebels 354 der Schwenkhebel 356 mit der Mutter 332 bzw. dem Eingriffsbereich 410 in Eingriff wäre, würden die Schwenkhebel 354, 356 jeweils entgegengesetzt zur Darstellung gemäß Fig. 16b verschwenkt sein, so dass die durch den Pfeil 372 angezeigte Drehrichtung der Schaltwelle entgegengesetzt orientiert wäre.

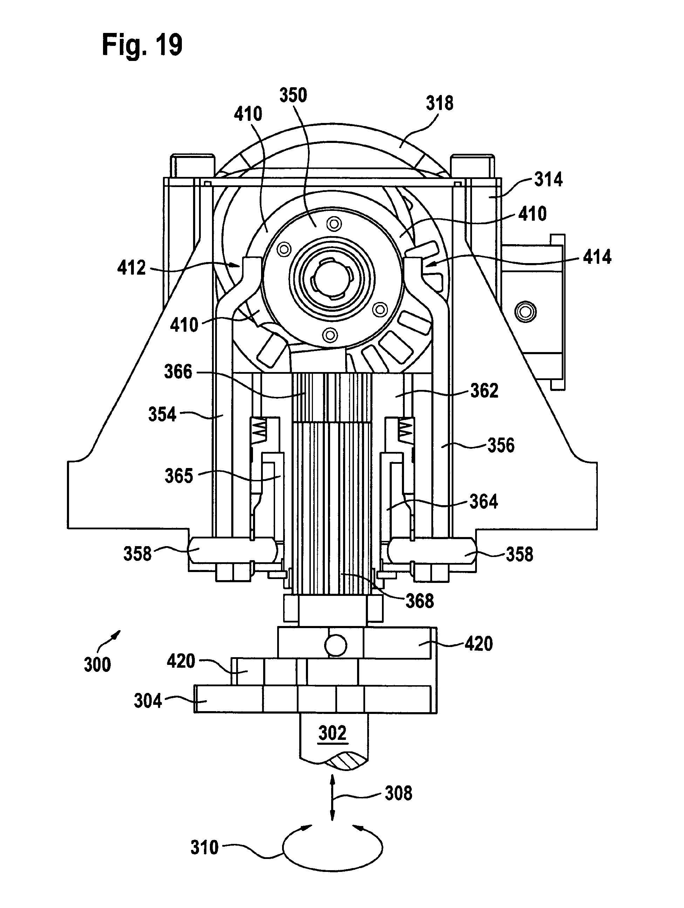

Eine beispielhafte Gestaltung des Eingriffsbereichs 410 sowie der Eingriffsposition bzw. Nicht-Eingriffsposition der Schwenkhebel 354, 356 sind auch gut anhand der Fig. 19 zu erkennen. In Fig. 19 ist eine Ansicht der Betätigungseinrichtung 300 gemäß Fig. 9a oder Fig. 9b gezeigt. Dort ist insbesondere auch ein Endabschnitt des Aktors gezeigt. Anhand der Fig. 19 wird auch deutlich, dass der Eingriffsbereich 410 sich nicht vollständig in Umfangsrichtung erstreckt. Dieser Eingriffsbereich ist in Schwenkrichtung so positioniert, dass der Schwenkhebel 354 axial den Eingriffsbereich 410 umgreift und folglich bei einer Axialbewegung der Mutter 332 entsprechend axial mitgenommen wird, so dass der Schwenkhebel 354 um seine Schwenkachse 358 geschwenkt wird.

Der Eingriffsbereich 410 kann auch als Gangplatte bezeichnet werden. Der Pfeil 412 in Fig. 19 zeigt auf den Bereich, in dem der Schwenkhebel 354 in einen Eingriffsbereich 410 bzw. in die Gangplatte 410 eingreift bzw. umgekehrt. Der Pfeil 414 zeigt auf einen Bereich, in dem der Schwenkhebel 356 hier außer Eingriff mit dem Eingriffsbereich 410 bzw. der Gangplatte 410 ist, so dass er gegenläufig zum Schwenkhebel 354 frei schwenken kann. Die Drehrichtung der Schaltwelle 302 wird also in Abhängigkeit dessen festgelegt, welcher der Schwenkhebel 354, 356 in die Gangplatte bzw. den Eingriffsbereich 410 eingreift.

Die Ausführungsform gemäß den Fig. 9a bis Fig. 21 ist - in beiden Varianten - insbesondere als Active-Interlock-Gestaltung ausgebildet. Es ist also insbesondere vorgesehen, dass mittels der Betätigungseinrichtung 300 ein Getriebe derart betätigt werden kann, dass Wählen bzw. Wählbewegungen vor dem Auslegen des alten Ganges stattfinden kann, und zwar insbesondere bei entsprechender Gestaltung der Schaltschienen des Getriebes. Diese Schaltschienen können dabei insbesondere so sein, dass sie Schaltmäuler aufweisen, die ermöglichen, dass der Schaltfinger 304 bzw. 306 nach dem Einlegen eines Ganges in seine Neutralstellung zurückbewegt werden kann, ohne dass der mittels dieses Schaltfingers 304 bzw. 306 zuvor eingelegte Gang durch diese Bewegung in die Neutralstellung wieder herausgenommen wird. Es ist also insbesondere vorgesehen, dass nicht erforderlich ist, dass - wie in klassisch gestalteten gestuften Getrieben - bei Gangwechselvorgängen ausgehend vom alten Gang stets die folgenden drei Schritte in zeitlicher Reihenfolge erfolgen: "Auslegen des alten Ganges" - "Wählen" - "Einlegen des Zielganges". Der Schaltfinger 304 bzw. 306 ist im Wesentlichen nur für das Einlegen von Gängen zuständig ist; zusätzliche Geometrien übernehmen dabei die Funktion des Auslegens von Gängen. Dabei werden insbesondere sogenannte Nebenbetätigungselemente für die Auslegefunktion verwendet, an welchen zumindest ein Teil dieser Geometrien ausgebildet wird. Derartige, an der Schaltwelle 302 angeordnete Nebenbetätigungselemente sind mit dem Bezugszeichen 420 versehen. Diese Nebenbetätigungselemente 420 können - bezogen auf ein jeweiliges Teilgetriebe - jeweils in Gassen wirken, in denen der Schaltfinger 304 bzw. 306 aktuell nicht wirkt. Derartige zusätzliche Geometrien sind insbesondere auch an den Schaltmäulem der Schaltschienen eines Getriebes, vorgesehen, das mittels der Betätigungseinrichtung 300 betätigt werden kann, wobei die Geometrien an den Schaltmäulem mit denen an den Schaltschienen derart zusammenwirken können, dass sichergestellt wird, dass alle anderen Gänge des gleichen Teilgetriebes ausgelegt und / oder gesperrt sind , bevor ein Zielgang in diesem Teilgetriebe mittels des Schaltfingers 304 bzw. 306 eingelegt wird.

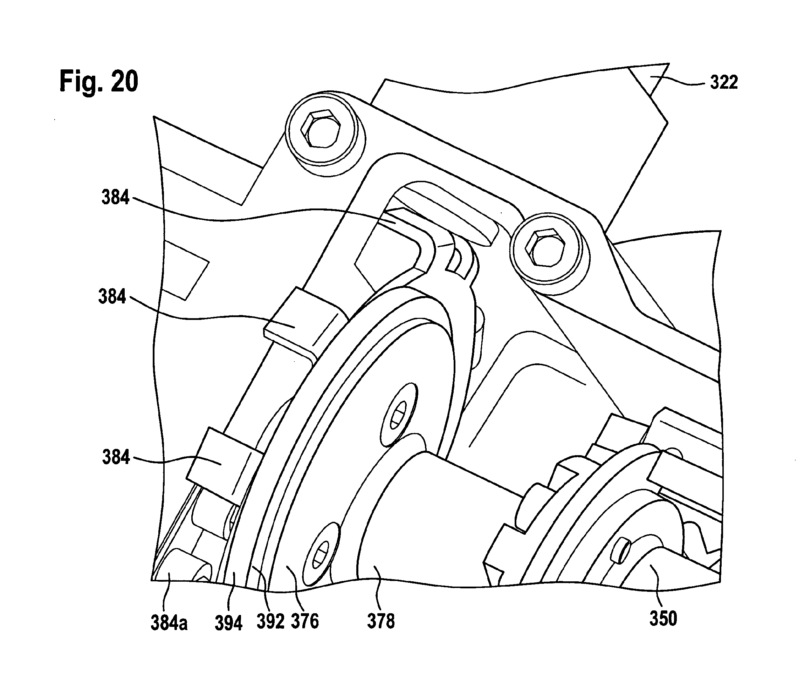

Fig. 20 zeigt einen vergrößerten Ausschnitt der Variation gemäß Fig. 9a im Bereich des Sensors. In Fig. 20 sind gut der Hall-Sensor 322 sowie die Sensor-Vorsprünge 384 bzw. 384a zu erkennen, die mit dem Hall-Sensor 322 zur - insbesondere berührungsfreien - Ermittlung einer Referenzposition zusammenwirken können, bzw. umgekehrt.

Wie angesprochen fehlt bei der Variation gemäß Fig. 9b ein Sensor mit einem Hall-Sensor 322 sowie Sensor-Vorsprüngen 384 bzw. 384a, der zur Ermittlung einer Referenzposition verwendet werden kann.

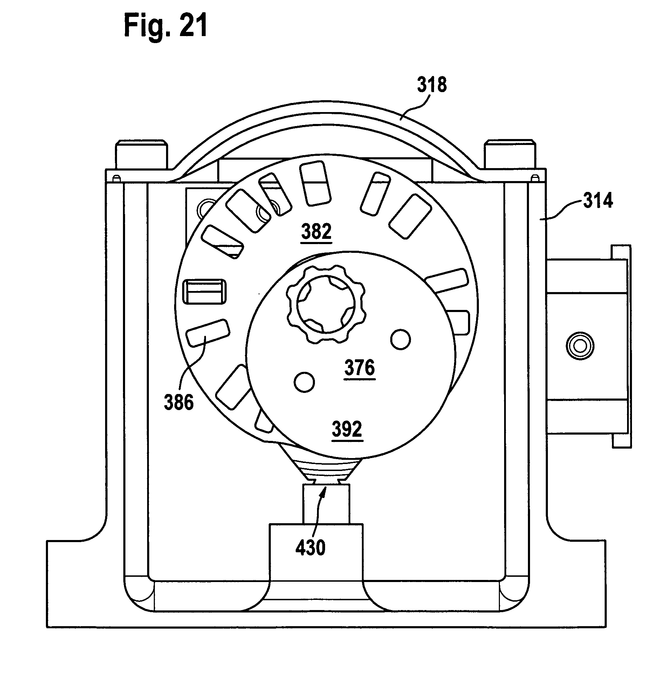

Stattdessen kann bei der Variation gemäß Fig. 9b - wie in Fig. 11b oder Fig. 21 gezeigt - eine Feder-Arretierung bzw. -Rastierung 430 - insbesondere an genau einer Position - vorgesehen sein, mittels welcher, beispielsweise über die Auswertung des Drehmoments bzw. Drehmomentverlaufs in einer Steuerung bzw. einem Steuergerät eine Referenzposition ermittelt werden kann.

Sowohl in der Variation gemäß Fig. 9a als auch in der Variation gemäß Fig. 9b ist insbesondere vorgesehen, dass ein Inkrementalgeber vorgesehen ist, der beispielsweise im Bereich des Elektromotors 312 bzw. im Bereich der Ausgangswelle des Elektromotors vorgesehen ist. Dabei ist insbesondere vorgesehen, dass mittels einer Referenzposition sowie der vom Inkrementalgeber angezeigten Wegänderungen Absolutpositionen ermittelbar sind. Bei Verlust der Referenzposition in der Steuerung kann diese insbesondere in einer der vorgenannten Weisen ermittelt werden.

Mittels der extra vorgesehenen Arretierungen bzw. Durchbrüche 386 (vgl. Fig. 15) bzw. im Zusammenwirken mit einer Sperrklinke bzw. Federelement 380 mit Zunge 388 kann insbesondere eine rückwärtige Wählbewegung in einen unerwünschten Gang verhindert werden, wenn die Verdrehung zum Wählen unadäquat bzw. ungenau erfolgt ist. Dies erfolgt insbesondere in einem Bereich auf den der Pfeil 440 in Fig. 15 zeigt, bzw. einem entsprechenden Bereich in Umfangsrichtung (bei einer Vertiefung bzw. einem Durchbruch 386). Hierdurch wird insbesondere eine Blockierstellung bzw. ein Blockierzustand in bzw. für die Schaltbewegung erzeugt.

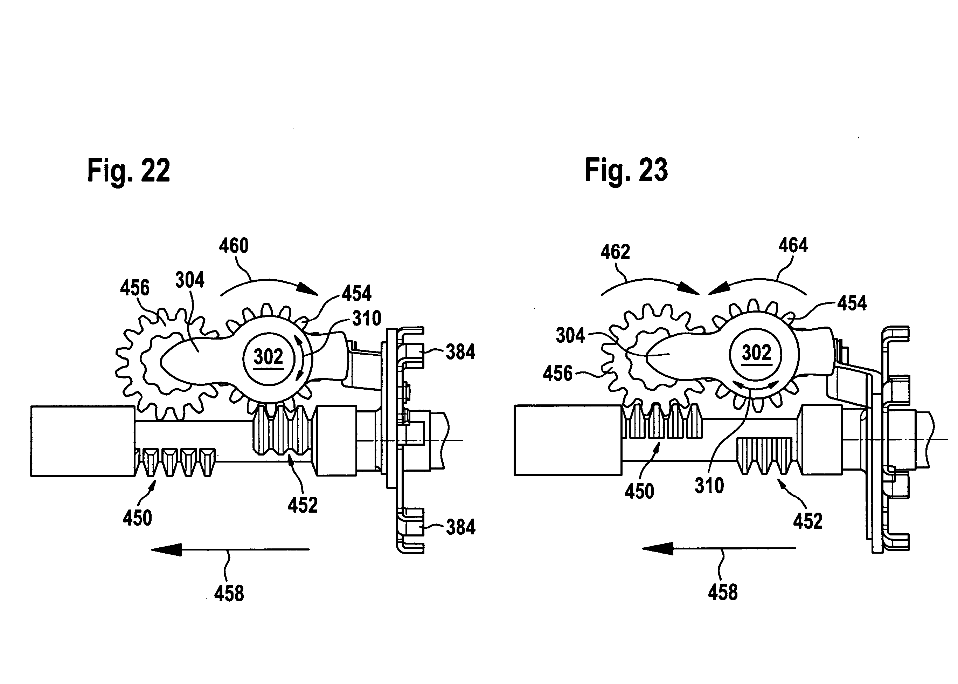

Die Fig. 22 bis 24 zeigen teilweise Ansichten einer weiteren beispielhaften Ausführungsform einer erfindungsgemäßen Betätigungseinrichtung 300. Die Ausführungsform gemäß den Fig. 22 bis 24 kann im Wesentlichen so gestaltet sein, wie es anhand der Fig. 9a bis 21 erläutert wurde (beide Variationen), wobei sich die Gestaltung gemäß Fig. 22 bis 24 allerdings insbesondere hinsichtlich des Bewirkens der Schaltbewegung des Schaltfingers 304 bzw. 306 von der Gestaltung gemäß Fig. 9a bis 21 unterschiedet.

Bei der Gestaltung gemäß Fig. 22 bis 24 ist insbesondere die Spindelmutter bzw. eine damit verbundenen Hülse abweichend von der Gestaltung gemäß Fig. Fig. 9a bis 21 gestaltet. Dort sind nämlich - hier zwei - axial beabstandet und umfangsmäßig - z.B. im Wesentlichen um 180° - zueinander versetzt Zahnstangenabschnitte 450, 452 angeordnet. Die Schwenkhebel 354, 356 fehlen hier. Das gegensinnige Verschwenken der Schaltwelle 302 bzw. des Schaltfingers 304 bzw. 306 aus der Neutralstellung kann bei Gestaltung gemäß Fig. 22 bis 24 durch das Zusammenwirken eines an der Schaltwelle 302 angeordneten Zahnrades 454 mit dem Zahnstangenabschnitt 452 bzw. durch das Zusammenwirken des Zahnstangenabschnitts 450 mit einem Zahnrad 456, das in das an der Schaltwelle 302 angeordnete Zahnrad 454 eingreift, erfolgen.

In einem ersten Schwenkstellungsbereich der Mutter 332 bzw. der Zahnstangenabschnitte 450, 452 (vgl. Fig. 22) greift der Zahnstangenabschnitt 452 in das an der Schaltwelle 302 angeordnete Zahnrad 454 ein, so dass eine Axialverschiebung der Mutter 332 (ausgehend von ihrer Anschlagstellung bzw. der Neutralstellung des Schaltfingers 304 bzw. 306) gegenüber der Gewindespindel 330 (vgl. Erläuterungen zu den Fig. 9a bis 21) in Richtung des Pfeils 458 ein Verschwenken des Schaltfingers 304 bzw. 306 in Richtung des Pfeils 460 bewirkt. Dabei ist das Zahnrad 456 außer Eingriff mit dem Zahnstangenabschnitt 450.

In einem zweiten Schwenkstellungsbereich der Mutter 332 bzw. der Zahnstangenabschnitte 450, 452 (vgl. Fig. 23) greift der Zahnstangenabschnitt 450 in das Zahnrad 456 ein, so dass eine Axialverschiebung der Mutter 332 (ausgehend von ihrer Anschlagstellung bzw. der Neutralstellung des Schaltfingers 304 bzw. 306) gegenüber der Gewindespindel 330 (vgl. Erläuterungen zu den Fig. 9a bis 21) in Richtung des Pfeils 458 ein Verschwenken des Zahnrades 456 in Richtung des Pfeils 462 bewirkt, so dass dieses Zahnrad 456 das an der Schaltwelle 302 angeordnete Zahnrad 454 über seinen Eingriff gegensinnig entsprechend dem Pfeil 464 antreibt und dementsprechend eine im Vergleich zur Eingriffssituation gemäß Fig. 22 gegensinnige Schaltfingerverschwenkung bewirkt. Dabei ist das Zahnrad 454 außer Eingriff mit dem Zahnstangenabschnitt 452.

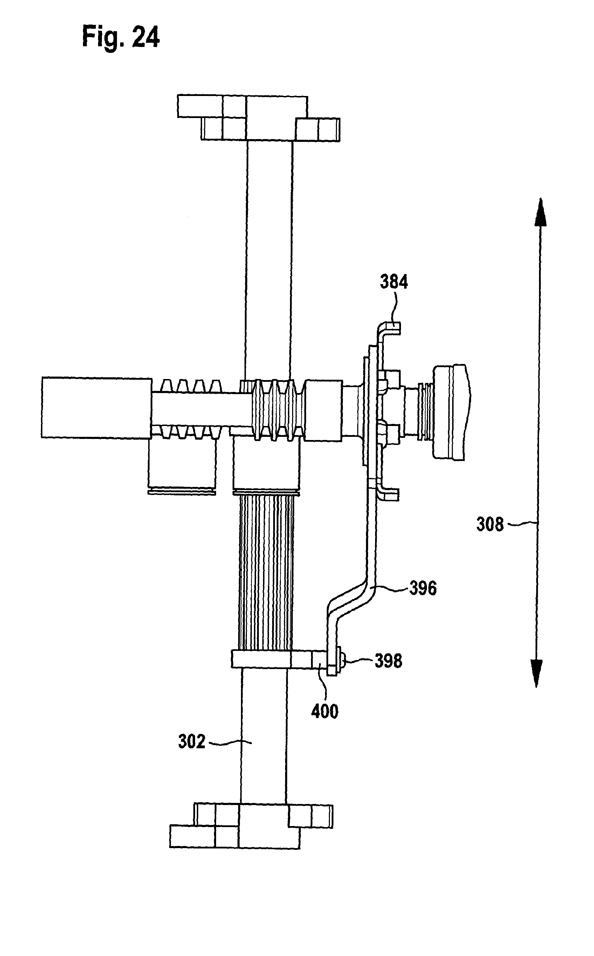

Die Wählbewegung bzw. -richtung ist in Fig. 24 schematisch durch den Pfeil 308 angedeutet.

Wie die Sensorvorsprünge 384 in den Fig. 22 bis 24 zeigen, kann die Gestaltung eine Sensor-Variation sein, was allerdings nicht sein muss.

### Bezugszeichenliste

- 1: Betätigungsvorrichtung
- 10: Antriebswelle bzw. Ausgangswelle
- 12: Motor/Elektromotor
- 14: erste Drehrichtung von 10
- 16: zweite Drehrichtung von 10
- 18: Mutter-Gewindespindel-Anordnung
- 20: Gewindespindel
- 22: Mutter
- 24: Lagermittel
- 26: Längsachse von 10, 20. 22
- 28: Stelleinrichtung
- 30: Steuerelement/Platte
- 32: Doppelpfeil
- 34: Anschlag
- 36: Stellelement
- 38: Inkrementaler Wegaufnehmer
- 40: Gewinde von 20
- 42: Schaltelement
- 44: Schaltelement
- 46: Eingriffsbereich von 42
- 48: Schwenkachse
- 50: erster Eingriffsbereich
- 52: erster Eingriffsbereich
- 54: zweiter Eingriffsbereich
- 55: Eingriffsbereich
- 56: Zusatzstelleinrichtung
- 58: Kragen von 56
- 60: elektronisches Steuergerät
- 62: gestrichelte Linie
- 80: Platte bzw. von 56
- 82: Schaltelement
- 84: Schaltelement
- 86: Spiel bzw. Abstand
- 88: Interlockpunkt bzw. Vorsprung
- 90: Interlockpunkt bzw. Vorsprung
- 92: Interlockpunkt bzw. Vorsprung
- 94: Profilierung
- 96: Profilierung
- 98: Rastelement
- 100: Profilierungserhöhung
- 102: Verdrehsicherung bzw. Freilauf
- 120: Gewinde von 22
- 122: Lager von 20
- 124: Führungseinrichtung
- 126: erste Schulter
- 128: zweite Schulter
- 130: Gehäuse
- 132: Buchse
- 134: Pfeil bzw. Moment
- 150: erstes Teil von 36
- 152: zweites Teil von 36
- 154: Öffnung in 30
- 170: Schritt
- 172: Schritt
- 200: Betätigungseinrichtung
- 200 a: Unterbaugruppe
- 200 b: Unterbaugruppe
- 200 c: Trennlinie
- 210 a: Antriebswelle
- 210 b: Antriebswelle
- 212 a: Elektromotor
- 212 b: Elektromotor
- 236 a: Stellelement
- 236 b: Stellelement
- 242 a: Schaltelement
- 242 b: Schaltelement
- 246 a: Eingriffsbereich
- 246 b: Eingriffsbereich
- 250 a: Geberzylinder
- 250 b: Geberzylinder
- 251 a: Druckleitung
- 251 b: Druckleitung
- 254 a: Eingriffsbereich
- 254 b: Eingriffsbereich
- 255 a: Eingriffsbereich
- 255 b: Eingriffsbereich
- 300: Betätigungseinrichtung
- 302: Schaltwelle von 302
- 304: Schaltfinger von 302
- 306: Schaltfinger von 302
- 308: Doppelpfeil (Axialrichtung von 302)
- 310: Doppelpfeil (Schwenkrichtung von 302)
- 312: Antriebseinrichtung, Elektromotor
- 314: Gehäuse
- 316: Halterung
- 318: Deckel von 314
- 320: Aufnahmebereich für 322 an 314
- 322: Hallsensor
- 330: Gewindespindel
- 332: Mutter
- 334: Motorausgangswelle von 312
- 335: Zahnradsatz
- 336: Verdrehsicherung für 332
- 338: Keilverzahnung von 336
- 340: Hülse von 314
- 342: Keile von 338
- 344: Einführschräge von 342
- 346: Keil bzw. Zahn von 332
- 348: Einführschräge von 346
- 350: Hülse an 332
- 352: zweite Hülse an 332
- 354: erster Schwenkhebel
- 356: zweiter Schwenkhebel
- 358: Schwenkachse
- 360: Zahnradsegment von 354 bzw. 356
- 362: Zahnrad an 364
- 364: Hohlwelle
- 365: Gleitlagerbuchse
- 366: Keilverzahnung an 364
- 368: (Gegen)Verzahnung an 302
- 370: Pfeil
- 372: Pfeil
- 374: Drehmitnahme, Keilverzahnung an 352
- 376: Excenter
- 378: hülsenartiger Abschnitt
- 380: Federelement
- 382: Scheibe
- 384: Vorsprung an 382
- 384a: Vorsprung an 382
- 386: Vertiefung bzw. Durchbruch in 382
- 388: Zunge von 380
- 390: Mitnehmer
- 392: Excenterscheibe von 376
- 394: Ringflansch
- 396: Führungshebel
- 398: Bolzen an 400
- 400: Hülse an 302
- 404: Pfeil
- 410: Eingriffsbereich an 350 für 354, 356
- 412: Pfeil
- 414: Pfeil
- 420: Nebenbetätigungselement
- 430: Rastierung
- 440: Pfeil
- 450: Zahnstangenabschnitt
- 452: Zahnstangenabschnitt
- 454: Zahnrad an 302
- 456: Zahnrad
- 458: Pfeil
- 460: Pfeil
- 462: Pfeil
- 464: Pfeil

## Patentansprüche

1. Betätigungseinrichtung (1) zum Beaufschlagen zumindest zweier, voneinander beabstandeter Schaltelemente (42, 44) mit jeweils zumindest einem ersten Eingriffsbereich (50, 52) zur Betätigung dieser mit folgenden Merkmalen:
- eine Antriebswelle (10) ist von einem Motor (12) in beide Drehrichtungen antreibbar;
- die Antriebswelle (10) weist ein erstes Gewindeprofil (20) auf;
- auf dem ersten Gewindeprofil (20) der Antriebswelle (10) ist eine Stelleinrichtung (28) mittels eines zweiten, zu dem ersten Gewindeprofil (20) komplementären Gewindeprofils (22) verdrehbar aufgenommen;
- ein mit der Stelleinrichtung (28) drehfest verbundenes Steuerelement (30) bewirkt bei einer Verdrehung der Antriebswelle (10) in eine erste Drehrichtung ein Verdrehen der Stelleinrichtung (28) mit der Antriebswelle (10), wobei zumindest ein zweiter, auf der Stelleinrichtung (28) vorgesehener Eingriffsbereich (54) auf zumindest einen ersten Eingriffsbereich (50, 52) zumindest eines Schaltelements (42, 44) positioniert wird;
- das Steuerelement (30) steuert bei einer Verdrehung der Antriebswelle (10) in eine zweite, der ersten Drehrichtung entgegen gesetzten, zweiten Drehrichtung eine Axialverlagerung der Stelleinrichtung (28) gegenüber der Antriebswelle (10) und damit eine Betätigung des zumindest einen Schaltelements (42, 44), auf dessen ersten Eingriffsbereich (50, 52) der zweite Eingriffsbereich (54) positioniert ist.

2. Betätigungseinrichtung (1) nach Anspruch 1, **dadurch gekennzeichnet, dass** der axiale Weg zwischen der Stelleinrichtung (28) und der Antriebswelle (10) begrenzt ist, so dass bei einer Verdrehung der Antriebswelle (10) in die erste Drehrichtung die Stelleinrichtung (28) nach Erreichen des maximalen Weges in Drehrichtung mitgenommen wird.

3. Betätigungseinrichtung (1) nach Anspruch 2, **dadurch gekennzeichnet, dass** der axial Weg der Stelleinrichtung (28) gegenüber der Antriebswelle (10) durch einen Anschlag (34) begrenzt wird.

4. Betätigungseinrichtung (1) nach einem der Ansprüche 2 oder 3, **dadurch gekennzeichnet, dass** am Steuerelement (30) bei Verdrehung der Antriebswelle (10) in die erste Drehrichtung eine Bremseinrichtung (174) wirksam ist, deren Bremskraft größer als eine der bei der Verdrehung zwischen Antriebswelle (10) und Stelleinrichtung (28) auftretenden Reibkraft ist.

5. Betätigungseinrichtung (1) nach einem der Ansprüche 1 bis 4, **dadurch gekennzeichnet, dass** bei Verdrehung der Antriebswelle (10) in die zweite Drehrichtung das Steuerelement (30) in der Verdrehung an einer zuvor eingestellten Position gehemmt wird.

6. Betätigungseinrichtung (1) nach Anspruch 5, **dadurch gekennzeichnet, dass** die Hemmung mittels einer Verdrehsicherung (102) erfolgt.

7. Betätigungseinrichtung (1) nach Anspruch 5 oder 6, **dadurch gekennzeichnet, dass** eine Hemmung für zumindest eine Positionierung zwischen einem ersten und einem zweiten Eingriffsbereichs vorgesehen ist.

8. Betätigungseinrichtung (1) nach einem der Ansprüche 1 bis 7, **dadurch gekennzeichnet, dass** zumindest zwei Schaltelemente (42, 44) bei einem unterschiedlichen Relativbewegung zwischen Antriebswelle (10) und Schalteinrichtung (28) und damit hintereinander betätigt werden.

9. Betätigungseinrichtung (1) nach 1 bis 8, **dadurch gekennzeichnet, dass** zumindest ein Schaltelement (42, 44) ein Einlegen eines Ganges eines automatisierten Getriebes bewirkt.

10. Betätigungseinrichtung (1) nach einem der Ansprüche 1 bis 9, **dadurch gekennzeichnet, dass** zumindest ein Schaltelement (42, 44) eine Reibungskupplung im Antriebsstrang eines Kraftfahrzeugs betätigt.

11. Betätigungsvorrichtung mit einer drehbar gelagerten Antriebswelle (10), welche Antriebswelle (10) um ihre Längsachse (26) in beiden Drehrichtungen, nämlich in einer ersten Drehrichtung (14) sowie einer zweiten, der ersten (14) entgegen gesetzten Drehrichtung (16), bewegt werden kann, und mit einer Mutter-Gewindespindel-Anordnung (18), die eine Gewindespindel (20) sowie eine mit ihrem Gewinde (120) in das Gewinde (40) der Gewindespindel (20) eingreifende Mutter (22) aufweist, wobei das Teil dieser Mutter-Gewindespindel-Anordnung (18), also die Gewindespindel (20) oder die Mutter (22), das im Kraftfluss der Antriebswelle (10) zugewandt bzw. näher gelegen ist, von der Antriebswelle (10) drehend angetrieben werden kann, und wobei das andere Teil der Mutter-Gewindespindel-Anordnung (18), also die Mutter (22) oder die Gewindespindel (20), mit einer Stelleinrichtung (28), insbesondere fest, gekoppelt ist, so dass die, insbesondere in Richtung der Längsachse (26) der Mutter (22) bzw. der Gewindespindel (20) gelegene, Axialstellung der Stelleinrichtung (28) verändert werden kann, wobei ein Anschlag (34) vorgesehen ist, der die Axialbeweglichkeit der Stelleinrichtung (28) in der einen Orientierung der Axialrichtung begrenzt und wobei dieser Anschlag (34) mittels eines Drehens der Antriebswelle (10) in einer ersten Drehrichtung (14) angefahren werden kann, und wobei dieser Anschlag (34) bewirkt, dass nach Erreichen des Anschlags (34) und bei fortgesetzter Drehbewegung der Antriebswelle (10) in der ersten Drehrichtung (14) die Stelleinrichtung (28) bei im Wesentlichen unveränderter Axialstellung im Wesentlichen rein rotatorisch oder schwenkend bewegt wird, und wobei die Stelleinrichtung (28) in Bezug auf die dieser Bewegung zugeordnete Drehachse bzw. Schwenkachse (26) rotationsasymmetrisch gestaltet ist und/oder ein in Bezug auf diese Dreh- bzw. Schwenkachse (26) rotationsasymmetrisch angeordnetes Stellelement (36) aufweist, dessen Stellung in Drehrichtung bei dieser rein rotatorischen bzw. rein schwenkenden Bewegung der Stelleinrichtung (28) verändert wird, und dass wenigstens eine, insbesondere einseitig wirkende, Verdrehsperre bzw. wenigstens ein, insbesondere einseitig wirkender, Freilauf (102) vorgesehen ist, welche bzw. welcher in wenigstens zwei Dreh- bzw. Schwenkstellungen der Stelleinrichtung (28) diese (28) so halten kann, dass in diesen Haltestellungen, insbesondere einseitig wirkend, jeweils ein Drehen bzw. Schwenken der Stelleinrichtung (28) um die Dreh- bzw. Schwenkachse (26) verhindert wird, wenn die Antriebswelle (10) in der zweiten Drehrichtung (16) angetrieben wird, so dass die Stelleinrichtung (28) dann jeweils axial bzw. translatorisch, und insbesondere in gleich bleibender Drehstellung, bewegt wird, wenn die Antriebswelle (10) in der zweiten Drehrichtung (16) angetrieben bzw. weiter angetrieben wird.

12. Betätigungsvorrichtung, insbesondere nach Anspruch 11, mit einer Antriebseinrichtung (12) und mit einer gegenüber dieser Antriebseinrichtung (12) relativbeweglich angeordneten Stelleinrichtung (28), die mittels der Antriebseinrichtung (12) bewegt werden kann, wobei die Stellung der Stelleinrichtung (28) in Dreh- bzw. Schwenkrichtung verändert werden kann und wobei die Stellung der Stelleinrichtung (28) in Axialrichtung bzw. in Richtung einer dieser Dreh- bzw. Schwenkrichtung zugeordneten Dreh- bzw. Schwenkachse verändert werden kann, **dadurch gekennzeichnet, dass** die Antriebseinrichtung (12) genau einen Elektromotor (12) mit einer von dem Elektromotor (12) drehend getriebenen Ausgangswelle (10) aufweist, und die Stelleinrichtung (28) mittels dieser Ausgangswelle (10) jeweils zur Erzeugung der Stellungsänderung der Stelleinrichtung (28) in Dreh- bzw. Schwenkrichtung sowie zur Erzeugung der Stellungsänderung der Stelleinrichtung (28) in Axialrichtung bzw. in Richtung der Dreh- bzw. Schwenkachse getrieben wird, und wobei die Stellung der Stelleinrichtung (28) in Dreh- bzw. Schwenkrichtung in wenigstens einer Stellung der Stelleinrichtung (28) im Wesentlichen unabhängig von einer Stellungsänderung in Axialrichtung bzw. in Richtung der Dreh- bzw. Schwenkachse mittels des Elektromotors (12) bzw. dessen Ausgangswelle (10) veränderbar ist, und die Stelleinrichtung (28) in unterschiedlichen Dreh- bzw. Schwenkstellungen mittels der Ausgangswelle (10) jeweils im Wesentlichen rein translatorisch in Axialrichtung bzw. in Richtung der Dreh- bzw. Schwenkachse bewegt werden kann und/oder wobei die Stellung der Stelleinrichtung (28) in Axialrichtung bzw. in Richtung der Dreh- bzw. Schwenkachse in wenigstens einer Stellung der Stelleinrichtung (28) im Wesentlichen unabhängig von einer Stellungsänderung in Dreh- bzw. Schwenkrichtung veränderbar ist, und die Stelleinrichtung (28) in unterschiedlichen Axialstellungen mittels der Ausgangswelle (10) jeweils im Wesentlichen rein rotatorisch bzw. schwenkend bewegt werden kann.

13. Betätigungsvorrichtung, nach einem der Ansprüche 11 oder 12, für ein Kraftfahrzeuggetriebe, welches Kraftfahrzeuggetriebe mehrere Gangstufen mit unterschiedlichen Übersetzungen aufweist, wobei mittels der Betätigungsvorrichtung (1) eine bzw. die in den Kraft- bzw. Momentenfluss des Kraftfahrzeuggetriebe geschaltete Gangstufe gewechselt werden kann, wobei diese Betätigungsvorrichtung (1) im Betrieb Stellbewegungen erzeugt, die diese Gangwechsel ermöglichen und wobei ferner diese Stellbewegungen so sind, dass ausgehend von wenigstens einer geschalteten Gangstufe, alternativ, in wenigstens drei verschiedene andere Gangstufen direkt, also ohne dass zwischendurch eine jeweils weitere Gangstufe eingelegt bzw. durchlaufen werden muss, geschaltet werden kann, **dadurch gekennzeichnet, dass** die Betätigungsvorrichtung (1) genau einen Elektromotor (12) aufweist, der sämtliche Stellbewegungen der Betätigungsvorrichtung (1) bewirkt.

14. Betätigungsvorrichtung nach einem der Ansprüche 11 bis 13, **dadurch gekennzeichnet, dass** das Teil (20) der Mutter-Gewindespindel-Anordnung (18), das im Kraftfluss der Antriebswelle (10) zugewandt bzw. näher gelegen ist, die Gewindespindel (20) ist und das andere Teil (22) der Mutter-Gewindespindel-Anordnung (18) die Mutter (22) ist.

15. Betätigungsvorrichtung nach einem der Ansprüche 11 bis 14, **dadurch gekennzeichnet, dass** die Betätigungsvorrichtung (1) genau einen Elektromotor (12) mit einer im Betrieb drehend angetriebenen Ausgangswelle (10) aufweist, wobei diese Ausgangswelle (10) die Antriebswelle (10) ist, und wobei der Elektromotor (12) wahlweise so angesteuert oder geschaltet werden kann, dass diese Ausgangswelle (10) in einer ersten Drehrichtung (14) belastet und angetrieben wird, oder in einer zweiten, der ersten entgegen gesetzten Drehrichtung (16).

16. Betätigungsvorrichtung nach einem der Ansprüche 11 bis 15, **dadurch gekennzeichnet, dass** die Betätigungsvorrichtung (1) eine Kraftfahrzeuggetriebe-Betätigungseinrichtung (1) oder ein Bestandteil einer Kraftfahrzeuggetriebe-Betätigungseinrichtung (1) ist, mittels welcher Gänge eines Kraftfahrzeuggetriebes gewechselt werden können.

17. Betätigungsvorrichtung nach einem der Ansprüche 11 bis 16, **dadurch gekennzeichnet, dass** die, insbesondere einseitig wirkende, Verdrehsperre bzw. der, insbesondere einseitig wirkende, Freilauf (102) für mehrere in einem Kraftfahrzeuggetriebe einlegbaren Gänge, und insbesondere für jeden Gang, jeweils eine separate Sperrstellung aufweist, so dass die Stelleinrichtung (28) jeweils in einer vorbestimmten Drehstellung gehalten wird bzw. bei Erreichen dieser Drehstellung in dieser Drehstellung gehalten wird, wenn die Antriebswelle (10) in der zweiten Drehrichtung (16) angetrieben wird.

18. Betätigungsvorrichtung nach Anspruch 17, **dadurch gekennzeichnet, dass** die Stelleinrichtung (28) in diesen jeweiligen Halte- bzw. Sperrstellungen der Verdrehsperre bzw. des Freilaufes (102) in Axialrichtung im Wesentlichen rein translatorisch bewegt wird, wenn die Antriebwelle (10) in der zweiten Drehrichtung (16) angetrieben wird bzw. weiter angetrieben wird, und ein Stellelement (36) der Stelleinrichtung (28) im Wesentlichen translatorisch bewegt wird und in ein Schaltelement (42, 44, 82, 84), wie Schwenkhebel (42, 44) oder dergleichen, eingreift, und durch diesen Eingriff und gegebenenfalls wenigstens ein zwischengeschaltetes Element, wie Schaltschiene, eine Synchronisation im Kraftfahrzeuggetriebe und/oder ein Schalten in einen Gang des Kraftfahrzeuggetriebes bewirkt, wobei die durch die Verdrehsperre bzw. den Freilauf (102) gehaltene Halte- bzw. Schwenkstellung diesem Gang zugeordnet ist.

19. Betätigungsvorrichtung nach einem der Ansprüche 11 bis 18, **dadurch gekennzeichnet, dass** nach dem, mittels des Drehens der Antriebswelle (10) in der ersten Drehrichtung (14) bewirkten Anfahren des Anschlags (34) durch ein weiteres Drehen oder Schwenken der Antriebswelle (10) in dieser ersten Drehrichtung (14) ein Gang des Kraftfahrzeuggetriebes gewählt werden kann.

20. Betätigungsvorrichtung nach Anspruch 19, **dadurch gekennzeichnet, dass** mittels eines sich an das Wählen anschließenden Drehens der Antriebswelle (10) in der zweiten Drehrichtung (16) der Antriebswelle (10) der gewählte Gang geschaltet werden kann.

21. Betätigungsvorrichtung nach einem der Ansprüche 11 bis 20, **dadurch gekennzeichnet, dass** der Anschlag (34) fest an der Gewindespindel (20) vorgesehen ist.

22. Betätigungsvorrichtung nach einem der Ansprüche 11 bis 21, **dadurch gekennzeichnet, dass** mehrere Schaltelemente (42, 44), wie schwenkbar gelagerte Schwenkhebel (42, 44), vorgesehen sind, die von der Stelleinrichtung (28) betätigt werden können.

23. Betätigungsvorrichtung nach Anspruch 22, **dadurch gekennzeichnet, dass** diese Schwenkhebel (42, 44) sowie die Schwenkachse (48) dieser Schwenkhebel (42, 44) so positioniert sind, dass bei einer auf die Schwenkhebel (42, 44) gerichteten translatorischen Bewegung der Stelleinrichtung (28) und bei mittels der, insbesondere einseitig wirkenden, Verdrehsperre bzw. mittels des, insbesondere einseitig wirkenden, Freilaufs (102) blockierter Verdrehbeweglichkeit der Stelleinrichtung (28) ein Stellelement (36) auf einen Eingriffsbereich (50, 52, 54) eines Schwenkhebels (42, 44) zu bewegt wird, und diesen bei Erreichen des Eingriffsbereichs (50, 52, 54) belastet, wobei jeder dieser Schwenkhebel (42, 44) - bei jeweils entsprechender bzw. angepasster Drehstellung der Stelleinrichtung (28) - von diesem oder einem Stellelement (36) der Stelleinrichtung (28) belastet werden kann, um insbesondere dass Einlegen eine jeweils zugeordneten Gangs des Kraftfahrzeuggetriebes mittels dieser Belastung zu bewirken.

24. Betätigungsvorrichtung nach Anspruch 23, **dadurch gekennzeichnet, dass** wenigstens ein Schwenkhebel (42, 44) mittels der Stelleinrichtung (28) in beiden Schwenkrichtungen belastet bzw. betätigt werden kann.

25. Betätigungsvorrichtung nach einem der Ansprüche 11 bis 24, **dadurch gekennzeichnet, dass** die Stelleinrichtung (28) eine Platte (30) aufweist, an welcher ein Stellelement (36) angeordnet ist, das insbesondere als Bolzen gestaltet ist.

26. Betätigungsvorrichtung nach einem der Ansprüche 11 bis 25, **dadurch gekennzeichnet, dass** wenigstens ein elastisches Element, wie Feder (156), vorgesehen ist und dieses elastische Element (156) belastet wird, wenn mittels der Betätigungsvorrichtung (1) im Rahmen des Einlegens eines Gangs in einem Kraftfahrzeuggetriebe synchronisiert wird.

27. Betätigungsvorrichtung nach Anspruch 26, **dadurch gekennzeichnet, dass** das elastische Element eine Feder (156) ist und die Stelleinrichtung (28) eine Platte (30) aufweist sowie ein Stellelement (36), wie Bolzen oder Stift, wobei diese Feder (156) sich einerseits gegen das Stellelement (36) und andererseits gegen die Platte (30) abstützt.

28. Betätigungsvorrichtung nach einem der Ansprüche 11 bis 27, **dadurch gekennzeichnet, dass** den Schwenkhebeln (42, 44) jeweils eine Neutralstellung zugeordnet ist, und eine Zusatzstelleinrichtung (56) vorgesehen ist, welche vorbestimmte Schwenkhebel (42, 44) in diese Neutralstellung bewegt, wenn die Stelleinrichtung (28) auf die Schwenkhebel (42, 44) zu bewegt wird, und zwar bevor die Stelleinrichtung (28) in einen dieser Schwenkhebel (42, 44) zum Einlegen eines Ganges in einem Kraftfahrzeuggetriebe und/oder zum Auslösen eines Synchronisation in dem Kraftfahrzeuggetriebe betätigend eingreift.

29. Betätigungsvorrichtung nach Anspruch 28, **dadurch gekennzeichnet, dass** die Zusatzstelleinrichtung (56) fest mit der Stelleinrichtung (28) verbunden ist.

30. Betätigungsvorrichtung nach einem der Ansprüche 28 und 29, **dadurch gekennzeichnet, dass** die Schwenkhebel (42, 44) jeweils wenigstens zwei in Richtung der Stelleinrichtung (28) bzw. der Zusatzstelleinrichtung (56) gerichtete Vorsprünge (50, 52, 54) aufweisen, und die Schwenkachsen (48) der Schwenkhebel (42, 44) so angeordnet sind, dass einer dieser jeweiligen Vorsprünge (50, 52, 54) außerhalb der Neutralstellung des betreffenden Schwenkhebels (42, 44) in Richtung der Stelleinrichtung (28) bzw. der Zusatzstelleinrichtung (56) ausgelenkt ist und der andere in der von dieser Stelleinrichtung (28) bzw. Zusatzstelleinrichtung (56) weggerichteten Richtung, und dass die Zusatzstelleinrichtung (56) beim Bewegen des betreffenden Schwenkhebels (42, 44) in die Neutralstellung zunächst den in Richtung der Stelleinrichtung (28) bzw. der Zusatzstelleinrichtung (56) ausgelenkten Vorsprung (50, 52, 54) belastet, wobei die Zusatzstelleinrichtung (56) zwischen die Vorsprünge (50, 52, 54) des gleichen Schwenkhebels (42, 44) eingreifen kann und bei oder kurz vor Erreichen der Neutralstellung des betreffenden Schwenkhebels (42, 44) eingreift.

31. Betätigungsvorrichtung nach einem der Ansprüche 28 bis 30, **dadurch gekennzeichnet, dass** die Zusatzstelleinrichtung (56) einen Kragen (58) aufweist und/oder eine Platte (80) aufweist oder ist.

32. Betätigungsvorrichtung nach einem der Ansprüche 28 bis 31, **dadurch gekennzeichnet, dass** die Zusatzstelleinrichtung (56) wenigstens eine Ausnehmung aufweist, die ermöglicht, dass der zu betätigende Schwenkhebel (42, 44) in diesen ausgenommenen Bereich geschwenkt wird oder in seiner Schwenkbewegung durch die Zusatzstelleinrichtung (56) nicht blockiert wird.

33. Betätigungsvorrichtung nach einem der Ansprüche 11 bis 32, **dadurch gekennzeichnet, dass** wenigstens eine Wegerfassungseinrichtung (38) vorgesehen ist, und zwar insbesondere eine Wegerfassungseinrichtung (38) mit einem inkrementalen Wegaufnehmer.

34. Betätigungsvorrichtung Anspruch 33, **dadurch gekennzeichnet, dass** wenigstens eine Wegerfassungseinrichtung (38) vorgesehen ist, welche die Drehstellung der Stelleinrichtung (28) ermittelt, wobei die Stelleinrichtung (28) in wenigstens einer durch den Anschlag (34) blockierten Stellung auch in der Gegenrichtung an einer Beweglichkeit blockiert ist, so dass diese Stellung zum Abgleich des Wegzählers (38) verwendet werden kann.

35. Betätigungsvorrichtung nach einem der Ansprüche 11 bis 34, **dadurch gekennzeichnet, dass** sich die Stelleinrichtung (28) relativbeweglich an einem Gehäuse (130) abstützt, und zwar insbesondere mittels ineinander greifender Schultern, von denen eine an der Stelleinrichtung (28) eine am Gehäuse (130) angeordnet ist, und zwischen welchen gegebenenfalls eine Lagerbuchse (132), wie Gleitlagerbuchse (132), positioniert ist.

36. Betätigungsvorrichtung nach einem der Ansprüche 11 bis 36, **dadurch gekennzeichnet, dass** mittels eines Verdrehens der Antriebs- bzw. Ausgangswelle (10) in der ersten Drehrichtung (14) Gänge im Kraftfahrzeuggetriebe gewählt werden können, wobei die Stelleinrichtung (28) bei diesem Wählen im Wesentlichen rein rotatorisch bewegt wird, und dass mittels eines Verdrehens der Antriebs- bzw. Ausgangswelle (10) in der zweiten, der ersten (14) entgegen gesetzten Drehrichtung (16) der jeweils gewählte Gang geschaltet werden kann bzw. geschaltet wird.

37. Betätigungsvorrichtung nach einem der Ansprüche 11 bis 36, **dadurch gekennzeichnet, dass** ein elektronisches Steuergerät (60) vorgesehen ist und dieses elektronische Steuergerät (60) den Elektromotor (12) ansteuert.

38. Kraftfahrzeuggetriebe mit einer Betätigungsvorrichtung (1) gemäß einem der vorangehenden Ansprüche.

39. Kraftfahrzeuggetriebe nach Anspruch 38, **dadurch gekennzeichnet, dass** dieses Kraftfahrzeuggetriebe automatisiert gesteuert wird.

40. Antriebsstrang in einem Kraftfahrzeug mit einer Brennkraftmaschine und einem automatisiert betätigten Schaltgetriebe mit einer Mehrzahl von Gängen und zumindest einer zwischen der Brennkraftmaschine und dem Getriebe wirksamen Reibungskupplung, **dadurch gekennzeichnet, dass** mittels der Betätigungseinrichtung (1) sowohl die Reibungskupplung betätigt als auch die Gänge geschaltet werden.

41. Antriebsstrang nach Anspruch 40, **dadurch gekennzeichnet, dass** das Schaltgetriebe ein Doppelkupplungsgetriebe mit zwei Reibungskupplungen und zwei Getriebeästen mit jeweils mehreren Gängen ist, wobei jeweils eine Betätigungseinrichtung (1) eine Reibungskupplung betätigt und die zu deren Getriebeast gehörigen Gänge schaltet.

42. Verwendung einer Betätigungsvorrichtung (1) gemäß einem der Ansprüche 1 bis 37 zur Steuerung von Gangwechselvorgängen in diesem Kraftfahrzeuggetriebe, und zwar insbesondere als Schalt- bzw. Betätigungseinrichtung (1) eines Kraftfahrzeuggetriebes bzw. einer Reibungskupplung.

43. Verfahren zur automatisierten Steuerung von Gangwechselvorgängen in einem Kraftfahrzeuggetriebe mittels genau eines Elektromotors (12), der eine Ausgangswelle (10) aufweist, mit den Schritten: Antreiben der Ausgangswelle (10) des Elektromotors (12) in einer ersten Drehrichtung (14), um zumindest ein Schaltelement (42, 44) für einen in dem Kraftfahrzeuggetriebe einzulegenden Gang zu wählen; und Antreiben der Ausgangswelle (10) des Elektromotors (12) in einer zweiten, der ersten (14) entgegen gesetzten Drehrichtung (16), um mittels des Antreibens der Ausgangswelle (10) das in der ersten Drehrichtung (14) gewählte Schaltelement (42, 44) zu betätigen und damit den entsprechenden Gang des Kraftfahrzeuggetriebes zu schalten bzw. diesen Gang einzulegen.

44. Verfahren nach Anspruch 43, **dadurch gekennzeichnet, dass** mittels des Antreibens der Antriebswelle (10) in der ersten Drehrichtung (14) eine Stelleinrichtung (28) in eine Stellung gefahren wird, in welcher ein einzulegender Gang gewählt werden kann.

45. Verfahren nach einem der Ansprüche 43 oder 44, **dadurch gekennzeichnet, dass** durch das Antreiben des Elektromotors (12) bzw. der Ausgangswelle (10) in der zweiten Drehrichtung (16) eine Stelleinrichtung (28), wie Platte (30), entlang einer Gewindespindel (20) in einer zweiten Orientierung der Axialrichtung angesteuert und bewegt wird und dann ein Schaltelement (42, 44), wie Schwenkhebel (42, 44), belastet, so dass dieses Schaltelement (42, 44) so bewegt wird, dass ein vorbestimmter Gang in dem Kraftfahrzeuggetriebe eingelegt wird, und dass mittels des Antreibens des Elektromotors (12) bzw. der Ausgangswelle (10) in der ersten, der zweiten (16) entgegen gesetzten, Drehrichtung (14) die Stelleinrichtung (28) entlang der Gewindespindel (20) in einer ersten, der zweiten entgegen gesetzten, Orientierung der Axialrichtung angesteuert und bewegt wird bis diese Stelleinrichtung (28) bzw. eine damit verbundene Spindelmutter (22) einen Anschlag (34) erreicht, der gegebenenfalls an der Gewindespindel (20) angeordnet ist, und durch ein fortgesetztes Antreiben des Elektromotors (12) bzw. der Ausgangswelle (10) in der ersten Drehrichtung (14) nach Erreichen des Anschlags (34) bewirkt wird, dass die Stelleinrichtung (28) im Wesentlichen rein rotatorisch bzw. schwenkend bewegt wird und ein Gang bzw. ein neuer Gang gewählt wird.

46. Verfahren nach Anspruch 45, **dadurch gekennzeichnet, dass** der Elektromotor (12) bzw. die Ausgangswelle (10) nach dem Wählen des Ganges bzw. des neuen Ganges in der zweiten Drehrichtung (16) angetrieben wird, so dass die Stelleinrichtung (28) entlang der Gewindespindel (20) in der zweiten Orientierung der Axialrichtung bewegt wird und dass Einlegen bzw. Schalten des gewählten Ganges in dem Kraftfahrzeuggetriebe bewirkt wird.

47. Verfahren nach einem der Ansprüche 45 oder 46, **dadurch gekennzeichnet, dass** während des Antreibens des Elektromotors (12) bzw. der Ausgangswelle (10) in der zweiten Drehrichtung (16) eine, insbesondere einseitig wirkende, Verdrehsperre oder ein, insbesondere einseitig wirkender, Freilauf (102), insbesondere automatisch, in eine Haltestellung bewegt wird, welche die Stelleinrichtung (28) während der Bewegung in der ersten und/oder zweiten translatorischen Richtung in der Verdrehbarkeit zumindest beschränkt, und zwar zumindest in einer Orientierung der Drehrichtung, und zwar insbesondere beim Schalten bzw. Einlegen eines gewählten Ganges.

48. Verfahren nach einem der Ansprüche 45 bis 47, **dadurch gekennzeichnet, dass** das Schaltelement, wie Schwenkhebel (42, 44), einen vorbestimmten Bereich aufweist, bei deren Belastung das Schalten in einen vorbestimmten Gang ausgelöst wird und dass die Stelleinrichtung (28) mittels des Wählens bzw. mittels des Antreiben des Elektromotors (12) bzw. der Ausgangswelle (10) in der ersten Drehrichtung (14) in einer Drehstellung positioniert wird, die so ist, dass mittels eines sich anschließenden Antreibens des Elektromotors (12) bzw. der Ausgangswelle (10) in der zweiten Drehrichtung (16) die Stelleinrichtung (28) so bewegt wird, dass sie in einen solchen, dem gewählten Gang zugeordneten, Bereich eingreift und das Schalten in diesen Gang bewirkt.

49. Verfahren nach einem der Ansprüche 43 bis 48, **dadurch gekennzeichnet, dass** die Stellung eines bewegten Elements in Wählrichtung und/oder in Schaltrichtung ermittelt wird.

50. Verfahren nach Anspruch 49, **dadurch gekennzeichnet, dass** die Stellung mittels eines inkrementalen Weggebers (38) ermittelt wird und dass wenigstens eine Referenzstellung vorgesehen ist, die zum Abgleich des inkrementalen Weggebers (38) verwendet wird.

51. Verfahren zur automatisierten Steuerung einer Reibungskupplung und eines Getriebes in einem Antriebsstrang eines Kraftfahrzeugs mittels genau eines Elektromotors (12), der eine Ausgangswelle (10) aufweist, mit den Schritten: Antreiben der Ausgangswelle (10) des Elektromotors (12) in einer ersten Drehrichtung (14), um zumindest ein Schaltelement (42, 44) für die Betätigung der Kupplung und einen in dem Getriebe einzulegenden Gang und zu wählen; und Antreiben der Ausgangswelle (10) des Elektromotors (12) in einer zweiten, der ersten (14) entgegen gesetzten Drehrichtung (16), um mittels des Antreibens der Ausgangswelle (10) die in der ersten Drehrichtung (14) gewählten Schaltelemente (42, 44) und damit die Reibungskupplung zu betätigen und den entsprechenden Gang des Getriebes zu schalten bzw. diesen Gang einzulegen.
